# EUROPEAN PATENT SPECIFICATION

(11) **EP 1 599 536 B1**
(45) Date of publication and mention of the grant of the patent: **21.02.2007**
(21) Application number: 04716925.5
(22) Date of filing: 03.03.2004
(51) Int. Cl.: C08K 5/52, C08K 5/3435, C08K 3/32, C08K 5/3492, C08L 67/02, C08L 69/00

(54) **PROCESS FOR THE PREPARATION OF A HINDERED AMINE LIGHT STABILIZER SALT**
VERFAHREN ZUR HERSTELLUNG EINES GEHINDERTEN AMINLICHTSTABILISATORENSALZES
PROCEDE DE PREPARATION D'UN SEL STABILISATEUR LEGER D'AMINE A ENCOMBREMENT

(30) Priority: 05.03.2003 US 452263 P; 20.03.2003 US 392575
(43) Date of publication of application: 30.11.2005
(73) Proprietor: EASTMAN CHEMICAL COMPANY, Kingsport, TN 37660 (US)
(72) Inventor: PEARSON, Jason, Clay, Kingsport, TN 37663 (US); IRICK, Gether, Jr., Gray, TN 37615 (US); KING, Greg, Alan, Mount Carmel, TN 37645 (US); MYKYTKA, John, Peter, Kingsport, TN 37660 (US); WEAVER, Max, Allen, Kingsport, TN 37664 (US)
(74) Representative: Wibbelmann, Jobst
(86) International application number: PCT/US2004/006436
(87) International publication number: WO 2004/078837

(56) References cited:
- EP-A- 0 483 488
- EP-A- 0 675 159
- US-A- 5 441 997
- US-A1- 2002 128 357
- PATENT ABSTRACTS OF JAPAN vol. 016, no. 156 (C-0930), 16 April 1992 (1992-04-16) -& JP 04 011660 A (KYODO YAKUHIN KK), 16 January 1992 (1992-01-16)
- PATENT ABSTRACTS OF JAPAN vol. 1999, no. 02, 26 February 1999 (1999-02-26) -& JP 10 298439 A (SAKAI CHEM IND CO LTD), 10 November 1998 (1998-11-10)
- PATENT ABSTRACTS OF JAPAN vol. 016, no. 261 (C-0950), 12 June 1992 (1992-06-12) -& JP 04 059852 A (KIYOUDOU YAKUHIN KK), 26 February 1992 (1992-02-26)

## Description

### FIELD OF THE INVENTION

This invention relates to the process for the preparation of an amine salt stabilizer that is useful for improving the color and hydrolytic stability of a polymer composition comprising (A) at least one polyester prepared by the reaction of at least one diol with at least one dicarboxylic acid/or dialkyl ester thereof in the presence of a metallic catalyst; and optionally a polycarbonate. The stabilizer is a salt made by reacting an acidic phosphorus containing compound, preferably phosphorous acid, with at least one suitable hindered amine light stabilizer (HALS).

### BACKGROUND OF THE INVENTION

Methods for deactivating metallic catalyst residues in polyester and polyester-polycarbonate compositions are known in the art; however, it is desirable to find improved methods for deactivating such residues. It is also desirable to find methods for deactivating catalyst residues that provide compositions with greater hydrolytic stability, that are less detrimental to process equipment, provide better color, and less batch-to-batch variation in color.

It is known in the art that certain phosphorus-containing compounds are useful for deactivating metallic catalysts residues. Reference is made, for example, to U.S. Patents 3,218,372 (Okamura et al.), 4,532,290 (Jaquiss et al.), 4,088,709 (Seymour et al.), 4,401,804 (Wooten et al.), 5,922816 (Hamilton) and European Patents 0543125 (Van Helmond), 0294862 (Verhoeven), 0295730 (Verhoeven). Examples of such phosphorus-containing compounds include phosphoric acid, certain organic phosphorus containing compounds such as distearylpentaerythritol diphosphite, mono-, di-, and trihydrogen phosphate compounds, or di- and triester phosphate compounds, phosphite compounds, certain inorganic phosphorus containing compounds such as monosodium phosphate, zinc or calcium phosphates, poly(ethylene)hydrogen phosphate, phosphites and phosphates used in combination with elementary sulfur, silyl phosphates, phosphorus containing compounds used in combinations with metal sulphides or metal sulphates. U.S. Patent 4,452,933 (Russell) discloses the use of hydroxy- or amino-substituted carboxylic acids such as methyl salicylate, maleic acid, glycine, or dibutyl tartrate to inactivate metal catalyst residues. U.S. Patent 4,452,932 (Brunelle) discloses the use of dehydroacetic acid and hydroxy-aromatic compounds such as o-hydroxybenzophenone for inactivating metal catalyst residues. It also is known that certain polyols such as mannitol can be used to improve the color of polyester and polycarbonate blends as described in European Patent 0272417 (Nelson).

U.S. Patent 4,619,956 discloses the combination of 2,2,6,6-tetraalkylpiperidine hindered amine light stabilizers (HALS) and/or their addition salts with triazine ultraviolet absorbers for stabilizing thermoset acrylic and alkyd coatings. U.S. Patent 5,714,530 discloses the utility of combining non-polymeric 2,2,6,6,-tetraalkylpiperidine HALS salts and/or their acid addition salts with triazine ultraviolet light absorbers for stabilizing certain polymer compositions. U.S. Patent 6,051,164 discloses the use of a polymer stabilizing system comprising from about 50 to about 5,000 ppm of at least one ortho hydroxyl tris-aryl triazine light absorber and from about 500 ppm to about 1.25 percent of at least one oligomeric, polymeric or high molecular weight HALS having a molecular weight of at least about 500, wherein the weight ratio of HALS to triazine light absorber is from about 3:1 to about 20:1.

Certain of these phosphorus-containing compounds e.g., phosphoric acid, phosphorous acid, and polyphosphoric acid, can react with processing equipment to produce a dark colored polymer and can lead to the formation of black specks or particles. It is believed that the dark color is the due to corrosion of the process equipment. Addition of strong acids to the polymer compositions also reduces the hydrolytic stability as a result of acid catalyzed hydrolysis. Additionally, phosphite antioxidants can be hydrolyzed to acidic species thereby corroding process equipment or reducing the hydrolytic stability of the polymer composition. It is desirable to provide an additive or mixture of additives that can be used to deactivate metal catalyst residues and other metal impurities and thereby improve the color of polyester-polycarbonate compositions, lead to less corrosion of process equipment, and suppress transesterification.

There is a need in the art for an additive or mixture of additives that can be used to: deactivate metal catalyst residues; improve the color and hydrolytic stability of polyesters and/or polyester-polycarbonate compositions; improve the hydrolytic stability of polycarbonates; and reduce corrosion of process equipment.

### SUMMARY OF THE INVENTION

A synthetic process has been discovered for making certain salts of hindered amine light stabilizers (HALS) that are useful stabilizers in polyesters, polycarbonates and blends of polyesters and polycarbonates. The use of these salts results in polymer compositions that exhibit improved hydrolytic stability, that are less detrimental to process equipment, that provide better color, and that provide less batch-to-batch variation in color. The salts useful in the present invention are reaction products of a suitable inorganic acid, such as a phosphorous acid, with a HALS.

This invention relates to a process for the preparation of an addition salt of at least one hindered amine light stabilizer and at least one acidic phosphorus containing compound comprising the step of combining at least one hindered amine light stabilizer and at least one acidic phosphorus containing compound so that the addition salt is formed.

Another aspect of the invention is a process for the preparation of an addition salt of at least one hindered amine light stabilizer and at least one acidic phosphorus containing compound wherein: (Step 1) at least one acidic phosphorous compound (component A) is selected from phosphorous acid, phosphoric acid, and polyphosphoric acid and is dissolved in at least one polar solvent (I) wherein polar solvent (I) is selected from methanol, ethanol, n-propanol, isopropanol, n-butanol and isobutanol; and (Step 2) at least one hindered amine light stabilizer (component B) is dissolved in at least one aromatic hydrocarbon solvent (II) selected from toluene, xylene, and benzene; (Step 3) components (A) and (B) are subsequently mixed to form a homogenous solution of the addition salt; and (Step 4) the homogenous solution of step (3) is subsequently mixed with a nonpolar aliphatic hydrocarbon solvent (III) so that the addition salt of components (A) and (B) precipitates.

Yet another a spect of the invention i s a process for the preparation of an addition salt of at least one hindered amine light stabilizer and at least one acidic phosphorus containing compound wherein the acidic phosphorus containing compound and the hindered amine light stabilizer are mixed, ground, and/or pulverized and subsequently melt blended into a polymer vehicle at a level of up to about 10 weight percent based upon the polymer. The preferred polymers are polyesters and polycarbonates. Polyesters are more preferable.

In yet another aspect of the present invention, a process for the preparation of an addition salt of at least one hindered amine light stabilizer and at least one acidic phosphorus containing compound comprising the following steps:
(Step 1) component (A) is dissolved in a polar solvent (I) and component (B) is dissolved in a non-polar aliphatic hydrocarbon solvent (III) which is immiscible with polar solvent (I); (Step 2) components (A) and (B) are mixed to form a biphasic mixture wherein the addition salt migrates to the polar solvent phase; and (Step 3) feeding the polar phase of step 2 to a vessel containing the nonpolar phase of step 2 and vaporizing polar solvent (I) as the polar phase of step 2 is added to the vessel of step 3 to produce a slurry of the salt in the nonpolar aliphatic hydrocarbon solvent

In yet another aspect of the present invention, a process for the preparation of an addition salt of at least one hindered amine light stabilizer and at least one acidic phosphorus containing compound comprising the following steps:
(Step 1) component (A) and component (B) are mixed in a polar solvent with stirring until a homogeneous solution is obtained;
(Step 2) the solution of step 1 is fed to a spray dryer and the solid product is isolated by spray drying.

### DETAILED DESCRIPTION OF THE INVENTION

The present invention demonstrates the use of an additive that improves the hydrolytic stability of polyesters, polycarbonates, and polyester-polycarbonate blends and provides improved color to polyesters and polyester-polycarbonate blends. The present invention provides a process for the preparation of an addition salt of at least one hindered amine light stabilizer and at least one acidic phosphorus containing compound comprising the step of combining the following:
(A) at least one acidic phosphorus containing compound referred to herein as "Component A" selected from compounds having the formulas: 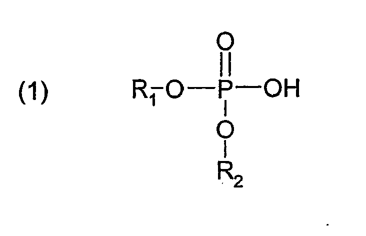 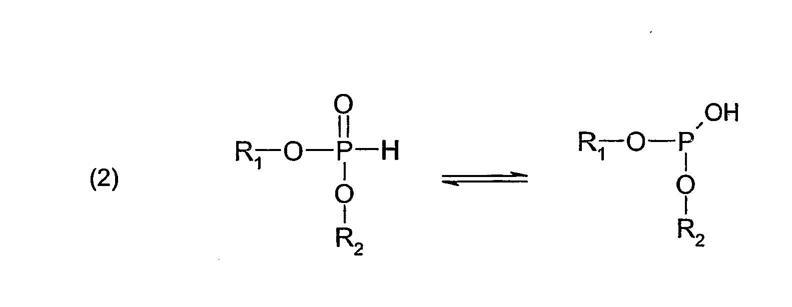 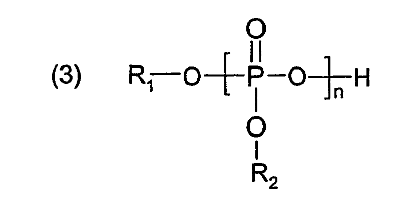 wherein
   R₁ and R₂ are independently selected from hydrogen, C₁-C₂₂-alkyl, substituted C₁-C₂₂-alkyl, C₃-C₈-cycloalkyl, substituted C₃-C₈-cycloalkyl, heteroaryl, and aryl;
   n is 2 to 500; and
(B) at least one hindered amine light stabilizers (HALS), referred to herein as "Component B", selected from compounds having the formulas: 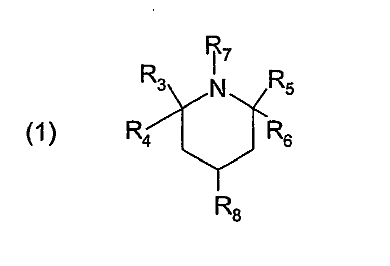 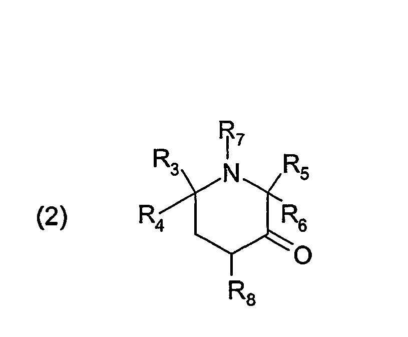 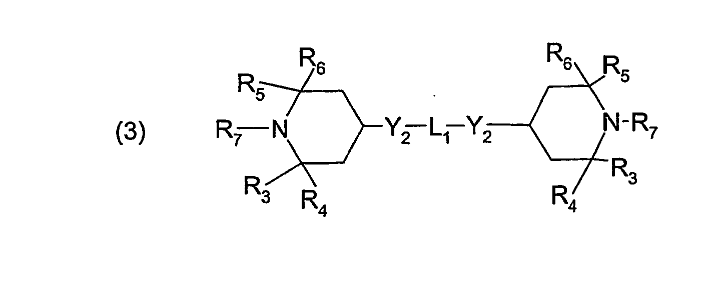 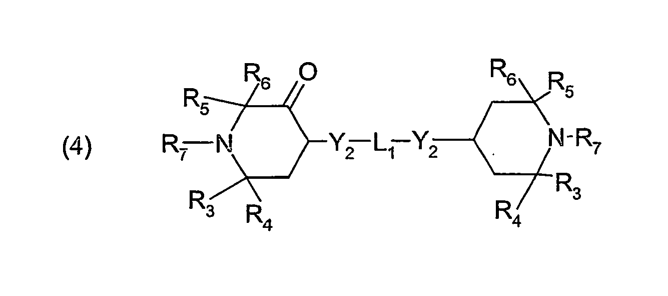 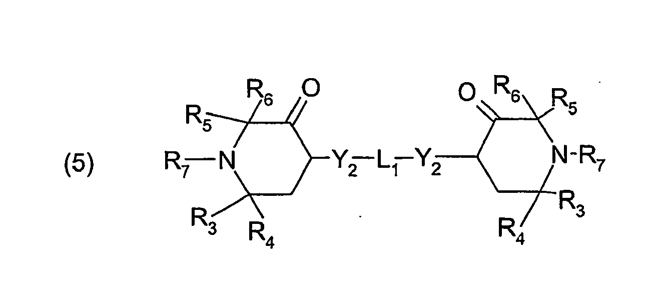 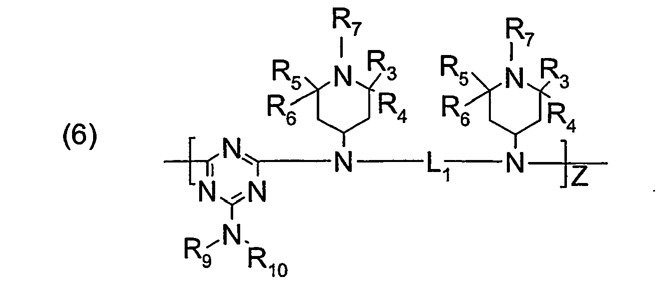 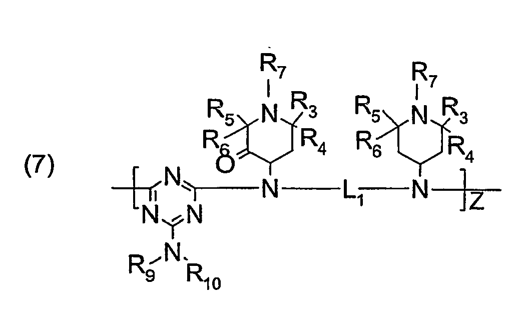 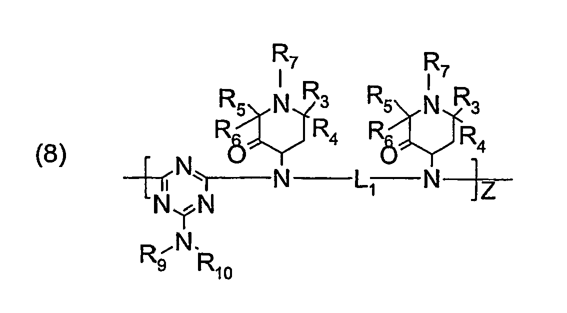 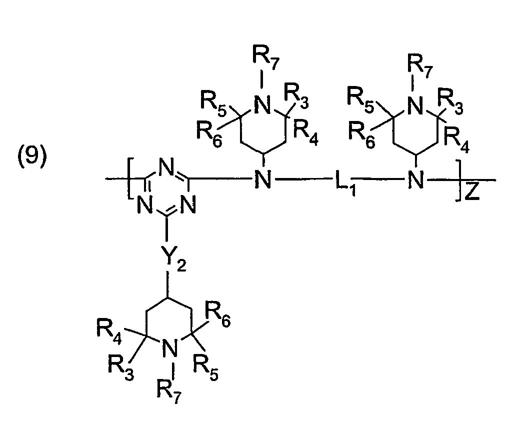 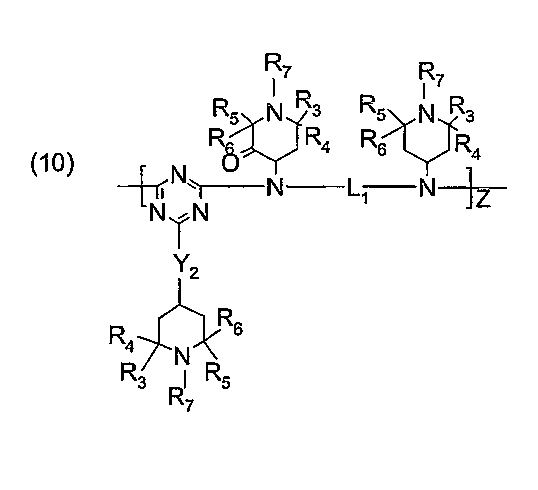 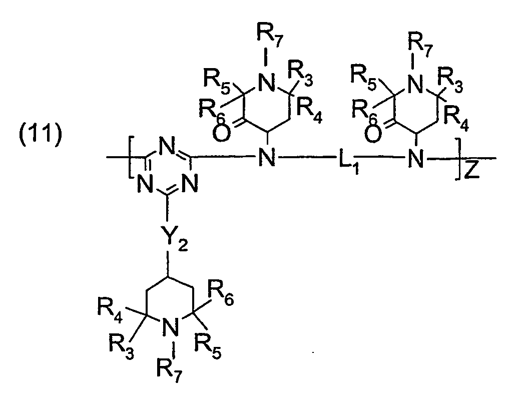 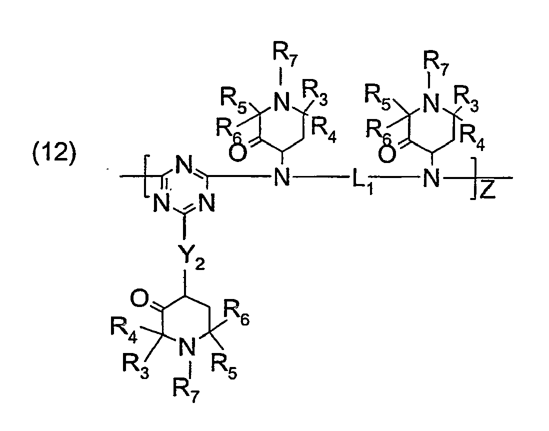 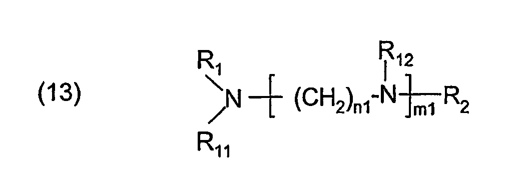 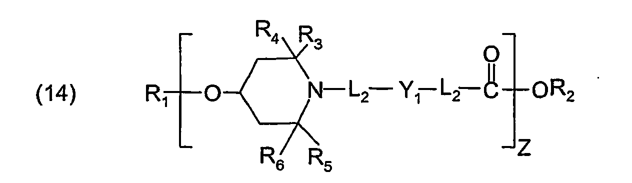 wherein
   R₃, R₄, R₅, and R₆ are independently selected from hydrogen, C₁-C₂₂-alkyl, substituted C₁-C₂₂-alkyl, C₃-C₈-cycloalkyl, substituted C₃-C₈-cycloalkyl, heteroaryl, aryl;
   R₇ is selected from hydrogen, -OR₆, C₁-C₂₂-alkyl, substituted C₁-C₂₂-alkyl, C₃-C₈-cycloalkyl, substituted C₃-C₈-cycloalkyl;
   R₈ is selected from hydrogen; C₁-C₂₂-alkyl, substituted C₁-C₂₂-alkyl, C₃-C₈-cycloalkyl, substituted C₃-C₈-cycloalkyl, heteroaryl, aryl, -OC(O)-R₁, -NHC(O)-R₁, -S-R₁, -N(R₁)-R₁, or a succinimido group having the formula 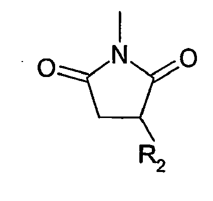
   R₉ and R₁₀ are independently selected from hydrogen, C₁-C₂₂-alkyl, substituted C₁-C₂₂-alkyl, C₃-C₈-cycloalkyl, and substituted C₃-C₈-cycloalkyl; R₉ and R₁₀ may collectively represent a divalent group forming a ring with the nitrogen atom to which they are attached, e.g., morpholino, piperidino and the like;
   L₁ is a divalent linking group selected from -(CH₂CH₂-Y₁)₁₋₃-CH₂CH₂-; C₃-C₈-cycloalkylene; arylene; or -CO-L₂-OC-;
   L₂ is selected from arylene, -(CH₂CH₂-Y₁)₁₋₃-CH₂CH₂- and C₃-C₈-cycloalkylene;
   Y₁ is selected from -OC(O)-, -NHC(O)-, -O-, -S-, -N(R₁)-;
   Y₂ is selected from -O- or -N(R₁)-;
   Z is a positive integer of up to about 20, preferably up to about 6;
   m₁, is selected from 0 to about 10;
   n1 is a positive integer selected from 2 to about 12;
   R₁₁, and R₁₂ are independently selected from hydrogen, C₁-C₂₂-alkyl, substituted C₁-C₂₂-alkyl, C₃-C₈-cycloalkyl, substituted C₃-C₈-cycloalkyl, heteroaryl, aryl, and radical A wherein radical A is selected from the following structures: 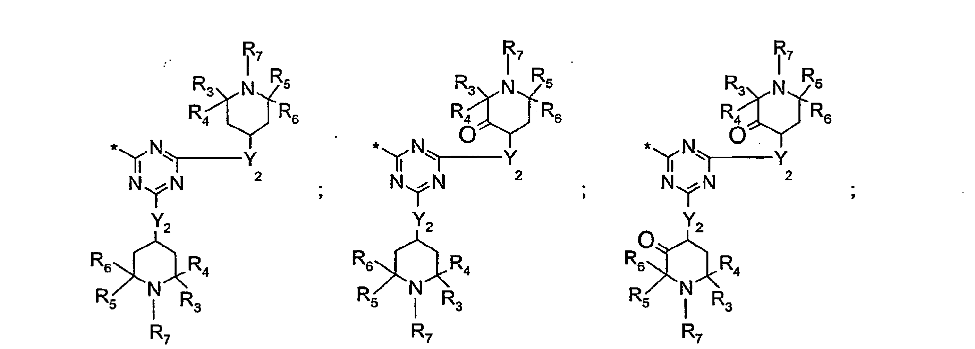
Radical A structures wherein * designates the position of attachment;
wherein at least one of R₁₁ and R₁₂ is an A radical; and wherein the ratio of the number of phosphorus atoms in the acidic phosphorus-containing compound to the number of basic nitrogen atoms in the HALS is about 0.25 to about 2, preferably from about 0.5 to about 1.1.

Wherever an R group, L group, Y group Z group, m group or n group is defined herein, the definition for a particular group remains the same throughout this description regardless of whether it is used for multiple formulas or types of compounds unless otherwise specified.

The reaction of component (A) with component (B) may be accomplished by any means known in the art. Although not intending to be limiting, there are four preferred methods of combining the acidic phosphorus containing compound and the HALS to obtain the addition salt which will be described herein as Method A, Method B, Method C, and Method D.

For all embodiments of this invention, including Method A, Method B, Method C, and Method D as described herein, the ratio of the number of phosphorus atoms in the acidic phosphorus containing compound to the number of basic nitrogen atoms (sp³ hybridized) in the HALS is about 0.25 to about 2, preferably from about 0.5 to about 1.1. Additionally, the most preferred phosphorus containing compound is phosphorous acid.

**Method A -** The first preferred method is to: (Step 1) dissolve at least one acidic phosphorus containing compound (Component A) in a polar solvent (I); (Step 2) dissolve at least one hindered amine light stabilizer (Component B) in an aromatic hydrocarbon solvent (II), and, subsequently, (Step 3) to mix Components (A) and (B) to form a homogenous solution of the addition salt. In Step 4, the homogeneous solution of step 3 is mixed with a nonpolar aliphatic hydrocarbon solvent (III) at a rate such that the addition salt precipitates.

The solvents as mentioned herein, i.e., polar solvent (I), aromatic hydrocarbon solvent (II), and nonpolar aliphatic hydrocarbon solvent (III) are the same throughout this description for all embodiments. As defined herein, the term "polar" means the solvent is comprised of molecules that exhibit properties consistent with a permanent, moderate to high dipole moment and possess a moderate to high dielectric constant. By contrast, a "non-polar" solvent comprises molecules that do not exhibit or have a low dipole moment, and have a low dielectric constant. In the present invention, a solvent exhibiting a dielectric constant of greater than 3 is considered to be polar.

With respect to polar solvent (I), non-limiting examples of polar or moderately polar solvents which are intended to be covered by the current process include, alcohols, diols, esters, nitriles, and mixtures thereof. Preferably, the solvent is an alcohol. Examples of alcohols which may be used as solvents included but are not limited to methanol (ε = dielectric constant @ 298 °K unless otherwise stated to be at a different temperature = 32.6) , ethanol (ε = 24.3), n-propanol (ε = 20.1), isopropanol (ε = 18.3), n-butanol (ε @ 293 °K = 17.8), t-butanol (ε = 10.9 @ 303 °K), isobutanol (ε = 17.7), 2-butanol (ε @ 293 °K = 15.8), n-hexanol (ε = 13.3), octanol (ε @ 293 °K = 10.3), and the various isomers thereof and mixtures thereof. Polar solvents within this invention preferably have dielectric constants greater than 3, more preferably greater than 10, and more preferably greater than 18. More preferably, the solvent is isopropanol, ethanol or methanol. Even more preferably, the preferred solvents are methanol and isopropanol, and most preferably, methanol. It is preferred that the acidic phosphorus containing compound be present in a polar solvent (I) in the amount of 0.1 to 50 weight percent, preferably 25 to 35 weight percent for Methods A and C.

With respect to aromatic hydrocarbon solvents (II), any aromatic hydrocarbon solvent known in the art may be useful. However, non-limiting examples of these solvents are toluene (ε = 2.38), xylenes (ε @ 293 °K = 2.27 - 2.57, depending upon isomer), and benzene (ε @ 293 °K = 2.28), more preferably, toluene. It is preferred for Method A that the HALS be present in aromatic hydrocarbon solvents (II) in the amount of 0.1 to 45 weight percent, preferably 10 to 30 weight percent. It is also preferred in Method A that the HALS be present in the aromatic hydrocarbon solvent (II) in a ratio by weight of HALS to aromatic hydrocarbon solvent of 1:2 to 1:20, preferably 1:2.5 to about 1:10 and all fractions within these ranges.

With respect to the aliphatic nonpolar hydrocarbon solvents (III), any nonpolar aliphatic hydrocarbon solvents known in the art may be useful. However, non-limiting examples are pentane, heptane, hexane, octane, isooctane, cyclobutane, cyclopentane, cyclohexane, and 1,3-dimethylcyclohexane. More preferred solvents of this type are heptane, hexane, and octane, but more preferably, heptane.

It is preferred in Method A that the weight ratio of the polar solvent(s) (I) to the aromatic hydrocarbon solvents (II) be 0.075 to 1 and all fractions within this range.

It is also preferred in Method A that the total weight percentage of the salt formed be 0.1 to 40 weight percent based on the total combined weight of the polar solvent(s) (I), the aromatic hydrocarbon solvent(s) (II) and the nonpolar hydrocarbon solvent (III). It is more preferred in Method A that the total weight percentage of the salt formed be in the range of 5 to 15 weight percent based on the total combined weight of the polar solvent(s) (I), the aromatic hydrocarbon solvent(s) (II) and the nonpolar hydrocarbon solvent (III). All fractions within these ranges are within the scope of the present invention.

Following Step (C) of Method A, it is preferred that the addition salt precipitate be isolated by any means known in the art.

The temperature of the reaction in Method A, Method B and Method C is from 0 °C to 100 °C, preferably from about 20 °C to 65 °C. All temperatures within the specified ranges are within the scope of the present invention.

**Method B -** The second process embodiment relates to a process for reparation of an addition salt of Components A and B comprising the step of mixing, grinding and/or pulverizing, and subsequently melt extruding, Components A and B with a suitable polymer. Any mixing, grinding and/or pulverizing means known in the art may be used, including but not limited to, use of ball mills. Also, any melt extrusion method known in the art may be used. Suitable polymers include but are not limited to polyesters and polycarbonates wherein polyesters are preferred.

**Method C** - The third process embodiment relates to a process for preparation of an addition salt of at least one HALS and at least one acidic phosphorus containing compound comprising the following steps:
(Step 1) component (A) is dissolved in a polar solvent (IV) and component (B) is dissolved in a non-polar aliphatic hydrocarbon solvent (III) which is immiscible with polar solvent (IV); (Step 2) components (A) and (B) are mixed to form a biphasic mixture wherein the addition salt migrates to the polar solvent phase; and (Step 3) feeding the polar phase of step 2 to a vessel containing the nonpolar phase of step 2 and vaporizing polar solvent (IV) as the polar phase of step 2 is added to the vessel of step 3 to produce a slurry of the salt in the nonpolar aliphatic hydrocarbon solvent (III); wherein Components (A) and (B) are the same as for Method A; and polar solvent (IV) as well as nonpolar aliphatic hydrocarbon solvent (III) are the same as for Method A including all preferred embodiments. In Method C, a heterogeneous solution is obtained by mixing two solutions comprising: Component (A), the acidic phosphorus containing compound dissolved in polar solvent (IV); and Component (B), the HALS, dissolved into in a nonpolar aliphatic hydrocarbon solvent (III);
wherein the addition salt migrates into the polar solvent (IV) as two distinct phases form and the nonpolar aliphatic hydrocarbon solvent (III) is transferred to a vessel and agitated wherein the vessel is heated under reduced pressure such that the polar solvent (IV) can be removed by distillation or other evaporation techniques at an approximate addition rate wherein the addition salt is precipitated.

In Method C, it is preferred that the polar solvent phase of step (B) comprises a ratio of polar solvent (IV) to nonpolar aliphatic hydrocarbon solvent (III) of 1:20 to about 2:1. It is preferred that the at least one nonpolar aliphatic hydrocarbon solvent (III) are added so that the total weight percent of the salt in the total solvent mixture of step (C) of Method C is less than 30 weight percent. All fractions within the stated ranges are within the scope of the present invention.

With respect to polar solvent (IV), non-limiting examples of polar or moderately polar solvents which are intended to be covered by the current process include, water, alcohols, diols, esters, nitriles, and mixtures thereof. Preferably, the solvent is an alcohol and water. Examples of alcohols which may be used as solvents included but are not limited to methanol (ε = dielectric constant @ 298 °K unless otherwise stated to be at a different temperature = 32.6) , ethanol (ε = 24.3), n-propanol (ε = 20.1), isopropanol (ε = 18.3), n-butanol (ε @ 293 °K = 17.8), t-butanol (ε = 10.9 @ 303 °K), isobutanol (ε = 17.7), 2-butanol (ε @ 293 °K = 15.8), n-hexanol (ε = 13.3), octanol (ε @ 293 °K = 10.3), and the various isomers thereof and mixtures thereof. Polar solvents within this invention preferably have dielectric constants greater than 3, more preferably greater than 10, and more preferably greater than 18. More preferably, the solvent is isopropanol, ethanol or methanol. Even more preferably, the preferred solvents are methanol and isopropanol, and most preferably, methanol. It is preferred that the acidic phosphorus containing compound be present in a polar solvent (IV) in the amount of 0.1 to 50 weight percent, preferably 25 to 35 weight percent for Methods A and C.

**Method D -** The fourth process embodiment relates to a process for preparation of an addition salt of Components A and B comprising the following steps:
(Step 1) mixing Components A and B in polar solvent (IV) until a homogeneous solution is obtained;
(Step 2) Isolation of the acid addition salt by spray drying.

Examples of preferred solvents to be used in Method D include but are not limited to water, methanol, isopropanol and ethanol.

It is preferred for Method D that the HALS and acidic phosphorus containing compound be present in the polar solvent in the amount of 0.1 to about 40 weight percent, preferably 10 to 30 weight percent and all fractions within these ranges.

It is preferred in Method D that the ratio of the number of phosphorus atoms in the acidic phosphorus containing compound to the number of basic nitrogen atoms in the HALS be from about 0.2 to about 1.1, preferably from about 0.4 to about 1.0 and all fractions within these ranges.

It is preferred for Method D that the acidic phosphorus containing compound is selected from phosphorous acid, phosphoric acid and polyphosphoric acid wherein phosphorous acid is the most preferable.

The term "spray drying" is defined as rapid evaporation, in which a solution is heated so that the dissolved substance falls out of the spray in the solid state. The process of spray drying is well understood by one skilled in the art.

The term "C₁-C₂₂-alkyl" denotes a saturated hydrocarbon radical which contains one to twenty-two carbons and which may be straight or branched-chain. Such C₁-C₂₂ alkyl groups can be methyl, ethyl, propyl, butyl, pentyl, hexyl, heptyl, octyl, isopropyl, isobutyl, tertbutyl, neopentyl, 2-ethylheptyl, 2-ethylhexyl, and the like. The term "substituted C₁-C₂₂-alkyl" refers to C₁-C₂₂-alkyl radicals as described above which may be substituted with one or more substituents selected from hydroxy, halogen, cyano, aryl, heteroaryl, C₃-C₈-cycloalkyl, substituted C₃-C₈-cycloalkyl, C₁-C₆-alkoxy, C₂-C₆ alkanoyloxy and the like.

The term "C₃-C₈-cycloalkyl" is used to denote a cycloaliphatic hydrocarbon radical containing three to eight carbon atoms. The term "substituted C₃-C₈-cycloalkyl" is used to describe a C₃-C₈-cycloalkyl radical as detailed above containing at least one group selected from C₁-C₆-alkyl, C₁-C₆-alkoxy, hydroxy, halogen, and the like.

The term "aryl" is used to denote an aromatic radical containing 6,10 or 14 carbon atoms in the conjugated aromatic ring structure and these radicals substituted with one or more groups selected from C₁-C₆-alkyl; C₁-C₆-alkoxy; phenyl, and phenyl substituted with C₁-C₆-alkyl; C₁-C₆-alkoxy; halogen and the like; C₃-C₈-cycloalkyl; halogen; hydroxy, cyano, trifluoromethyl and the like. Typical aryl groups include phenyl, naphthyl, phenylnaphthyl, anthryl (anthracenyl) and the like. The term "heteroaryl" is used to describe conjugated cyclic radicals containing at least one hetero atom selected from sulfur, oxygen, nitrogen or a combination of these in combination with from two to about ten carbon atoms and these heteroaryl radicals substituted with the groups mentioned above as possible substituents on the aryl radical. Typical heteroaryl radicals include: 2-and 3-furyl, 2- and 3-thienyl, 2- and 3-pyrrolyl, 2-, 3-, and 4-pyridyl, benzothiophen-2-yl; benzothiazol-2-yl, benzoxazol-2-yl, benzimidazol-2-yl, 1, 3, 4-oxadiazol-2-yl, 1, 3, 4-thiadiazol-2-yl, 1,2,4-thiadiazol-5-yl, isothiazol-5-yl, imidazol-2-yl, quinolyl and the like.

The terms "C₁-C₆-alkoxy" and "C₂-C₆-alkanoyloxy" are used to represent the groups -O-C₁-C₆-alkyl and -OCOC₁-C₆-alkyl, respectively, wherein "C₁-C₆-alkyl" denotes a saturated hydrocarbon that contains 1-6 carbon atoms, which may be straight or branched-chain, and which may be further substituted with one or more groups selected from halogen, methoxy, ethoxy, phenyl, hydroxy, acetyloxy and propionyloxy. The term "halogen" is used to represent fluorine, chlorine, bromine, and iodine; however, chlorine and bromine are preferred.

The term "C₂-C₂₂-alkylene" is used to denote a divalent hydrocarbon radical that contains from two to twenty-two carbons and which may be straight or branched chain and which may be substituted with one or more substituents selected from hydroxy, halogen, C₁-C₆-alkoxy, C₂-C₆-alkanolyloxy and aryl. The term "C₃-C₈-cycloalkylene" is used to denote divalent cycloaliphatic radicals containing three to eight carbon atoms and these are optionally substituted with one or more C₁-C₆-alkyl groups. The term "arylene" is used to denote 1,2-, 1,3-, and 1,4-phenylene radicals and these optionally substituted with C₁-C₆- alkyl, C₁-C₆-alkoxy and halogen.

The acidic phosphorus-containing compounds in all embodiments of the invention preferably are phosphorous acid, phosphoric acid and polyphosphoric acid, most preferably phosphorous acid.

Examples of suitable HALS in all embodiments of the invention include:
Cyasorb UV-3346 (Cytec Industries, CAS# 90751-07-8), Cyasorb UV-3529 (Cytec Industries, CAS# 219920-30-6), Cyasorb UV-3641 (Cytec Industries, CAS# 106917-30-0), Cyasorb UV-3581 (Cytec Industries, CAS# 79720-19-7), Cyasorb UV-3853 (Cytec Industries, CAS# 167078-06-0), Cyasorb UV-3853S (Cytec Industries, CAS# 24860-22-8), Tinuvin 622 (Ciba Specialty Chemicals, CAS# 65447-77-0), Tinuvin 770 (Ciba Specialty Chemicals, CAS# 52829-07-9), Tinuvin 144 (Ciba Specialty Chemicals, CAS# 63843-89-0), Tinuvin 123 (Ciba Specialty Chemicals, CAS# 129757-67-1), Chimassorb 944 (Ciba Specialty Chemicals, CAS# 71878-19-8), Chimassorb 119 (Ciba Specialty Chemicals, CAS# 106990-43-6), Chimassorb 2020 (Ciba Specialty Chemicals, CAS# 192268-64-7), Lowilite 76 (Great Lakes Chemical Corp., CAS# 41556-26-7), Lowilite 62 (Great Lakes Chemical Corp., CAS# 65447-77-0), Lowilite 94 (Great Lakes Chemical Corp., CAS# 71878-19-8), Uvasil 299LM (Great Lakes Chemical Corp., CAS# 182635-99-0), and Uvasil 299HM (Great Lakes Chemical Corp., CAS# 182635-99-0), Dastib 1082 (Vocht a.s., CAS# 131290-28-3), Uvinul 4049H (BASF Corp., CAS# 109423-00-9), Uvinul 4050H (BASF Corp., CAS# 124172-53-8), Uvinul 5050H (BASF Corp., CAS# 199237-39-3), Mark LA 57 (Asahi Denka Co., Ltd., CAS# 64022-61-3), Mark LA 52 (Asahi Denka Co., Ltd., CAS# 91788-83-9), Mark LA 62 (Asahi Denka Co., Ltd., CAS# 107119-91-5), Mark LA 67 (Asahi Denka Co., Ltd., CAS# 100631-43-4), Mark LA 63 (Asahi Denka Co., Ltd. Co., Ltd. Co., CAS# 115055-30-6), Mark LA 68 (Asahi Denka Co., Ltd., CAS# 100631-44-5), Hostavin N 20 (Clariant Corp., CAS# 95078-42-5), Hostavin N 24 (Clariant Corp., CAS# 85099-51-1, CAS# 85099-50-9), Hostavin N 30 (Clariant Corp., CAS# 78276-66-1), Diacetam-5 (GTPZAB Gigiena Truda, USSR, CAS# 76505-58-3), Uvasorb-HA 88 (3V Sigma, CAS# 136504-96-6), Goodrite UV-3034 (BF Goodrich Chemical Co., CAS# 71029-16-8), Goodrite UV-3150 (BF Goodrich Chemical Co., CAS# 96204-36-3), Goodrite UV-3159 (BF Goodrich Chemical Co., CAS# 130277-45-1), Sanduvor 3050 (Clariant Corp., CAS# 85099-51-0), Sanduvor PR-31 (Clariant Corp., CAS# 147783-69-5), UV Check AM806 (Ferro Corp., CAS# 154636-12-1), Sumisorb TM-061 (Sumitomo Chemical Company, CAS# 84214-94-8), Sumisorb LS-060 (Sumitomo Chemical Company, CAS# 99473-08-2), Uvasil 299 LM (Great Lakes Chemical Corp., CAS# 164648-93-5), Uvasil 299 HM (Great Lakes Chemical Corp., CAS# 164648-93-5), Nylostab S-EED (Clariant Corp., CAS# 42774-15-2). Additional preferred hindered amine light stabilizers may be listed in the Plastic Additives Handbook 5^{th} Edition (Hanser Gardner Publications, Inc., Cincinnati, OH, USA, 2001).

In all embodiments of the invention, the hindered amine light stabilizers having above formulas (3)-(13) are preferred. Chimassorb 944 (Ciba Specialty Chemicals, CAS# 71878-19-8), Cyasorb UV-3529 (Cytec Industries, CAS# 219920-30-6), Chimassorb 119 (Ciba Specialty Chemicals, CAS# 106990-43-6) and Tinuvin 770 (Ciba Specialty Chemicals, CAS# 52829-07-9) and any equivalents thereof are specific examples of the preferred HALS. The most preferred are high molecular weight HALS wherein the molecular weight is greater than about 1000 such as Cyasorb UV-3529 (Cytec Industries, CAS# 219920-30-6). The most preferred HALS corresponds to formula (6) set forth above wherein R₃ = R₄ = R₅ = R₆ = R₇ = methyl, (R₃)(R₄)N- collectively represent morpholino, L₁ is C₁ to C₆ alkylene, and Z is 1 to 6.

### EXAMPLES

This invention is further illustrated by the following examples of preferred embodiments thereof, although it will be understood that these examples are included merely for purposes of illustration and are not intended to limit the scope of the invention unless otherwise specifically indicated. Unless otherwise indicated, all weight percentages are based on the total weight of the polymer composition and all molecular weights are weight average molecular weights. Also, all percentages are by weight unless otherwise indicated. Wherever an R group, L group, Y group, Z group, m group or n group is defined herein, the definition for a particular group remains the same throughout this description regardless of whether it is used for multiple formulas or types of compounds unless otherwise specified.

Experimental Conditions: All polyester-polycarbonate compositions were made by extruding a 50/50 by weight blend of (1) a polyester comprised of 74 mole percent terephthalic acid residues, 26 mole percent ethylene glycol residues and 100 mole percent 1,4-cyclohexanedimethanol residues having an inherent viscosity of about 0.74 and containing approximately 100 ppmw titanium, (2) a bisphenol A polycarbonate supplied by Bayer as Makrolon 2608 polycarbonate and (3) the additive noted using an 18 mm twin-screw extruder (APV Chemical Machinery Inc., Saginaw, MI 48601) equipped with a medium mixing screw. All zone temperatures were set to 275°C except for Zone 1 that was set at 250°C. The inlet port was cooled by circulating water and the screw speed was set to 200 revolution per minute (rpm). An Accu-Rate (ACCU-RATE Inc. Whitewater, WI) dry material feeder was used to feed the polymers and additives into the extruder at a set addition rate of 3.0. The extruded rods were cooled by passing through a 1.37 meter (4.5 feet) long ice-water bath then chopped using a Berlyn pelletizer (The Berlyn Corp., Worcester, MA) set at a speed of 5-8. All additives were mixed with the polyester and polycarbonate by "bag blending" (shaking the materials together in a bag) unless otherwise stated. The polyester was dried for approximately 24 hours in a vacuum oven (Model 5851, National Appliance Company, Portland, OR) at 70°C at 120 Torr pressure with a slight ingress of dry nitrogen. The polycarbonate was dried for approximately 24 hours in a vacuum oven (Model 5840, National Appliance Company, Portland, OR) at 100°C at 120 Torr with a slight ingress of dry nitrogen. Concentrates were prepared from the blend of polymers and the additives and then dried under the same conditions as the polyester was dried. All of the polymers were stored in a vacuum oven under nitrogen until about 5 minutes prior to use, then "bag blended" and added to the feeder. The first 5 minutes of extrudate was not collected in order to ensure the extruder had been adequately purged. When multiple concentrations of the same mixture of additives were extruded, the lower concentrations of additives always were extruded first. The extruder was purged with at least 300 g of a 1:1 mixture of the polyester/polycarbonate blend before the next additive was evaluated. When water was used as an additive, the water was added to the dried polymer pellets, along with any other additive(s), about 3 hours prior to extruding.

The color of the polymer pellets was determined in a conventional manner using a HunterLab UltraScan Colorimeter manufactured by Hunter Associates Laboratory, Inc., Reston, Virginia. The instrument was operated using HunterLab Universal Software (version 3.8). Calibration and operation of the instrument was according to the HunterLab User Manual and was largely directed by the Universal Software. To reproduce the results on any colorimeter, the instrument should be run according to its instructions using the following testing parameters: D65 Light Source (daylight, 6500°K color temperature), Reflectance Mode, Large Area View, Specular Included, CIE 10° Observer, Outputs are CIE L*, a*, b*. The pellets were placed in a holder that is 25 mm deep by 55 mm wide and high. The holder was black with a window on one side. During testing, the clear side of the holder was held at the reflectance port of the colorimeter as is normally done when testing in reflectance mode. An increase in the positive b* value indicates yellowness, while a decrease in the numerical value of b* indicates a reduction in yellowness. Color measurement and practice are discussed in greater detail in Anni Berger-Schunn in *Practical Color Measurement,* Wiley, NY pages 39-56 and 91-98 (1994).

The molecular weight of the polyester and polycarbonate fractions, in the polyester-polycarbonate compositions, was determined using gel permeation chromatography. The sample was analyzed separately for each component of the blend. Each sample was prepared and analyzed once using the polyester method and then prepared and analyzed using the polycarbonate method.

Polyester Method: Ten mg of sample was added to a 10 mL volumetric flask followed by 20 microliters of toluene (as a flow marker) then diluted to a volume of 10 mL with an azeotrope of methylene chloride and hexafluoroisopropanol. A stir bar was added and the mixture was stirred on a stir plate until completely dissolved. The sample was analyzed using a Perkin-Elmer series 200 LC binary pump at a flow rate of 1.0 mL/minute., with a Perkin-Elmer ISS 200 Autosampler using a 10 microliter injection loop. The detector was a Perkin-Elmer LC-95 UV/Vis detector set at 285 nm. The columns are Plgel 5 micron guard and a Mixed C from Polymer Laboratories. The polystyrene calibration consists of 15 narrow molecular weight polystyrene standards from Polymer Laboratories ranging from 162 to 3,220,000. The universal calibration parameters were: PS, K = 0.1278, a = 0.7089; PCT K = 0.2357, a = 0.8405. The universal calibration parameters were determined by linear regression to yield the correct weight average molecular weight for a set of five PCT samples previously characterized by light scattering.

Polycarbonate Method: The sample was pressed until it turned white to increase the surface area and then allowed to soak in tetrahydrofuran (THF) solvent to leach out the polycarbonate from the sample. Ten mg of sample was added to a 10 mL volumetric flask followed by 20 microliters of toluene (as a flow marker) then diluted to a volume of 10 mL with unstabilized THF. A stir bar was added and the mixture was stirred on a stir plate overnight. The sample was analyzed using a Perkin-Elmer LC 250 binary pump at a flow rate of 1.0 mL/min., with a Perkin-Elmer LC 600 Autosampler using a 20 microliter injection loop. The detector was a Perkin-Elmer LC-235 photodiode array detector set at 265 nm. The columns were Plgel 5 micron guard, a Mixed C from Polymer Laboratories and an Oligopore column from Polymer Laboratories. The polystyrene calibration consisted of 15 narrow molecular weight polystyrene standards from Polymer Laboratories ranging from 162 to 3,220,000. The universal calibration parameters were: PS, K = 14.000, a = 0.7000; PC K = 39.900, a = 0.7000. The universal calibration parameters for polycarbonate in THF were obtained from the literature.

### EXAMPLES 1-12 Illustrate Salt Synthesis by Mechanical Mixing or Pulverization (Method B of the Invention)

Chimassorb 944 hindered amine light stabilizer and phosphorous acid of Examples 1-12 of Table I were ground together using a mortar and pestle until a fine powder was obtained. Varying amounts of the resulting amine-phoshporous acid salt were blended with the polymers consisting of 350 g polyester and 350 g polycarbonate as described above. Chimassorb 944 is believed to be a polymeric, hindered amine conforming generally to amine formula (6) set forth above wherein R₃ = R₄ = R₅ = R₆ = methyl; R₇ is hydrogen; L₁ is hexamethylene; R₉ is hydrogen; and R₁₀ is a branched octyl group. Table I shows the b* value as measured on pellets extruded from the 50/50 by weight blend of polyester and polycarbonate containing various concentrations of Chimassorb 944, phosphorous acid, and water. Salts made from Chimassorb 944 and phosphorous acid may have varying ratios of phosphorous acid to Chimassorb 944 to improve the catalyst deactivation ability and improve the color of polyester-polycarbonate compositions. In Table I the amounts of Chimassorb 944 and phosphorous acid are given in grams and the amount of water is given in milligrams.

**TABLE I**

| Example | Chimassorb 944 | Phosphorus Acid | Water | b* | Polycarbonate MW |
|---|---|---|---|---|---|
| C-1 | 0.7 | - | - | 22.37 | 13,347 |
| 1 | 0.7 | 0.096 | - | 10.42 | 12,236 |
| 2 | 0.7 | 0.192 | - | 5.11 | 19,026 |
| 3 | 0.7 | 0.288 | - | 3.69 | 21,648 |
| 4 | 0.7 | 0.383 | - | 3.29 | 19,747 |
| C-2 | 3.5 | - | - | 22.43 | 16,643 |
| 5 | 3.5 | 0.479 | - | 3.62 | 15,776 |
| 6 | 3.5 | 0.958 | - | 3.39 | 15,623 |
| 7 | 3.5 | 1.438 | - | 3.0 | 15,800 |
| 8 | 3.5 | 1.916 | - | 2.96 | 16,611 |
| 9 | 0.7 | 0.096 | 21 | 5.24 | 21,879 |
| 10 | 3.5 | 0.192 | 42 | 2.31 | 20,001 |
| 11 | 0.7 | 0.288 | 63 | 2.0 | 19,466 |
| 12 | 0.7 | 0.383 | 84 | 1.87 | 19,795 |

As is shown by the data in Table I, high concentrations of Chimassorb 944 and phosphorous acid salt (Examples 5-8) significantly reduce the b* color but had a negative effect on the polycarbonate molecular weight (MW). Lesser amount of salt (Examples 1-4) allowed for an equivalent reduction in b* color without having a significant impact on the polycarbonate molecular weight. The addition of a small amount of water (Examples 9-12) greatly reduced the b* color with only a slight negative effect on polycarbonate molecular weight relative to the examples with equivalent amounts of salt. A salt comprising about 0.02 to 0.3 weight percent phosphorous acid and 0.05 to about 0.5 weight percent Chimassorb 944 provided a suitable reduction in the pellet b* color without significantly reducing the polycarbonate molecular weight. Addition of low levels of water (Examples 9-12), from about 30 ppm to about 300 ppm, provided a further reduction in pellet b* color without having a significant impact on the polycarbonate molecular weight. Maintenance of the polycarbonate molecular weight (Mw) demonstrates that catalyst residues have been sufficiently deactivated. Comparative Examples C-1 and C-2 show that Chimassorb 944 is not effective for either reducing pellet b* value or deactivating catalyst residues, as can be seen by the loss of polycarbonate molecular weight (Mw) and large pellet b* color values.

### EXAMPLE 13 to Illustrate Method A of the Present Invention: Preparation of Salt 1-(Method A of the invention)

To a clean, dry, 5-L, round-bottomed flask equipped with a mechanical stir bar, thermocouple, and a heating mantle was added 411.76 g of Cyasorb UV-3529 and 945 g of toluene. Cyasorb UV-3529 is a polymeric hindered amine light stabilizer believed to conform generally to the compounds of amine formula (6) set forth above R₃ = R₄ = R₅ = R₆ = R₇ = methyl; L₁ is hexamethylene; and (R₉)(R₁₀)N- collectively represent a morpholino group. The slurry was heated to 60°C and stirred until a homogeneous solution was obtained. Isopropyl alcohol (370 g) was added to the reaction vessel. A solution of 115.46 g (1.41 mol) of phosphorous acid dissolved into 370 g of isopropyl alcohol was added slowly over approximately 1 hour. A homogeneous solution was obtained. The reaction mixture was pumped into an 18 L reaction vessel that contained rapidly stirred heptane (6840 g) over a period of approximately 1 hour. The resulting slurry was stirred for 30 minutes. The precipitate was collected by suction filtration. The filter cake was washed twice with 137 g of heptane then sucked dry on the filter paper overnight. The solid was placed in a 30.5 cm x 15.2 x 5.1 (12 inch x 6 inch x 2 inch) metal pan and dried in a vacuum oven at 50-60°C with a slight ingress of dry nitrogen until a constant mass was obtained. The dry product (Salt 1) weighed approximately 525 g (100% of theory).

The feed rate of the reaction mixture into the heptane drowning vessel has some affect on the particle size of the final product. Slow feeds tend to produce a finer powder while higher feed rates will results in a larger particle that almost appears to be agglomerated. This needs to be balanced by the tendency for the salt to get sticky in the drowning vessel if the feed rate is too rapid. Typical bulk density of the dry salt has been between 0.4 and 0.6 g/ml.

The salt of Cyasorb UV-3529 and phosphorous acid (0.5013, 0.1 weight percent) thus prepared was incorporated into a polymer blend consisting of 249.5 g of each of polyester and polycarbonate. The polymer was converted to pellets as described above and the pellets were compared to pellets prepared from a polymer blend consisting of 250 g of each of polyester and polycarbonate but no salt, Cyasorb UV-3529 or phosphorous acid. The results of the evaluation are shown in Table V.

**TAB LE V**

| Example | L* | a* | b* |
|---|---|---|---|
| C-9 | 56.38 | 8.17 | 18.76 |
| 13 | 69.65 | -0.35 | 3.12 |

### EXAMPLE 14 to Illustrate the Third Embodiment of the Present Invention:

### Preparation of Salt 1 - (Method C of the invention)

To a 500 ml RB flask equipped with an agitator, thermometer, and condenser was charged 200 ml of heptane. Cyasorb UV-3529 (82 g, 0.14 mole) was added and warmed to 40-50°C to effect solution. Cyasorb UV-3529 is a polymeric hindered amine light stabilizer believed to conform generally to the compounds of amine formula (6) set forth above R₃ = R₄ = R₅ = R₆ = R₇ = methyl; L₁ is hexamethylene; and (R₉)(R₁₀)N- collectively represent a morpholino group. Methanol, 50 ml, was added and the temperature was adjusted to 40°C. A slightly cloudy solution resulted.

A solution of solid phosphorous acid (23 g, 0.28 mole) and methanol, 50 ml, was made. The solution was endothermic and a slight amount of heat was applied to aid in dissolving.

The phosphorous acid/methanol solution was added to the reaction vessel (exothermic reaction) with agitation and a small amount of cooling to maintain the temperature at 40-50°C over 15 minutes. A separated layer appears fairly quickly and after all of the acid solution was added, two distinct layers were present. The temperature of the flask was adjusted to 55°C (reflux will commence at about 57°C) and held for about an hour in insure complete reaction and uniform salt formation. Agitation was stopped and the two layers were allowed to separate. The temperature was held at 45-50°C. A slight amount of white solid appeared to be suspended in the upper heptane layer but eventually settled at the interface. The salt was dissolved in the lower methanol layer.

A second 500 ml flask was equipped with thermometer, agitator, feed pump, distillation column, liquid/vapor separator configured to return the liquid reflux to the flask, cooled Dean Stark trap and receiver, and condenser. The flask was charged with heptane, 250 ml. The pressure was reduced to 290-300 mm of Hg and the temperature was raised to affect reflux, 60-62°C, both pot and vapor temperature.

The bottom layer from the first reactor flask was pumped to the refluxing heptane at about 1-2 ml/min. The salt precipitated almost immediately and methanol appeared in the Dean Stark trap and separates as the lower layer. The vapor temperature dropped 5-10°C depending on the feed rate and amount of column packing used. The feed rate was adjusted to balance the rate of methanol being taken off. If the feed rate exceeds the rate of methanol take off, the salt may stick together. As long as most of the methanol was removed as it was being fed, the salt remained as a discrete solid that was easily maintained as a slurry. If stickiness is observed the feed can be stopped and the system will purge the excess methanol from the pot and discrete salt may be formed. The methanol/heptane azeotrope boiling point is 59°C at atmospheric pressure and is 52% methanol. At 406 mm the boiling point is 44°C and about the same composition.

The feed nozzle for the methanol/salt solution was best located above the liquid, away from the sides of the flask. If the solution was allowed to drip on the cooler walls of the flask it tended to stick and become a solid mass. The reflux return from the condenser and Dean Stark trap should be returned to the flask so that the solution does not run down the sides of the flask for the same reason. Cool spots in the flask may promote sticking of the salt as a solid mass. The reflux could be returned subsurface. Once all the salt solution was fed, reflux was maintained until no more methanol was collected. Heptane, 25ml, was then allowed to be distilled and collected to insure there was little residual methanol or water left with the salt.

Heat was removed and the flask was allowed to cooled to ambient temperature, 15-20°C. The slurry was filtered on a Buchner funnel. The mother liquor may be used to wash the solids from the flask. A small amount of heptane, 50 ml, can be used for the final flask rinse but was not necessary for product quality. The cake was pulled under vacuum until no more filtrate appears. Additional time on the funnel will start to dry the cake and tend to make the cake dusty. Typical volatiles of the wet cake are about 5-15%.

The cake was oven dried overnight at either ambient or 65°C at approximately 100 torr with a nitrogen sweep. The salt, 107g (105g theoretical) was isolated as a white solid.

The feed rate of the methanol/salt solution had an affect the particle size of the final product. Slow feeds tended to produce a finer powder while higher feed rates resulted in a larger particle that almost appears to be agglomerated. The feed rates need to be balanced by the tendency for the salt to get sticky in the heptane. Typical bulk density of the dry salt was between 0.4 and 0.6 g/ml.

The heptane remaining in the reactor flask can be used for the preparation of the next batch. (Evaporation of the heptane has shown virtually no solids present.)

The methanol from the azeotropic distillation contains about 10% heptane and can be used directly in the preparation of the next batch, if desired. The mother liquor and any washes from the filtration can be used in the distillation unit of the next batch without further purification. (Evaporation of heptane has shown virtually no solids to be present.) The salts prepared by the process of the third embodiment of the present invention had identical performance as salts prepared by other methods.

The invention has been described in detail with particular reference to preferred embodiments thereof, but it will be understood that variations and modifications can be effected within the spirit and scope of the invention.

## Claims

1. A process for the preparation of an addition salt of at least one hindered amine light stabilizer and at least one acidic phosphorus containing compound comprising the step of combining the following:
(A) at least one acidic phosphorus containing compound selected from compounds having the formulae: 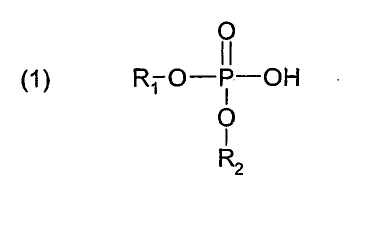 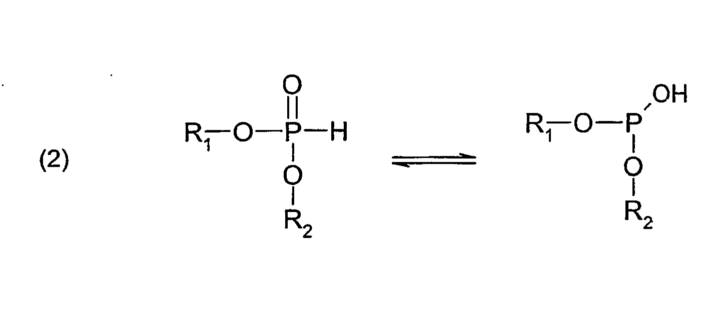 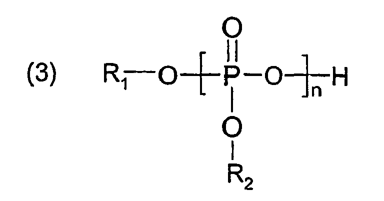 wherein
R₁ and R₂ are independently selected from hydrogen, C₁-C₂₂-alkyl, substituted C₁-C₂₂-alkyl, C₃-C₈-cycloalkyl, substituted C₃-C₈-cycloalkyl, heteroaryl, and aryl;
n is 2 to 500; and
(B) at least one hindered amine light stabilizer selected from compounds having the formulae: 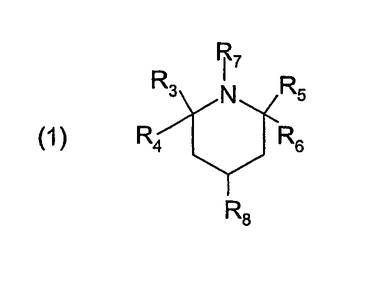 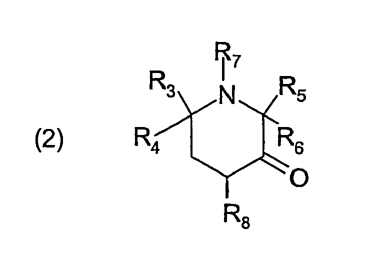 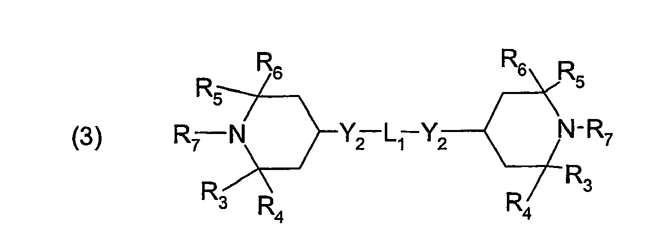 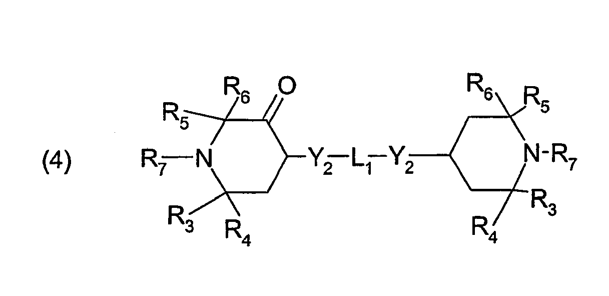 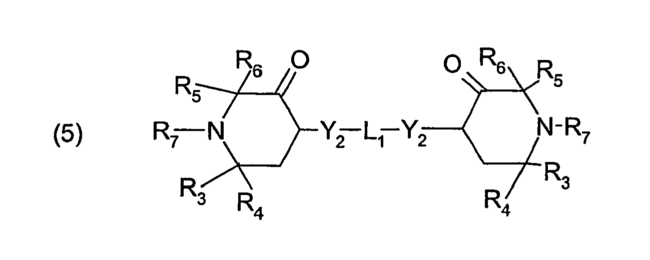 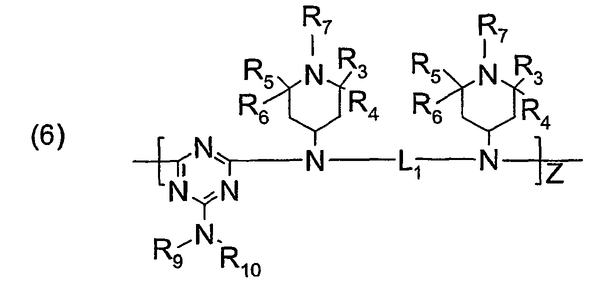 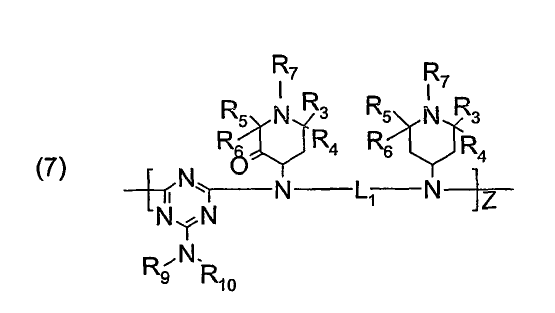 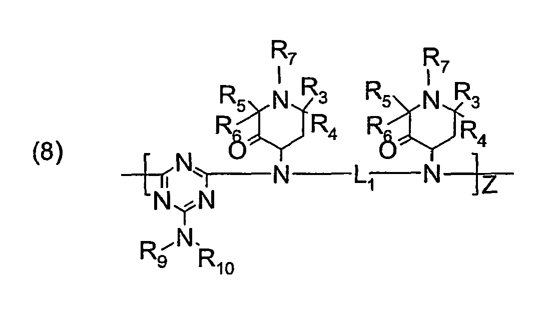 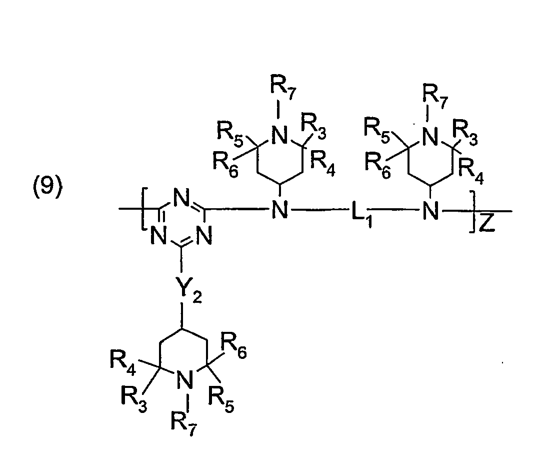 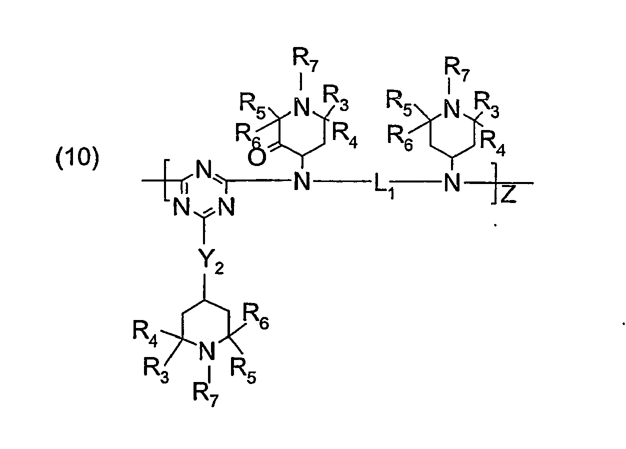 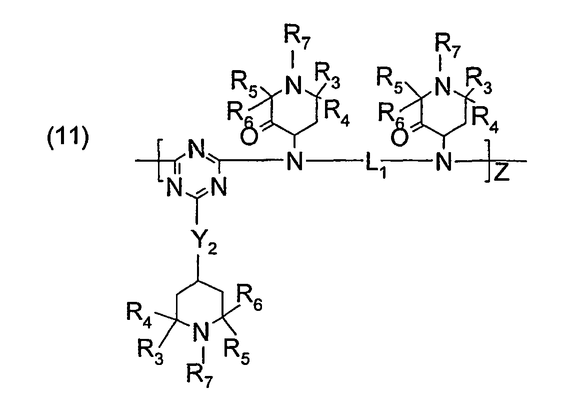 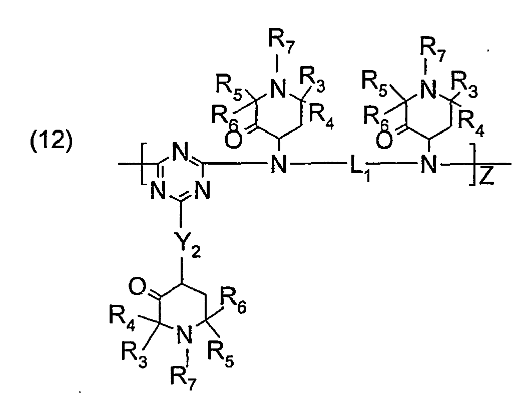 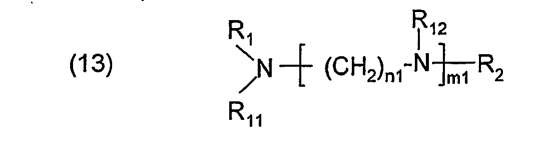 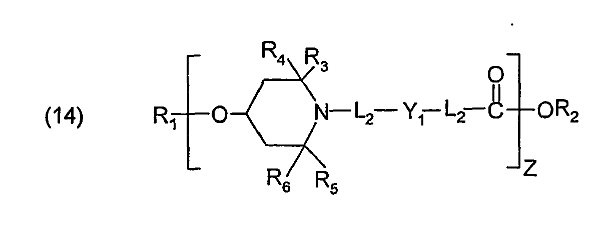
wherein
R₃, R₄, R₅, and R₆ are independently selected from hydrogen, C₁-C₂₂-alkyl, substituted C₁-C₂₂-alkyl, C₃-C₈-cycloalkyl, substituted C₃-C₈-cycloalkyl, heteroaryl, aryl;
R₇ is selected from hydrogen, -OR₆, C₁-C₂₂-alkyl, substituted C₁-C₂₂-alkyl, C₃-C₈-cycloalkyl, substituted C₃-C₈-cycloalkyl;
R₈ is selected from hydrogen; C₁-C₂₂-alkyl, substituted C₁-C₂₂-alkyl, C₃-C₈-cycloalkyl, substituted C₃-C₈-cycloalkyl, heteroaryl, aryl, -OC(O)-R₁, -NHC(O)-R₁, -S-R₁, -N(R₁)-R₁, or a succinimido group having the formula 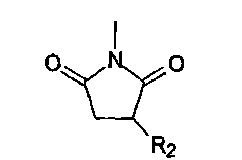
R₉ and R₁₀ are independently selected from hydrogen, C₁-C₂₂-alkyl, substituted C₁-C₂₂-alkyl, C₃-C₈-cycloalkyl, and substituted C₃-C₈-cycloalkyl; R₉ and R₁₀ may collectively represent a divalent group forming a ring with the nitrogen atom to which they are attached;
L₁ is a divalent linking group selected from -(CH₂CH₂-Y₁)₁₋₃-CH₂CH₂-; C₃-C₈-cycloalkylene; arylene; or -CO-L₂-OC-;
L₂ is selected from arylene, -(CH₂CH₂-Y₁)₁₋₃-CH₂CH₂- and C₃-C₈-cycloalkylene;
Y₁ is selected from -OC(O)-, -NHC(O)-, -O-, -S-, -N(R₁)-;
Y₂ is selected from -O- or -N(R₁)-;
Z is a positive integer of up to 20;
m₁, is selected from 0 to 10;
n₁ is a positive integer selected from 2 to 12;
R₁₁, and R₁₂ are independently selected from hydrogen, C₁-C₂₂-alkyl, substituted C₁-C₂₂-alkyl, C₃-C₈-cycloalkyl, substituted C₃-C₈-cycloalkyl, heteroaryl, aryl, and radical A wherein radical A is selected from the following structures: 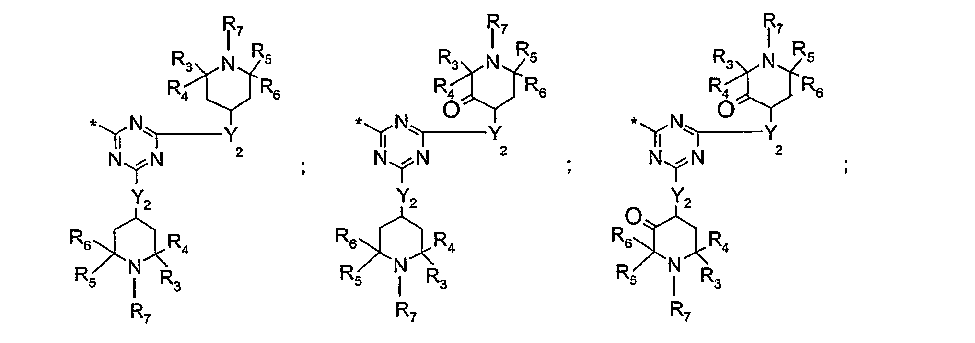
Radical A structures wherein * designates the position of attachment
wherein at least one of R₁₁ and R₁₂ is also a radical A; and wherein the ratio of the number of phosphorus atoms in the acidic phosphorus-containing compound to the number of basic nitrogen atoms in the HALS is 0.25 to 2; wherein the addition salt of components (A) and (B) is formed.

2. The process of Claim 1 wherein the ratio of the number of phosphorus atoms in the acidic phosphorus containing compound to the number of basic nitrogen atoms in the hindered amine light stabilizer is 0.25 to 2.

3. The process of Claim 2 wherein the ratio of the number of phosphorus atoms in the acidic phosphorus containing compound to the number of basic nitrogen atoms in the hindered amine light stabilizer is 0.50 to 1.1.

4. The process of claim 1 comprising the following steps:
(1) at least one acidic phosphorus containing compound (Component A) is dissolved in a polar solvent (I);
(2) at least one hindered amine light stabilizer of (Component B) is separately dissolved in an aromatic hydrocarbon solvent (II); and, subsequently,
(3) Components (A) and (B) are mixed to form a homogenous solution of the addition salt.

5. The process of Claim 4 additionally comprising step 4 where the homogeneous solution of step 3 is subsequently then mixed with an aliphatic nonpolar solvent (III) so that the addition salt precipitates.

6. The process of Claim 4 wherein the polar solvent (I) is one or more polar organic solvents having a dielectric constant of greater than 3.0 at 298 °K.

7. The process of Claim 6 wherein said polar solvents (I) are selected from one or more of the group consisting of methanol, ethanol, n-propanol, isopropanol, n-butanol, t-butanol, isobutanol, 2-butanol, n-hexanol, and octanol.

8. The process of Claim 7 wherein said polar solvents (I) is selected from methanol and isopropanol.

9. The process of Claim 4 wherein the acidic phosphorus containing compound is present in the polar solvent (I) in the amount of 0.1 to 50 weight percent.

10. The process of Claim 9 wherein the acidic phosphorus containing compound is present in the polar solvent (I) in the amount of 25 to 35 weight percent.

11. The process of Claim 4 wherein the aromatic hydrocarbon solvent (II) is selected from the group consisting of toluene, xylene, and benzene.

12. The process of Claim 5 wherein the aliphatic nonpolar solvent (III) is selected from the group consisting of pentane, heptane, hexane, octane, isooctane, carbon tetrachloride, chloroform, methylene chloride, cyclobutane, cyclopentane, cyclohexane, and 1,3-dimethyl cyclohexane.

13. The process of Claim 12 wherein the aliphatic nonpolar solvent (III) is selected from heptane, hexane, and octane.

14. The process of Claim 13 wherein the aliphatic nonpolar solvent I(III) is heptane.

15. The process of Claim 4 wherein the hindered amine light stabilizer is present in the aromatic hydrocarbon solvent (II) in the amount of 0.1 to 45 weight percent.

16. The process of Claim 15 wherein the hindered amine light stabilizer is present in the aromatic hydrocarbon solvent (II) in the amount of 10 to 30 weight percent.

17. The process of Claim 4 wherein the aromatic hydrocarbon solvent (II) is combined with the hindered amine light stabilizer in a ratio by weight of hindered amine light stabilizer to aromatic hydrocarbon solvent of 1:5 to 1:20

18. The process of Claim 4 wherein the weight ratio of the polar solvent(s) (I) to the aromatic hydrocarbon solvent(s) (II) is 0.075 to 1.

19. The process of Claim 4 wherein the total weight percentage of the salt formed is 0.1 to 30 weight percent based on the total combined weight of the polar solvent(s) (I) and the aromatic hydrocarbon solvent(s) (II).

20. The process of Claim 5 wherein at least one aliphatic non-polar solvents (III) are added to that the total weight percent of salt in the solvent mixture is less than 15 weight percent based on the total weight of the composition.

21. The process of Claim 5 further comprising the step of isolating the addition salt precipitate.

22. A process for the preparation of an addition salt of at least one hindered amine light stabilizer and at least one acidic phosphorus containing compound comprising the following steps:
(1) the acidic phosphorus containing compound is phosphorous acid which is dissolved in at least one polar solvent (I) wherein the polar solvent(s) (I) is selected from methanol, ethanol, n-propanol, isopropanol, n-butanol, t-butanol, isobutanol, 2-butanol, n-hexanol, and octanol;
(2) at least one hindered amine light stabilizer which is dissolved in at least one aromatic hydrocarbon solvent (II) wherein the at least one hindered amine light stabilizer is selected compounds having the formulae: 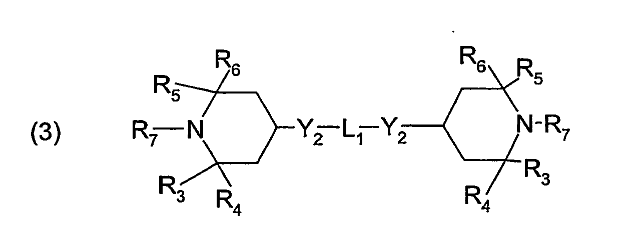 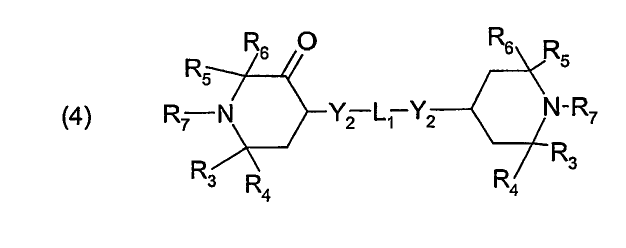 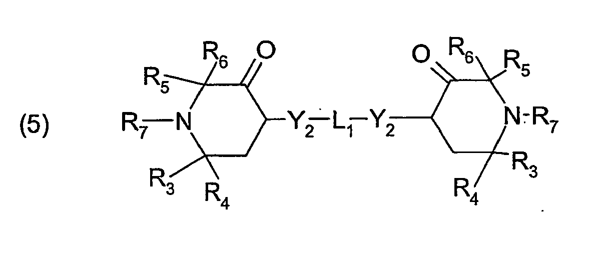 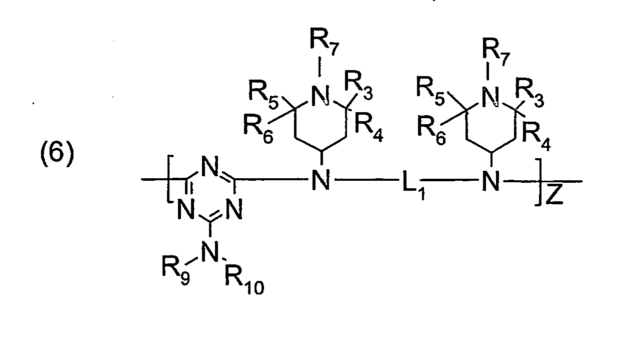 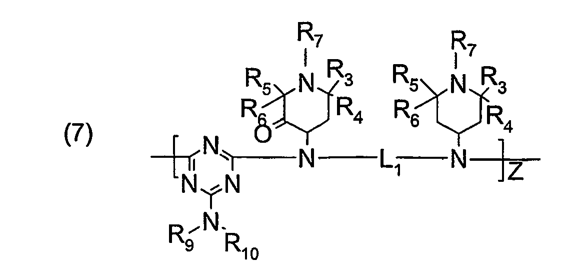 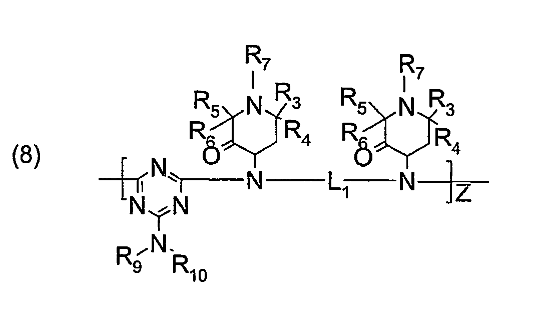 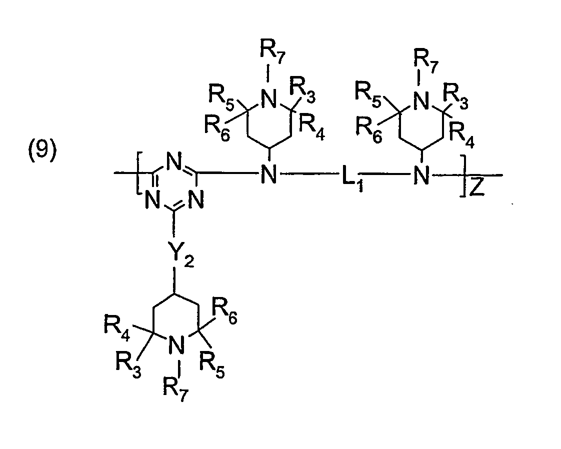 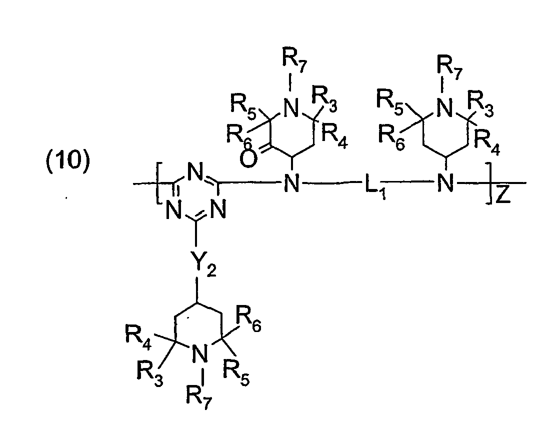 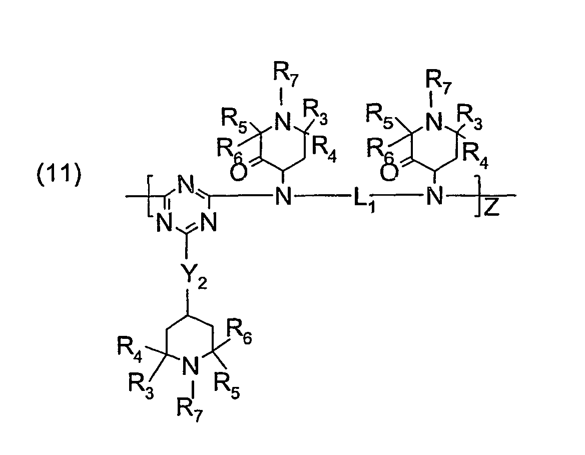 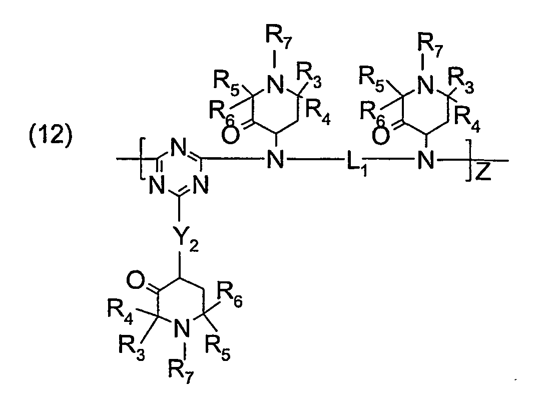 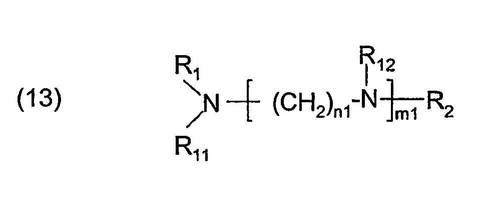 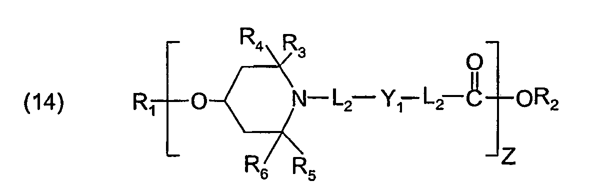 wherein
R₁ and R₂ are independently selected from hydrogen, C₁-C₂₂-alkyl, substituted C₁-C₂₂-alkyl, C₃-C₈-cycloalkyl, substituted C₃-C₈-cycloalkyl, heteroaryl, and aryl;
R₃, R₄, R₅, and R₆ are independently selected from hydrogen, C₁-C₂₂-alkyl, substituted C₁-C₂₂-alkyl, C₃-C₈-cycloalkyl, substituted C₃-C₈-cycloalkyl, heteroaryl, aryl;
R₇ is selected from hydrogen, -OR₆, C₁-C₂₂-alkyl, substituted C₁-C₂₂-alkyl, C₃-C₈-cycloalkyl, substituted C₃-C₈-cycloalkyl;
R₈ is selected from hydrogen; C₁-C₂₂-alkyl, substituted C₁-C₂₂-alkyl, C₃-C₈-cycloalkyl, substituted C₃-C₈-cycloalkyl, heteroaryl, aryl, -Y₁-R₁ or a succinimido group having the formula 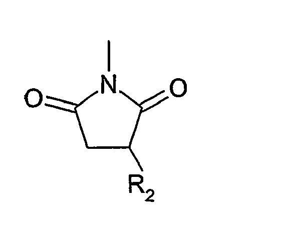
R₉ and R₁₀ are independently selected from hydrogen, C₁-C₂₂-alkyl, substituted C₁-C₂₂-alkyl, C₃-C₈-cycloalkyl, and substituted C₃-C₈-cycloalkyl; R₉ and R₁₀ may collectively represent a divalent group forming a ring with the nitrogen atom to which they are attached;
L₁ is a divalent linking group selected from C₂-C₂₂-alkylene; -(CH₂CH₂-Y₁)₁₋₃-CH₂CH₂-; C₃-C₈-cycloalkylene; arylene; or -CO-L₂-OC-;
L₂ is selected from C₁-C₂₂-alkylene, arylene, -(CH₂CH₂-Y₁)₁₋₃-CH₂CH₂- and C₃-C₈-cycloalkylene;
Y₁ is selected from -OC(O)-, -NHC(O)-, -O-, -S-, -N(R₁)-;
Y₂ is selected from -O- or -N(R₁)-;
Z is a positive integer of up to 20;
m₁, is selected from 0 to 10;
n1 is a positive integer selected from 2 to 12;
R₁₁, and R₁₂ are independently selected from hydrogen, C₁-C₂₂-alkyl, substituted C₁-C₂₂-alkyl, C₃-C₈-cycloalkyl, substituted C₃-C₈-cycloalkyl, heteroaryl, aryl, and radical A wherein radical A is selected from the following structures: 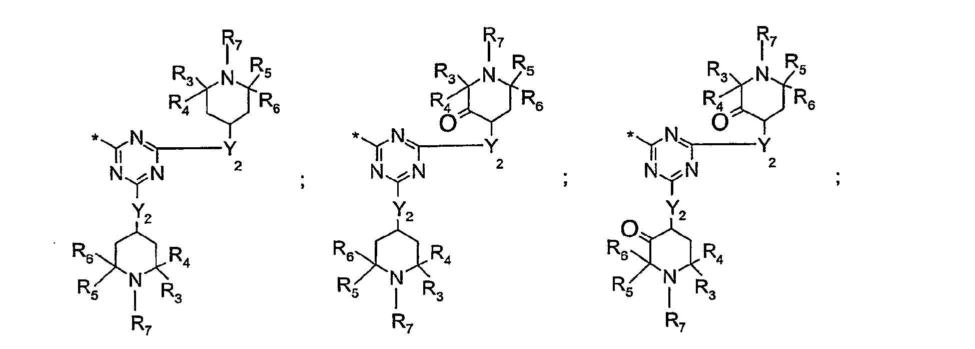 Radical A structures wherein * designates the position of attachment.
wherein at least one of R₁₁ and R₁₂ is an A radical; wherein the addition salt of components (A) and (B) is formed;
and wherein the at least one aromatic hydrocarbon solvent (II) is selected from toluene, xylene and benzene;
(3) components (A) and (B) are subsequently mixed to form a homogenous solution of the addition salt.; and
(4) the homogeneous solution of step (3) is subsequently mixed with an nonpolar aliphatic hydrocarbon solvent (III) so that the addition salt of components (A) and (B) precipitates.

23. The process of Claim 22 wherein the ratio of the number of phosphorus atoms in the phosphorous acid to the number of basic nitrogen atoms in the hindered amine light stabilizer is 0.25 to 2.

24. The process of Claim 23 wherein the ratio of the number of phosphorus atoms in the phosphorous acid to the number of basic nitrogen atoms in the hindered amine light stabilizer is 0.50 to 1.1.

25. The process of Claim 22 wherein said polar solvents (I) is selected from methanol and isopropanol.

26. The process of Claim 22 wherein the acidic phosphorus containing compound is present in the polar solvent (I) in the amount of 0.1 to 50 weight percent.

27. The process of Claim 26 wherein the acidic phosphorus containing compound is present in the polar solvent (I) in the amount of 25 to 35 weight percent.

28. The process of Claim 22 wherein the aromatic hydrocarbon solvent (II) is selected from the group consisting of toluene, xylene, and benzene.

29. The process of Claim 22 wherein the nonpolar aliphatic hydrocarbon solvent (III) is selected from the group consisting of pentane, heptane, hexane, octane, isooctane, cyclobutane, cyclopentane, cyclohexane, and 1,3-dimethyl cyclohexane.

30. The process of Claim 29 wherein the aliphatic nonpolar solvent (III) is selected from heptane, hexane, and octane.

31. The process of Claim 30 wherein the aliphatic nonpolar solvent I(III) is heptane.

32. The process of Claim 22 wherein the hindered amine light stabilizer is present in the aromatic hydrocarbon solvent (II) in the amount of 5 to 45 weight percent.

33. The process of Claim 32 wherein the hindered amine light stabilizer is present in the aromatic hydrocarbon solvent (II) in the amount of 10 to 30 weight percent.

34. The process of Claim 22 wherein the aromatic hydrocarbon solvent (II) is combined with the hindered amine light stabilizer in a ratio by weight of hindered amine light stabilizer to aromatic hydrocarbon solvent of 1:20 to 1:2.5.

35. The process of Claim 22 wherein the weight ratio of the polar solvent(s) (I) to the aromatic hydrocarbon solvent(s) (II) is 0.075 to 1.

36. The process of Claim 22 wherein the total weight percentage of the salt formed is 5 to 30 weight percent based on the total combined weight of the polar solvent(s) (I), the aromatic hydrocarbon solvent(s) (II), and the nonpolar aliphatic hydrocarbon solvent (III).

37. The process of Claim 22 wherein one or more aliphatic non-polar solvents (III) are added to that the total weight percent of salt in the solvent mixture is less than 15 weight percent.

38. The process of Claim 22 further comprising the step of isolating the addition salt precipitate.

39. The process of Claim 22 wherein the temperature of the reaction is 15 °C to 65 °C.

40. A process for the preparation of an addition salt of at least one hindered amine light stabilizer and phosphorous acid comprising the following steps:
(1) phosphorous acid is dissolved in at least one polar solvent (I) selected from methanol and isopropanol; and
(2) at least one hindered amine light stabilizer is dissolved in at least one aromatic hydrocarbon solvent (II) wherein the hindered amine light stabilizer has the formula: 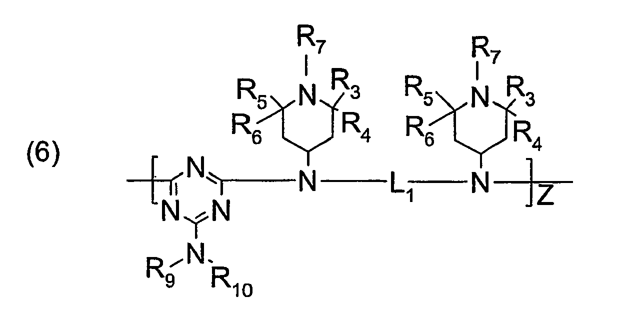 wherein R₃ = R₄ = R₅ = R₆ = R₇ = methyl, (R₃)(R₄)N- collectively represent morpholino, L₁ is C₁ to C₆ alkylene, and Z is 1 to 6;
wherein the at least one aromatic hydrocarbon solvent (II) is selected from toluene, xylene, and benzene;
(3) components (A) and (B) are subsequently mixed to form a homogenous solution of the addition salt.; and
(4) the homogeneous solution of step (3) is subsequently mixed with heptane;
wherein the addition salt of components (A) and (B) precipitates.

41. A process for the preparation of an addition salt of at least one hindered amine light stabilizer and at least one acidic phosphorus containing compound comprising the step of mixing, grinding, and/or pulverizing and, subsequently, melt extruding the following:
(A) at least one acidic phosphorus containing compound selected from compounds having the formulae: 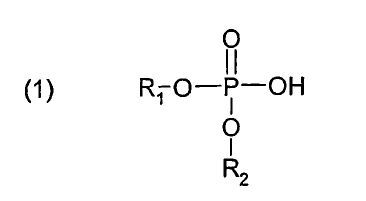 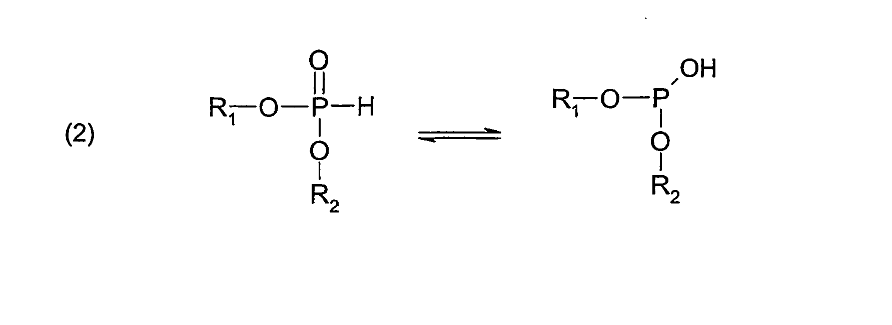 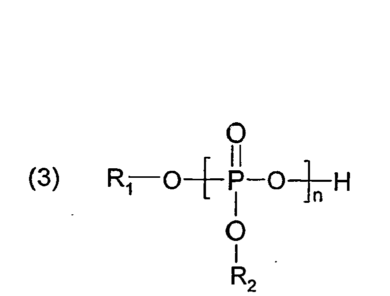 wherein
R₁ and R₂ are independently selected from hydrogen, C₁-C₂₂-alkyl, substituted C₁-C₂₂-alkyl, C₃-C₈-cycloalkyl, substituted C₃-C₈-cycloalkyl, heteroaryl, and aryl;
n is 2 to 500; and
(B) at least one hindered amine light stabilizer selected from compounds having the formulae: 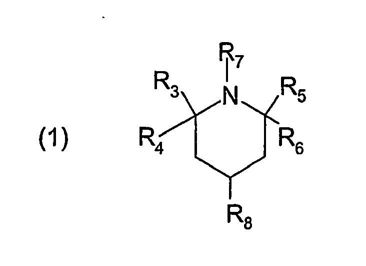 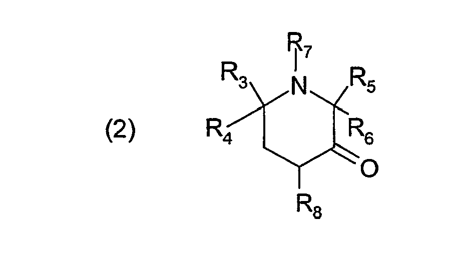 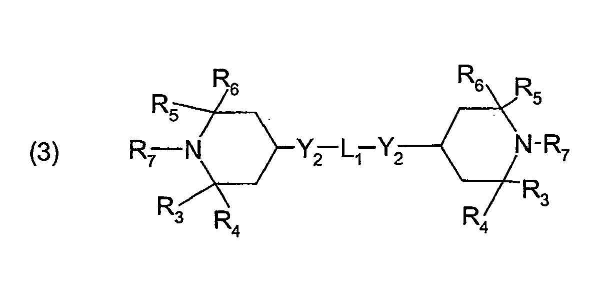 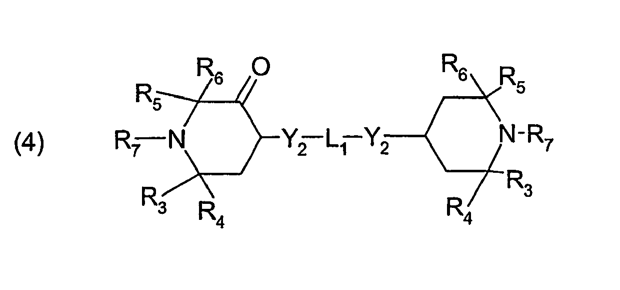 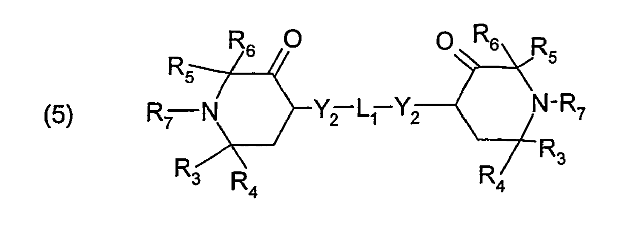 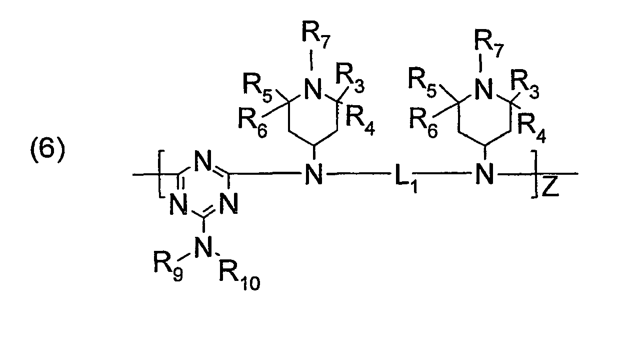 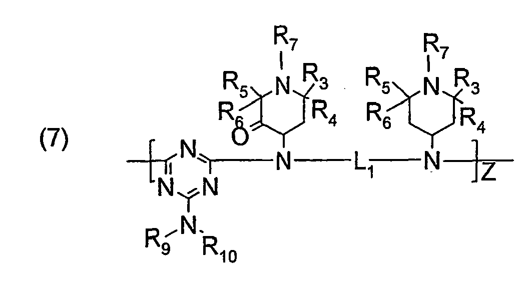 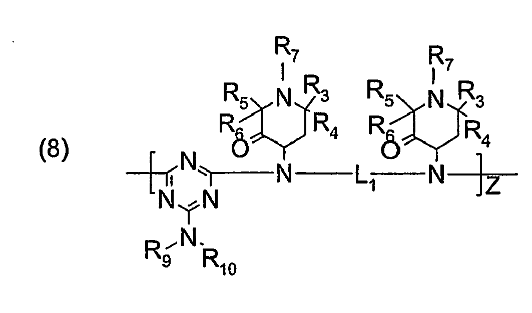 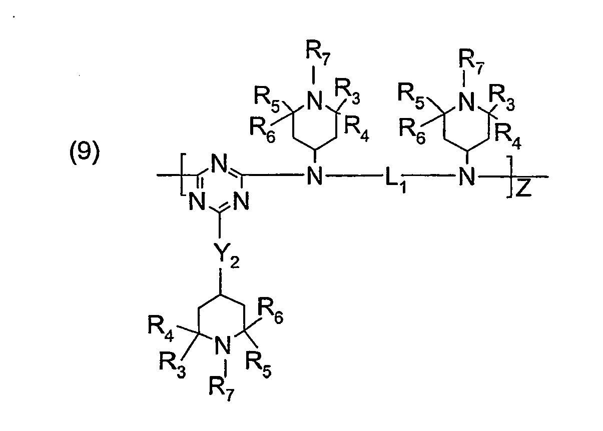 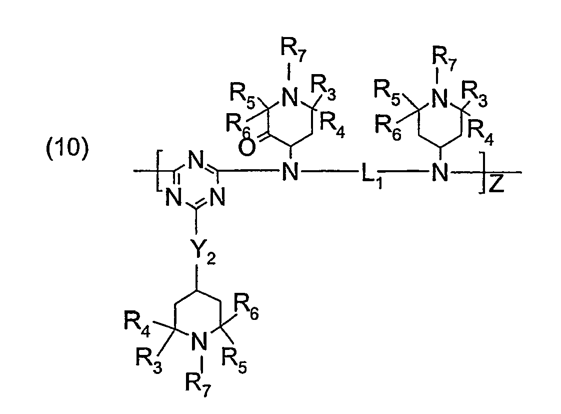 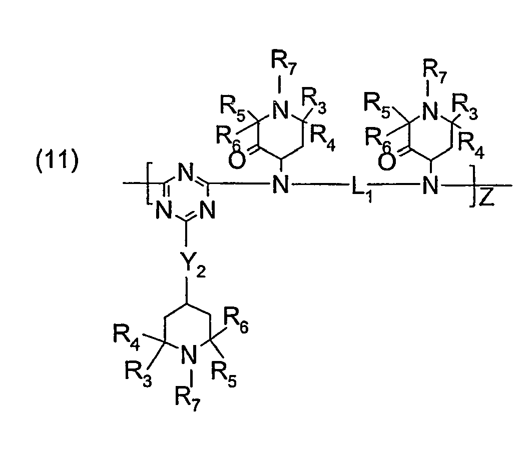 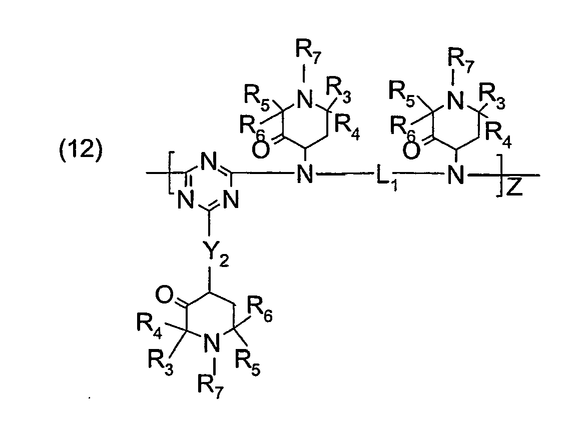 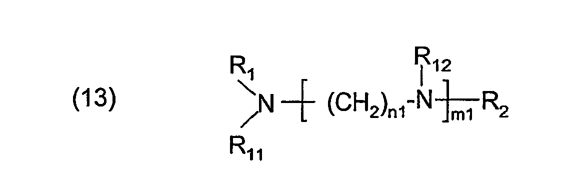 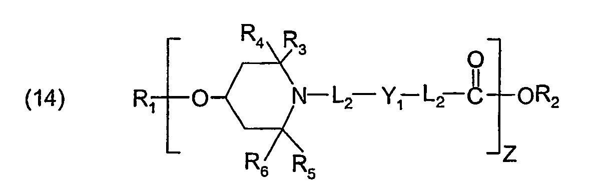 wherein
R₃, R₄, R₅, and R₆ are independently selected from hydrogen, C₁-C₂₂-alkyl, substituted C₁-C₂₂-alkyl, C₃-C₈-cycloalkyl, substituted C₃-C₈-cycloalkyl, heteroaryl, aryl;
R₇ is selected from hydrogen, -OR₆, C₁-C₂₂-alkyl, substituted C₁-C₂₂-alkyl, C₃-C₈-cycloalkyl, substituted C₃-C₈-cycloalkyl;
R₈ is selected from hydrogen; C₁-C₂₂-alkyl, substituted C₁-C₂₂-alkyl, C₃-C₈-cycloalkyl, substituted C₃-C₈-cycloalkyl, heteroaryl, aryl, -Y₁-R₁ or a succinimido group having the formula 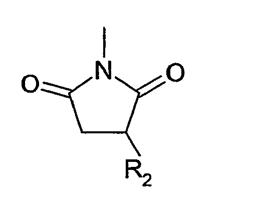
R₉ and R₁₀ are independently selected from hydrogen, C₁-C₂₂-alkyl, substituted C₁-C₂₂-alkyl, C₃-C₈-cydoalkyl, and substituted C₃-C₈-cycloalkyl; R₉ and R₁₀ may collectively represent a divalent group forming a ring with the nitrogen atom to which they are attached;
L₁ is a divalent linking group selected from C₂-C₂₂-alkylene; -(CH₂CH₂-Y₁)₁₋₃-CH₂CH₂-; C₃-C₈-cycloalkylene; arylene; or -CO-L₂-OC-;
L₂ is selected from C₁-C₂₂-alkylene, arylene, -(CH₂CH₂-Y₁)₁₋₃-CH₂CH₂- and C₃-C₈-cycloalkylene;
Y₁ is selected from -OC(O)-, -NHC(O)-, -O-, -S-, -N(R₁)-;
Y₂ is selected from -O- or -N(R₁)-;
Z is a positive integer of up to 20;
m₁, is selected from 0 to 10;
n1 is a positive integer selected from 2 to 12;
R₁₁, and R₁₂ are independently selected from hydrogen, C₁-C₂₂-alkyl, substituted C₁-C₂₂-alkyl, C₃-C₈-cycloalkyl, substituted C₃-C₈-cycloalkyl, heteroaryl, aryl, and radical A wherein radical A is selected from the following structures: 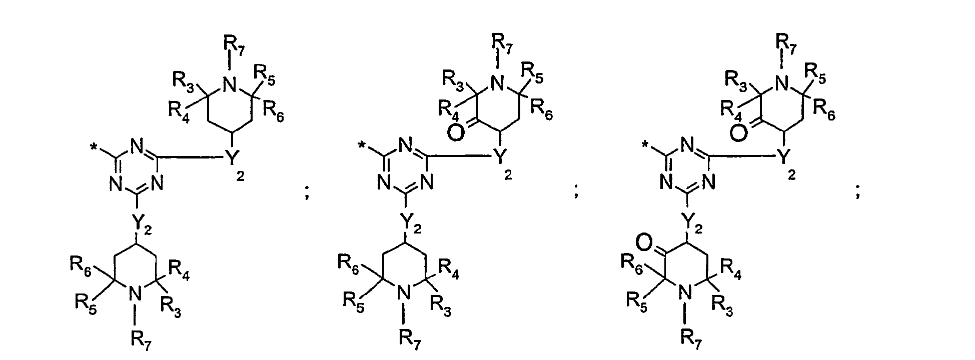 Radical A structures wherein * designates the position of attachment
wherein at least one of R₁₁ and R₁₂ is also a radical A; and wherein the ratio of the number of phosphorus atoms in the acidic phosphorus-containing compound to the number of basic nitrogen atoms in the HALS is 0.5 to 1.1;
(C) a polymer selected from polyesters and polycarbonates; and
wherein the addition salt of components (A) and (B) is formed.

42. The process of Claim 41 wherein:
(A) the phosphorus containing compound is phosphorous acid; and
(B) the hindered amine light stabilizer has the formula: 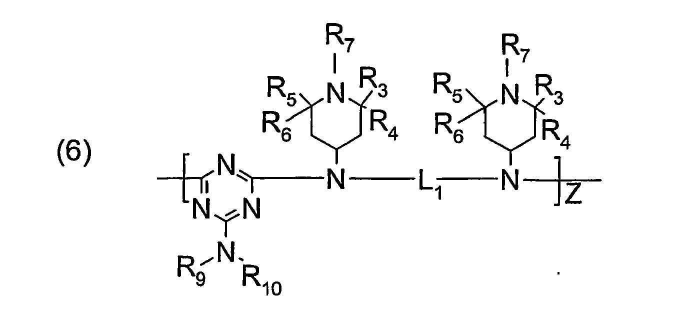 wherein R₃ = R₄ = R₅ = R₆ = R₇ = methyl, (R₃)(R₄)N- collectively represent morpholino, L₁ is C₁ to C₆ alkylene, and Z is 1 to 6; and
(C) the polymer is a polyester.

43. The process of Claim 41 wherein the ratio of the number of phosphorus atoms in the phosphorous acid to the number of basic nitrogen atoms in the hindered amine light stabilizer is 0.25 to 2.

44. The process of Claim 41 wherein the ratio of the number of phosphorus atoms in the phosphorous acid to the number of basic nitrogen atoms in the hindered amine light stabilizer is 0.5 to 1.1.

45. A process for the preparation of an addition salt of at least one hindered amine light stabilizer and at least one acidic phosphorus containing compound comprising the following steps:
(1) component (A) is dissolved in a polar solvent (I) and component (B) is dissolved in an non-polar aliphatic hydrocarbon solvent (III) which is immiscible with polar solvent (I);
(2) components (A) and (B) are mixed to form a biphasic mixture wherein the addition salt is in the polar solvent phase;
(3) the biphasic mixture is separate into the two solutions of step 2;
(4) feeding the polar solution of step 3 to a vessel containing the nonpolar solvent of step (3) and vaporizing polar solvent (I) as the polar solvent of step 3 is added to the vessel to produce a slurry of the salt in the nonpolar aliphatic hydrocarbon solvent (III);
wherein component (A) is selected from compounds having the formulae: 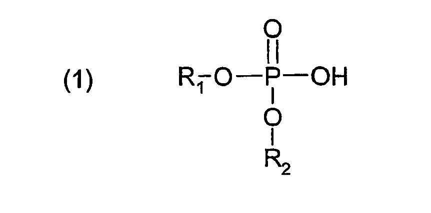 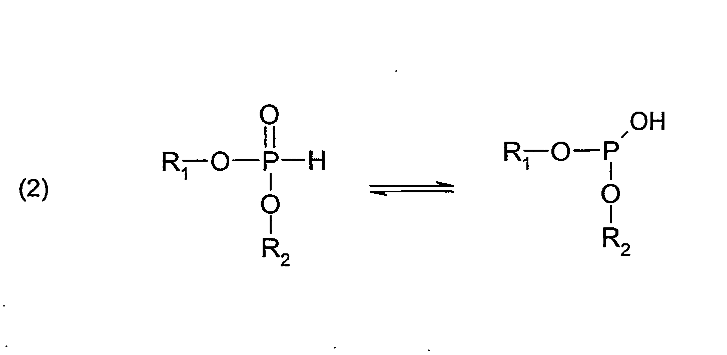 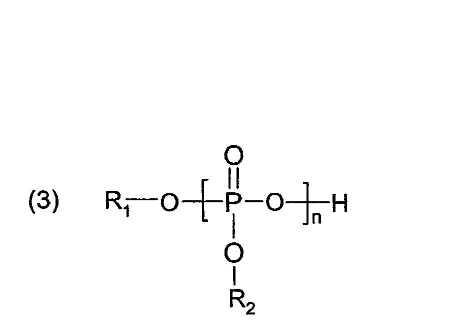 wherein
R₁ and R₂ are independently selected from hydrogen, C₁-C₂₂-alkyl, substituted C₁-C₂₂-alkyl, C₃-C₈-cycloalkyl, substituted C₃-C₈-cycloalkyl, heteroaryl, and aryl;
n is 2 to 500; and
wherein component (B) is selected from compounds having the formulae: 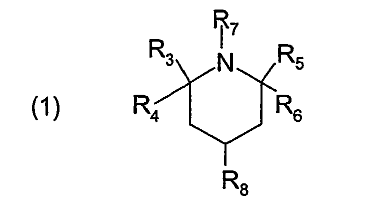 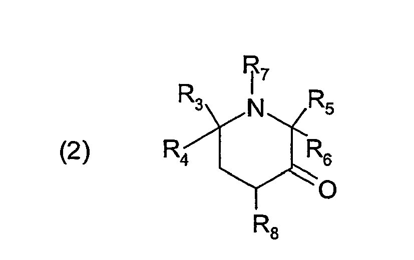 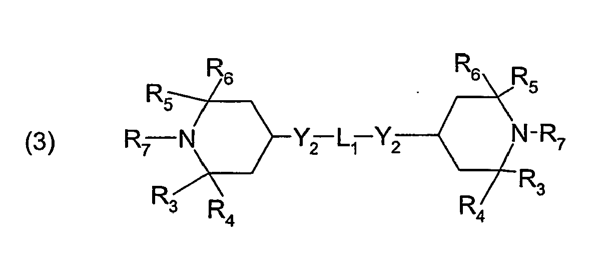 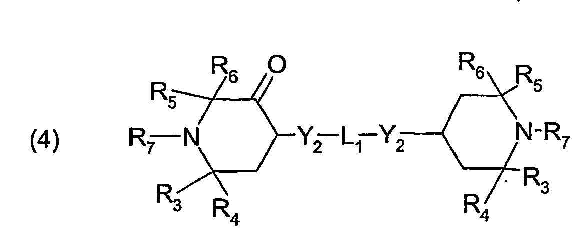 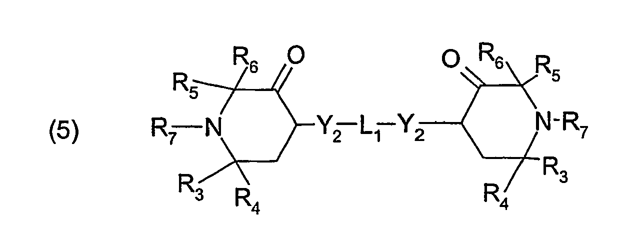 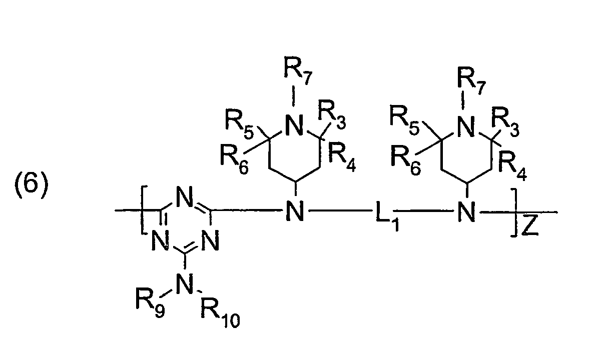 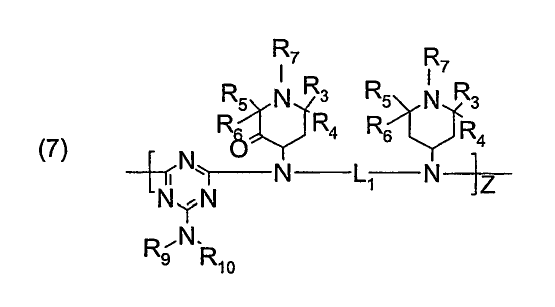 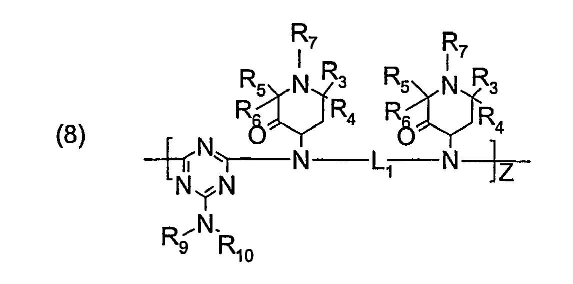 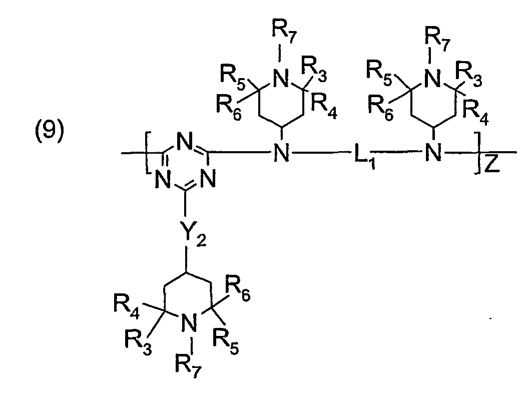 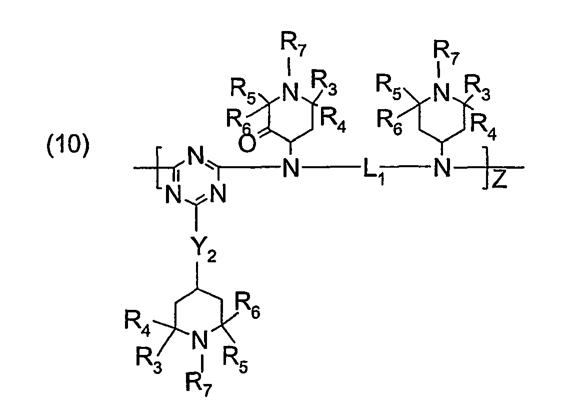 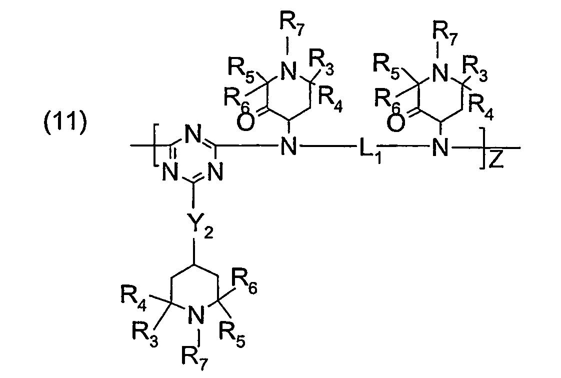 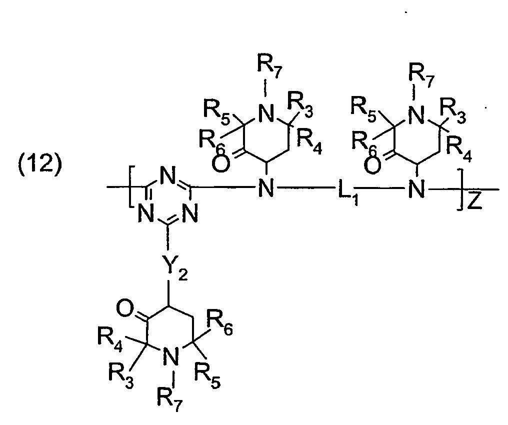 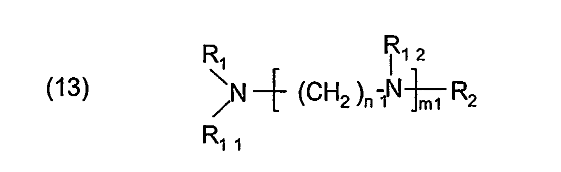 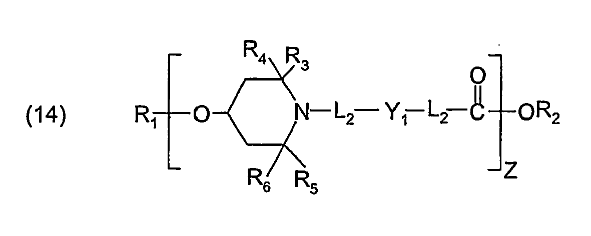
wherein
R₁ and R₂ are independently selected from hydrogen, C₁-C₂₂-alkyl, substituted C₁-C₂₂-alkyl, C₃-C₈-cycloalkyl, substituted C₃-C₈-cycloalkyl, heteroaryl, and aryl;
R₃, R₄, R₅, and R₆ are independently selected from hydrogen, C₁-C₂₂-alkyl, substituted C₁-C₂₂-alkyl, C₃-C₈-cycloalkyl, substituted C₃-C₈-cycloalkyl, heteroaryl, aryl;
R₇ is selected from hydrogen, -OR₆, C₁-C₂₂-alkyl, substituted C₁-C₂₂-alkyl, C₃-C₈-cycloalkyl, substituted C₃-C₈-cycloalkyl;
R₈ is selected from hydrogen; C₁-C₂₂-alkyl, substituted C₁-C₂₂-alkyl, C₃-C₈-cycloalkyl, substituted C₃-C₈-cycloalkyl, heteroaryl, aryl, -Y₁-R₁ or a succinimido group having the formula 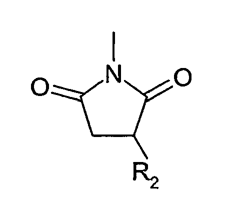
R₉ and R₁₀ are independently selected from hydrogen, C₁-C₂₂-alkyl, substituted C₁-C₂₂-alkyl, C₃-C₈-cycloalkyl, and substituted C₃-C₈-cycloalkyl; R₉ and R₁₀ collectively represent a divalent group forming a ring with the nitrogen atom to which they are attached;
L₁ is a divalent linking group selected from C₂-C₂₂-alkylene; -(CH₂CH₂-Y₁)₁₋₃-CH₂CH₂-; C₃-C₈-cycloalkylene; arylene; or -CO-L₂-OC-;
L₂ is selected from C₁-C₂₂-alkylene, arylene, -(CH₂CH₂-Y₁)₁₋₃-CH₂CH₂- and C₃-C₈-cycloalkylene;
Y₁ is selected from -OC(O)-, -NHC(O)-, -O-, -S-, -N(R₁)-;
Y₂ is selected from -O- or -N(R₁)-;
Z is a positive integer of up to 20;
m₁, is selected from 0 to 10;
n1 is a positive integer selected from 2 to 12;
R₁₁ and R₁₂ are independently selected from hydrogen, C₁-C₂₂-alkyl, substituted C₁-C₂₂-alkyl, C₃-C₈-cycloalkyl, substituted C₃-C₈-cycloalkyl, heteroaryl, aryl, and radical A wherein at least one of R₁₁ and R₁₂ is also a Radical A selected from the following structures: 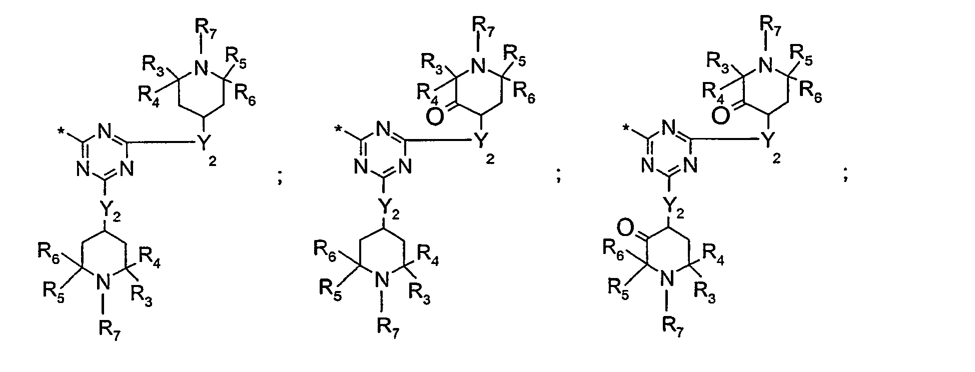 Radical A structures wherein * designates the position of attachment;
wherein the addition salt of components (A) and (B) is formed.

46. The process of Claim 45 wherein the acidic phosphorus containing compound is phosphorous acid and ratio of the number of phosphorus atoms in the phosphorous acid to the number of basic nitrogen atoms in the hindered amine light stabilizer is 0.25 to 2.

47. The process of Claim 46 wherein the ratio of the number of phosphorus atoms in the acid phosphorus containing compound to the number of basic nitrogen atoms in the hindered amine light stabilizer is 0.50 to 1.1.

48. The process of Claim 45 wherein:
(A) the acidic phosphorus containing compound is phosphorous acid which is dissolved in at least one polar solvent (I) selected from methanol and isopropanol; and
(B) the hindered amine light stabilizer is dissolved in heptane and is selected from the formula: 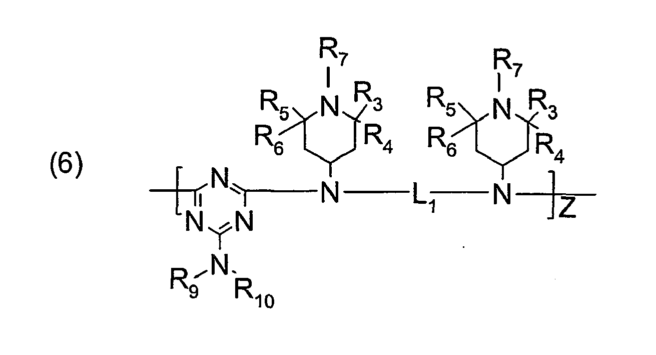
wherein R₃ = R₄ = R₅ = R₆ = R₇ = methyl, (R₃)(R₄)N- collectively represent morpholino, L₁ is C₁ to C₆ alkylene, and Z is 1 to 6.

49. The process of Claim 48 wherein the polar solvent (I) is methanol.

50. The process of Claim 45 wherein the acidic phosphorus containing compound is present in the polar solvent (I) in the amount of 10 to 50 weight percent.

51. The process of Claim 50 wherein the acidic phosphorus containing compound is present in the polar solvent (I) in the amount of 25 to 35 weight percent.

52. The process of Claim 45 wherein the nonpolar aliphatic hydrocarbon solvent (III) is selected from the group consisting of pentane, heptane, hexane, octane, isooctane, carbon tetrachloride, chloroform, methylene chloride, cyclobutane, cyclopentane, cyclohexane, and 1,3-dimethyl cyclohexane.

53. The process of Claim 52 wherein the aliphatic nonpolar solvent (III) is selected from heptane, octane, and hexane.

54. The process of Claim 53 wherein the nonpolar aliphatic hydrocarbon solvent (III) is heptane.

55. The process of Claim 53 wherein the total weight percent of salt in the total solvent mixture of step (3) is between 5 and 30 weight percent.

56. A process for the preparation of an addition salt of at least one hindered amine light stabilizer and at least one acidic phosphorus containing compound comprising the following steps:
(1) at least one acidic phosphorus containing compound (Component A) and at least one at least one hindered amine light stabilizer (Component B) is mixed in a polar solvent until a homogeneous solution is obtained;
(2) the acid addition salt is isolated by the process of spray drying;
wherein component (A) is selected from compounds having the formulae: 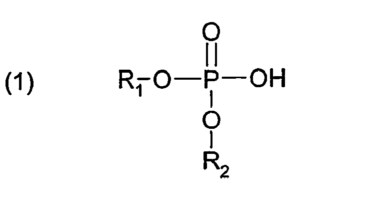 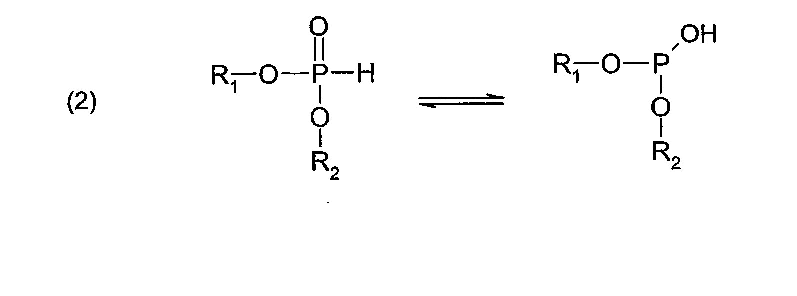 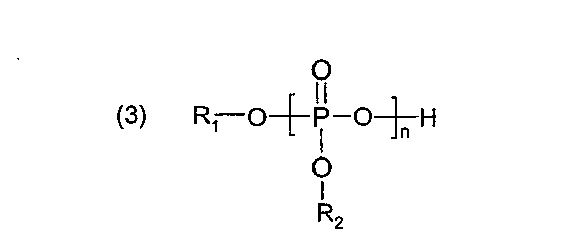 wherein
R₁ and R₂ are independently selected from hydrogen, C₁-C₂₂-alkyl, substituted C₁-C₂₂-alkyl, C₃-C₈-cycloalkyl, substituted C₃-C₈-cycloalkyl, heteroaryl, and aryl;
n is 2 to 500; and
wherein component (B) is selected from compounds having the formulae: 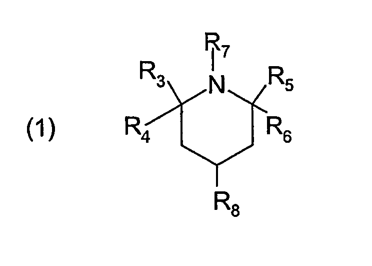 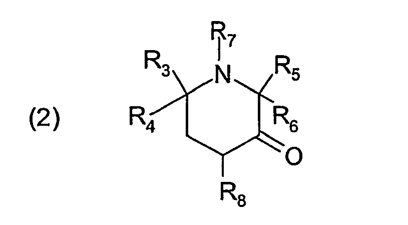 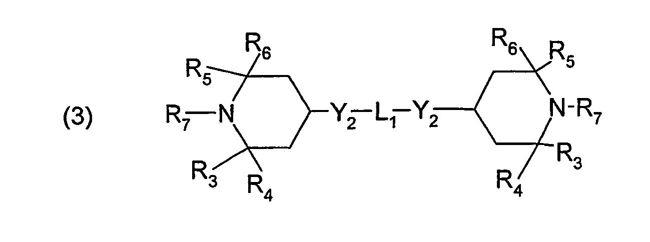 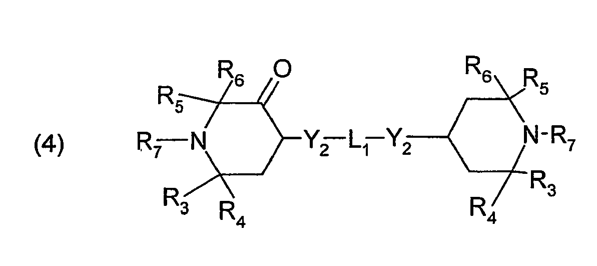 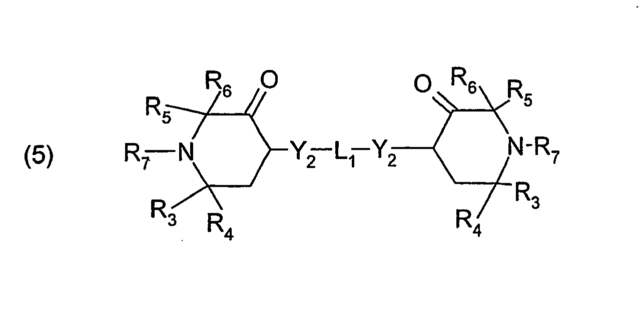 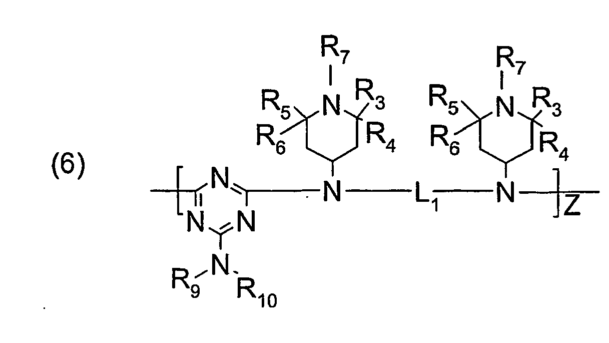 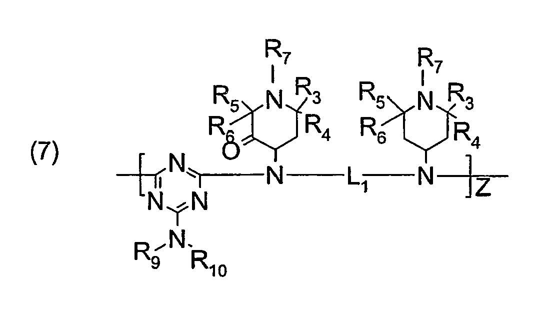 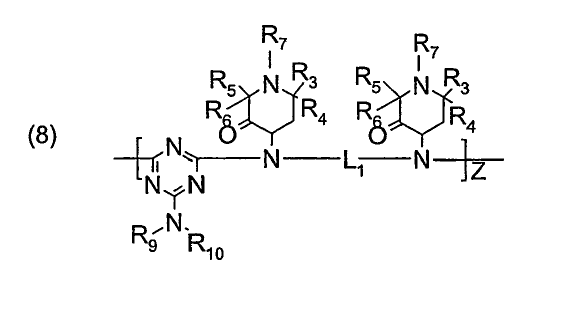 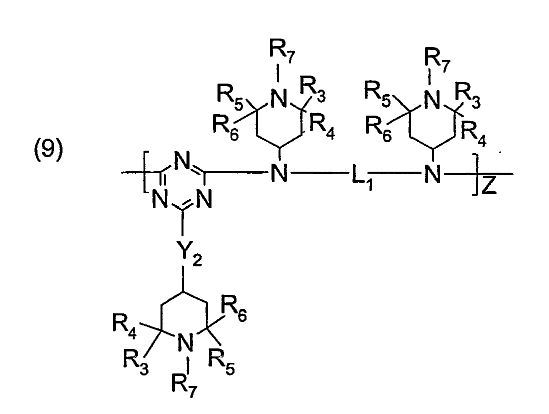 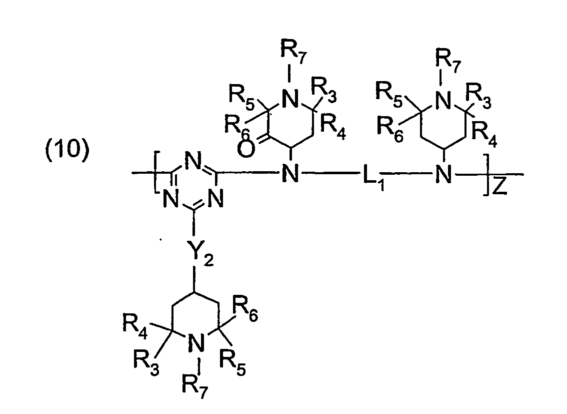 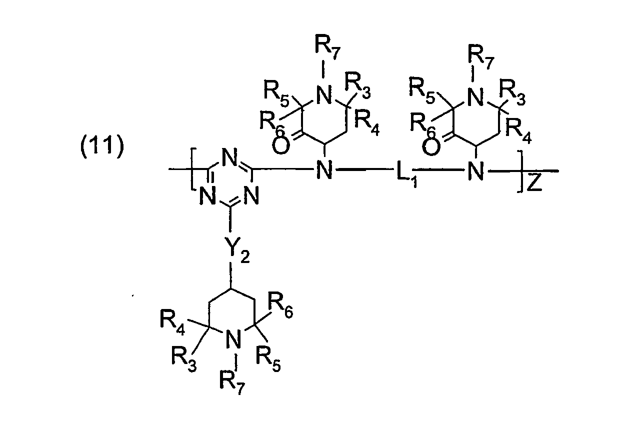 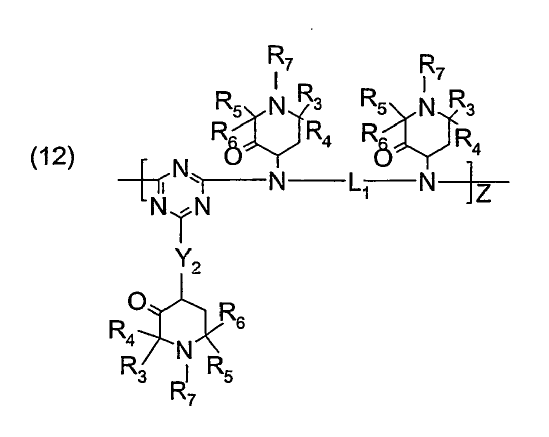 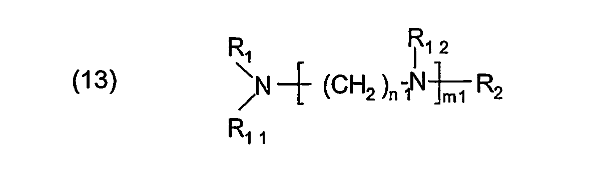 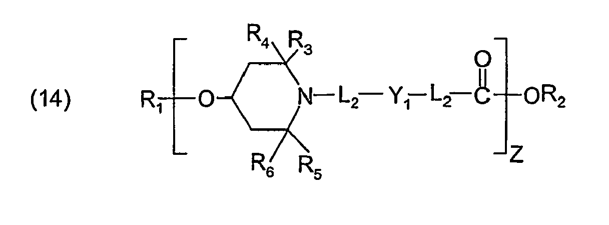
wherein
R₁ and R₂ are independently selected from hydrogen, C₁-C₂₂-alkyl, substituted C₁-C₂₂-alkyl, C₃-C₈-cycloalkyl, substituted C₃-C₈-cycloalkyl, heteroaryl, and aryl;
R₃, R₄, R₅, and R₆ are independently selected from hydrogen, C₁-C₂₂-alkyl, substituted C₁-C₂₂-alkyl, C₃-C₈-cycloalkyl, substituted C₃-C₈-cycloalkyl, heteroaryl, aryl;
R₇ is selected from hydrogen, -OR₆, C₁-C₂₂-alkyl, substituted C₁-C₂₂-alkyl, C₃-C₈-cycloalkyl, substituted C₃-C₈-cycloalkyl;
R₈ is selected from hydrogen; C₁-C₂₂-alkyl, substituted C₁-C₂₂-alkyl, C₃-C₈-cycloalkyl, substituted C₃-C₈-cycloalkyl, heteroaryl, aryl, -Y₁-R₁ or a succinimido group having the formula 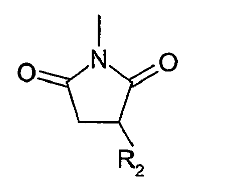
R₉ and R₁₀ are independently selected from hydrogen, C₁-C₂₂-alkyl, substituted C₁-C₂₂-alkyl, C₃-C₈-cycloalkyl, and substituted C₃-C₈-cycloalkyl; R₉ and R₁₀ collectively represent a divalent group forming a ring with the nitrogen atom to which they are attached;
L₁ is a divalent linking group selected from C₂-C₂₂-alkylene; -(CH₂CH₂-Y₁)₁₋₃-CH₂CH₂-; C₃-C₈-cycloalkylene; arylene; or -CO-L₂-OC-;
L₂ is selected from C₁-C₂₂-alkylene, arylene, -(CH₂CH₂-Y₁)₁₋₃-CH₂CH₂- and C₃-C₈-cycloalkylene;
Y₁ is selected from -OC(O)-, -NHC(O)-, -O-, -S-, -N(R₁)-;
Y₂ is selected from -O- or -N(R₁)-;
Z is a positive integer of up to 20;
m₁, is selected from 0 to 10;
n1 is a positive integer selected from 2 to 12;
R₁₁ and R₁₂ are independently selected from hydrogen, C₁-C₂₂-alkyl, substituted C₁-C₂₂-alkyl, C₃-C₈-cycloalkyl, substituted C₃-C₈-cycloalkyl, heteroaryl, aryl, and radical A wherein at least one of R₁₁ and R₁₂ is also a Radical A selected from the following structures: 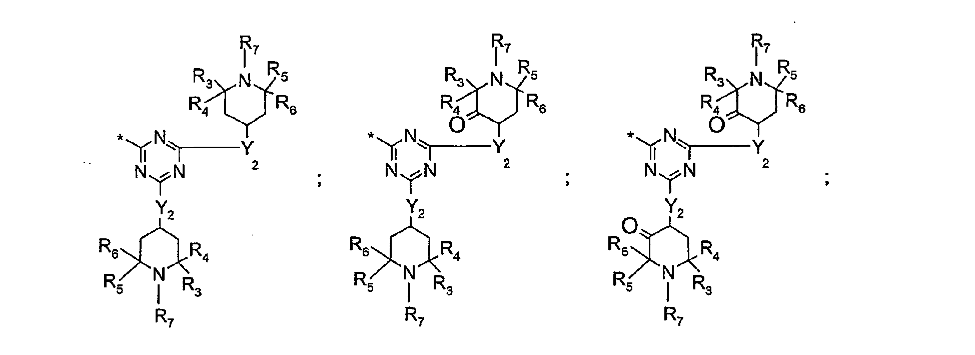 Radical A structures wherein * designates the position of attachment;
wherein the addition salt of components (A) and (B) is formed.

57. The process of Claim 56 wherein the acidic phosphorus containing compound is phosphorous acid.

58. The process of Claim 57 wherein the hindered amine light stabilizer is selected from the formula: 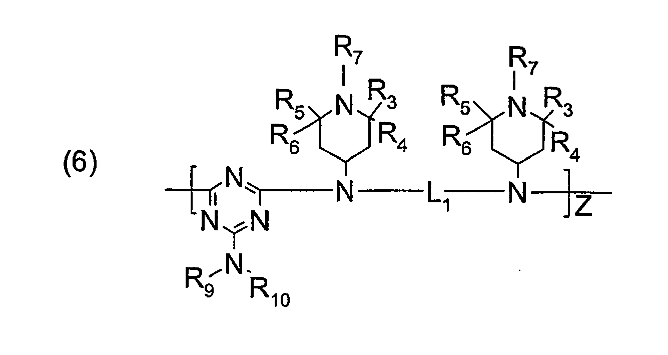 wherein R₃ = R₄ = R₅ = R₆ = R₇ = methyl, (R₃)(R₄)N- collectively represent morpholino, L₁ is C₁ to C₆ alkylene, and Z is 1 to 6.

59. The process of Claim 58 wherein the polar solvent is methanol or water.

60. The process of Claim 59 wherein the hindered amine light stabilizer and phosphorous acid comprise from 1 to 30 percent of the solution by weight.

61. The process according to Claim 1, wherein the at least one hindered amine light stabilizer is 1,3,5-triazine-2,4,6-triamine, N,N'-1,2-ethane-diyl-bis[[[4,6-bis-[butyl-1,2,2,6,6,-pentamethyl-4-piperidinyl)amino]-1,3,5-triazine-2-yl]amino]-3,1-propanediyl]]bis[N,N"-dibutyl-N,N"-bis-(1,2,2,6,6-pentamethyl-4-piperidinyl)-.

## Patentansprüche

1. Verfahren zur Herstellung eines Additionssalzes von mindestens einem gehindertes-Amin-Lichtstabilisator und mindestens einer sauren, Phosphor enthaltenden Verbindung, welche den Schritt des Kombinierens von folgendem umfasst:
(A) mindestens einer sauren, Phosphor enthaltenden Verbindung, welche von Verbindungen folgender Formeln gewählt ist: 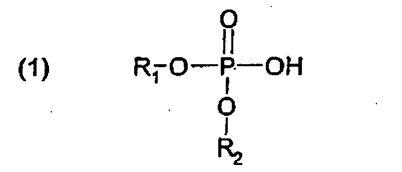 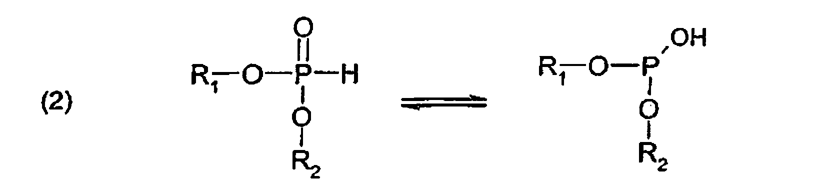 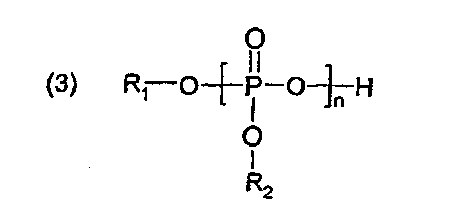 worin
R₁ und R₂ unabhängig aus Wasserstoff C₁-C₂₂-Alkyl, substituiertem C₁-C₂₂-Alkyl, C₃-C₈-Cycloalkyl, substituiertem C₃-C₈-Cycloalkyl, Heteroaryl und Aryl gewählt sind;
n 2 bis 500 ist; und
(B) mindestens einem gehindertes-Amin-Lichtstabilisator, gewählt von Verbindungen folgender Formeln: 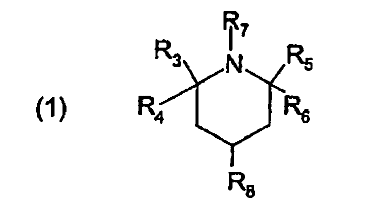 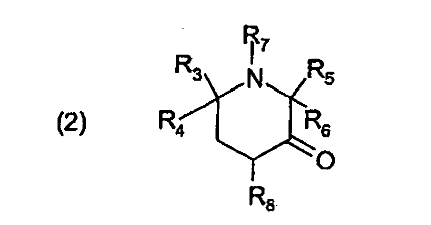 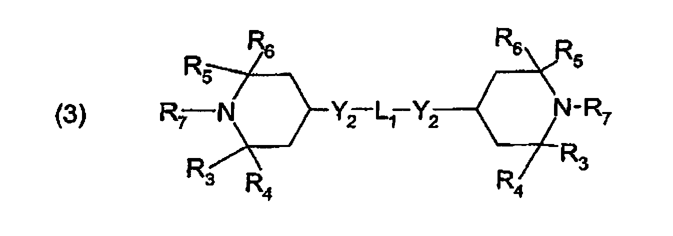 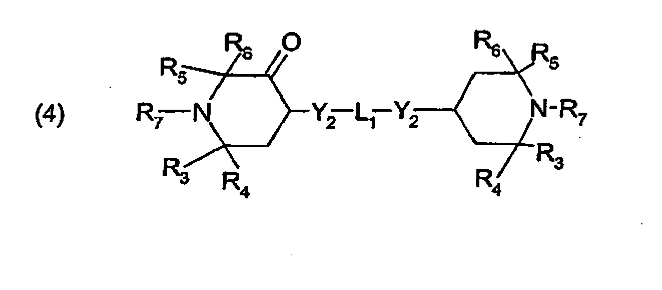 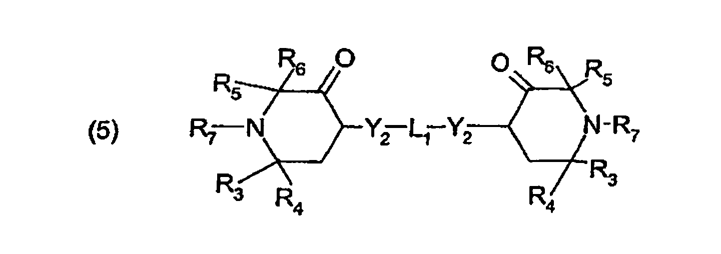 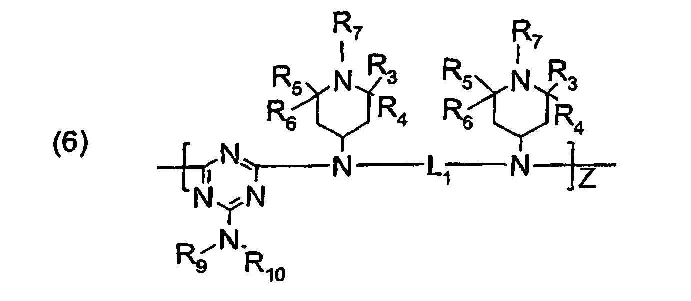 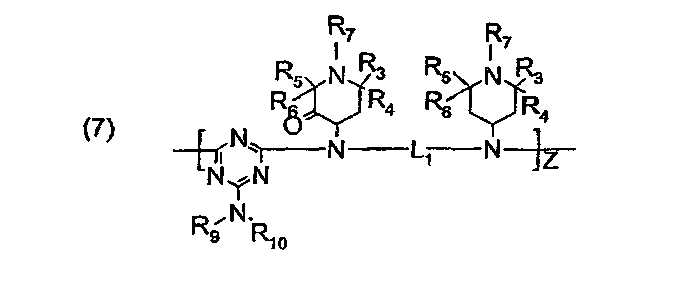 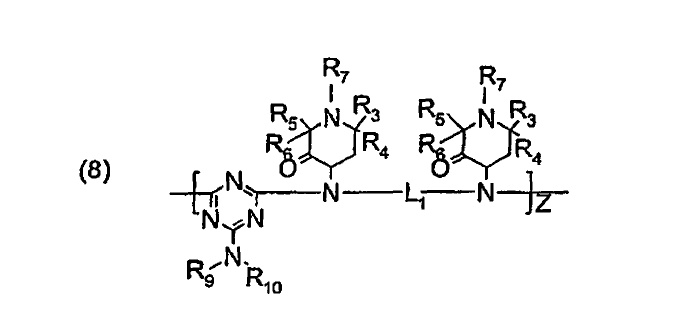 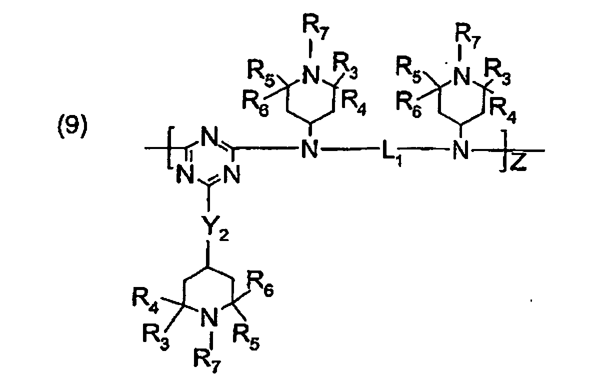 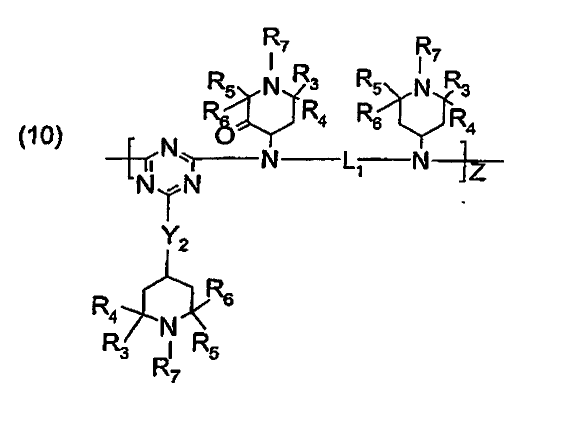 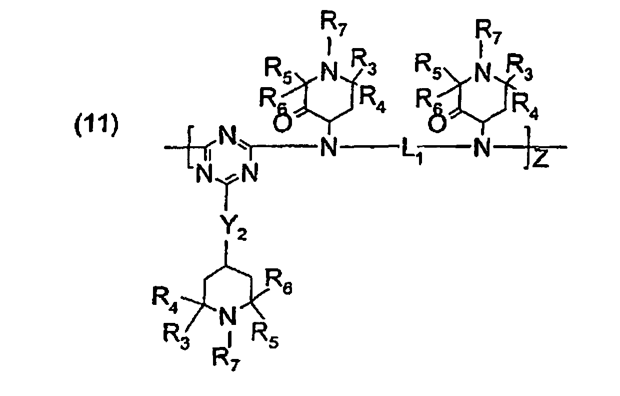 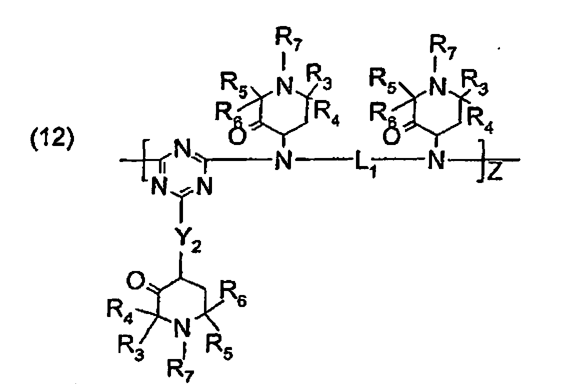 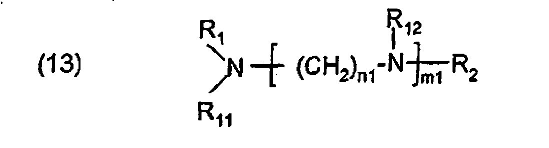 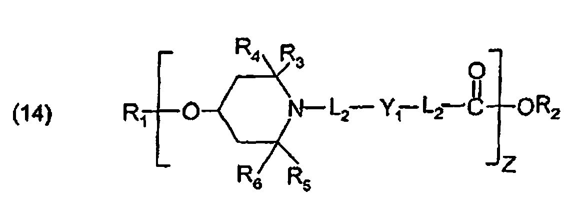
worin
R₃, R₄, R₅ und R₆ unabhängig aus Wasserstoff, C₁-C₂₂-Alkyl, substituiertem C₁-C₂₂-Alkyl, C₃-C₈-Cycloalkyl, substituiertem C₃-C₈-Cycloalkyl, Heteroaryl, Aryl gewählt werden;
R₇ aus Wasserstoff, -OR₆, C₁-C₂₂-Alkyl, substituiertem C₁-C₂₂-Alkyl, C₃-C₈-Cycloalkyl, substituiertem C₃-C₈-Cycloalkyl gewählt wird;
R₈ aus Wasserstoff; C₁-C₂₂-Alkyl, substituiertem C₁-C₂₂-Alkyl, C₃-C₈-Cycloalkyl, substituiertem C₃-C₈-Cycloalkyl, Heteroaryl, Aryl, -OC(O)-R₁, -NHC(O)-R₁, -S-R₁, -N(R₁)-R₁ oder einer Succinimidogruppe der folgenden Formel gewählt wird 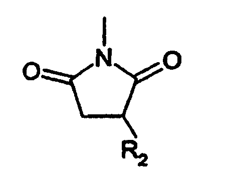
R₉ und R₁₀ unabhängig aus Wasserstoff, C₁-C₂₂-Alkyl, substituiertem C₁-C₂₂-Alkyl, C₃-C₈-Cycloalkyl und substituiertem C₃-C₈-Cycloalkyl gewählt werden; R₉ und R₁₀ zusammengefasst eine zweiwertige Gruppe unter Bildung eines Ringes mit dem Stickstoffatom, an welchem sie gebunden sind, repräsentieren können;
L₁ eine zweiwertige Verknüpfungsgruppe ist, die aus -(CH₂CH₂-Y₁)₁₋₃-CH₂CH₂-; C₃-C₈-Cycloalkylen; Arylen oder -CO-L₂-OC- gewählt wird;
L₂ von Arylen, -(CH₂CH₂-Y₁)₁₋₃-CH₂CH₂- und C₃-C₈-Cycloalkylen gewählt wird;
Y₁ aus -OC(O)-, -NHC(O)-, -O-, -S-, -N(R₁)- gewählt wird;
Y₂ aus -O- oder -N(R₁)- gewählt wird;
Z eine positive ganze Zahl von bis zu 20 ist;
m₁ aus 0 bis 10 gewählt wird;
n₁ eine positive ganze Zahl ist, die aus 2 bis 12 gewählt wird;
R₁₁ und R₁₂ unabhängig aus Wasserstoff, C₁-C₂₂-Alkyl, substituiertem C₁-C₂₂-Alkyl, C₃-C₈-Cycloalkyl, substituiertem C₃-C₈-Cycloalkyl, Heteroaryl, Aryl und dem Rest A gewählt werden, wobei der Rest A aus den folgenden Strukturen gewählt wird: 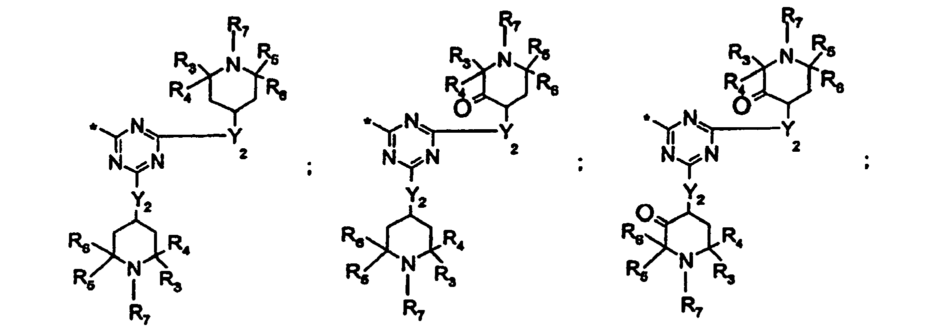 Rest-A-Strukturen, worin * für die Position der Anheftung steht
worin mindestens eines von R₁₁ und R₁₂ ebenfalls ein Rest A ist; und wobei das Verhältnis der Anzahl von Phosphoratomen in der sauren, Phosphor enthaltenden Verbindung zu der Anzahl von basischen Stickstoffatomen in dem HALS 0,25 bis 2 ist; wobei das Additionssalz der Komponenten (A) und (B) gebildet wird.

2. Verfahren gemäß Anspruch 1, wobei das Verhältnis der Anzahl von Phosphoratomen in der sauren, Phosphor enthaltenden Verbindung zu der Anzahl von basischen Stickstoffatomen in dem gehindertes-Amin-Lichtstabilisator 0,25 bis 2 ist.

3. Verfahren gemäß Anspruch 2, wobei das Verhältnis der Anzahl von Phosphoratomen in der sauren, Phosphor enthaltenden Verbindung zu der Anzahl von basischen Stickstoffatomen in dem gehindertes-Amin-Lichtstabilisator 0,50 bis 1,1 beträgt.

4. Verfahren gemäß Anspruch 1, umfassend die folgenden Schritte:
(1) mindestens eine saure, Phosphor enthaltende Verbindung (Komponente A) wird in einem polaren Lösungsmittel (I) gelöst:
(2) mindestens ein gehinderter Amin-Lichtstabilisator von (Komponente B) wird separat in einem aromatischen Kohlenwasserstofflösungsmittel (II) gelöst; und anschließend
(3) werden die Komponenten (A) und (B) gemischt, um eine homogene Lösung des Additionssalzes zu bilden.

5. Verfahren gemäß Anspruch 4, welches zusätzlich den Schritt 4 umfasst, wobei die homogene Lösung von Schritt 3 anschließend dann mit einem aliphatischen nicht-polaren Lösungsmittel (III) gemischt wird, sodass das Additionssalz präzipitiert.

6. Verfahren gemäß Anspruch 4, wobei das polare Lösungsmittel (I) ein oder mehrere polare organische Lösungsmittel mit einer Dielektrizitätskonstanten von größer als 3,0 bei 298 °K ist.

7. Verfahren gemäß Anspruch 6, wobei die polaren Lösungsmittel (I) aus einem oder mehreren der Gruppe gewählt werden, die aus Methanol, Ethanol, n-Propanol, Isopropanol, n-Butanol, t-Butanol, Isobutanol, 2-Butanol, n-Hexanol und Octanol besteht.

8. Verfahren gemäß Anspruch 7, wobei die polaren Lösungsmittel (I) aus Methanol und Isopropanol gewählt werden.

9. Verfahren gemäß Anspruch 4, wobei die saure Phosphor enthaltende Verbindung in dem polaren Lösungsmittel (I) in einer Menge von 0,1 bis 50 Gew.-% vorliegt.

10. Verfahren gemäß Anspruch 9, wobei die saure Phosphor enthaltende Verbindung in dem polaren Lösungsmittel (I) in der Menge von 25 bis 35 Gew.-% vorliegt.

11. Verfahren gemäß Anspruch 4, wobei das aromatische Kohlenwasserstofflösungsmittel (II) aus der Gruppe gewählt wird, die aus Toluol, Xylol und Benzol besteht.

12. Verfahren gemäß Anspruch 5, wobei das aliphatische nicht-polare Lösungsmittel (III) aus der Gruppe gewählt wird, die aus Pentan, Heptan, Hexan, Octan, Isooctan, Kohlenstofftetrachlorid, Chloroform, Methylenchlorid, Cyclobutan, Cyclopentan, Cyclohexan und 1,3-Dimethylcyclohexan besteht.

13. Verfahren gemäß Anspruch 12, wobei das aliphatische nicht-polare Lösungsmittel (III) aus Heptan, Hexan und Octan gewählt wird.

14. Verfahren gemäß Anspruch 13, wobei das aliphatische nicht-polare Lösungsmittel (III) Heptan ist.

15. Verfahren gemäß Anspruch 4, der gehindertes-Amin-Lichtstabilisator in dem aromatischen Kohlenwasserstofflösungsmittel (II) in einer Menge von 0,1 bis 45 Gew.-% vorliegt.

16. Verfahren gemäß Anspruch 15, wobei der gehindertes-Amin-Lichtstabilisator in dem aromatischen Kohlenwasserstofflösungsmittel (II) in der Menge von 10 bis 30 Gew.-% vorliegt.

17. Verfahren gemäß Anspruch 4, wobei das aromatische Kohlenwasserstofflösungsmittel (II) mit dem gehindertes-Amin-Lichtstabilisator in einem Gewichtsverhältnis von gehindertes-Amin-Lichtstabilisator zu aromatischem Kohlenwasserstofflösungsmittel von 1 : 5 bis 1 : 20 kombiniert wird.

18. Verfahren gemäß Anspruch 4, wobei das Gewichtsverhältnis der (des) polaren Lösungsmittel(s) (I) zu dem (den) aromatischen Kohlenwasserstofflösungsmittel(n) (II) 0,075 bis 1 beträgt.

19. Verfahren gemäß Anspruch 4, wobei der Gesamtgewichtsprozentwert des gebildeten Salzes 0,1 bis 30 Gew.-%, bezogen auf das kombinierte Gesamtgewicht des (der) polaren Lösungsmittel(s) (I) und des (der) aromatischen Kohlenwasserstofflösungsmittel(s) (II), beträgt.

20. Verfahren gemäß Anspruch 5, wobei mindestens ein aliphatisches nicht-polares Lösungsmittel (III) so hingesetzt wird, dass der Gesamtgewichtsprozentwert von Salz in der Lösungsmittelmischung weniger als 15 Gew.-%, bezogen auf das Gesamtgewicht der Zusammensetzung, beträgt.

21. Verfahren gemäß Anspruch 5, ferner den Schritt des Isolierens des Additionssalzpräzipitats umfassend.

22. Verfahren zur Herstellung eines Additionssalzes von mindestens einem gehindertes-Amin-Lichtstabilisator und mindestens einer sauren, Phosphor enthaltenden Verbindung, umfassend die folgenden Schritte:
(1) die saure Phosphor enthaltende Verbindung ist phosphorige Säure, welche in mindestens einem polaren Lösungsmittel (I) gelöst wird, wobei das (die) polare Lösungsmittel (I) aus Methanol, Ethanol, n-Propanol, Isopropanol, n-Butanol, t-Butanol, Isobutanol, 2-Butanol, n-Hexanol und Octanol gewählt wird;
(2) mindestens ein gehinderter Amin-Lichtstabilisator, welcher in mindestens einem aromatischen Kohlenwasserstofflösungsmittel (II) gelöst wird, wobei der mindestens eine gehindertes-Amin-Lichtstabilisator aus Verbindungen der folgenden Formeln gewählt wird: 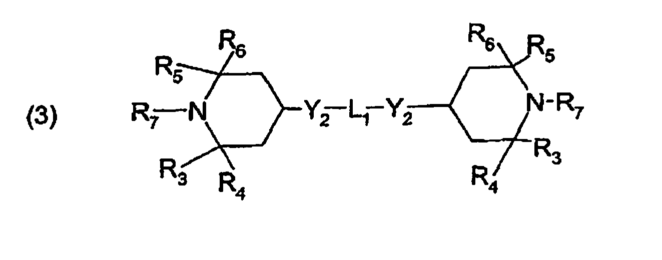 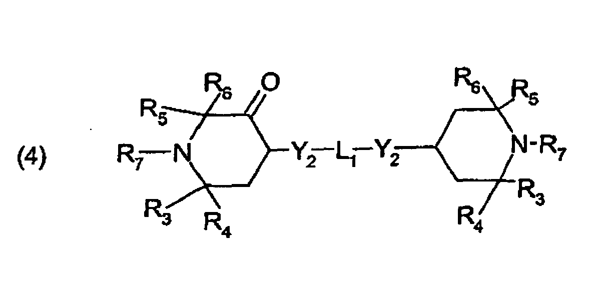 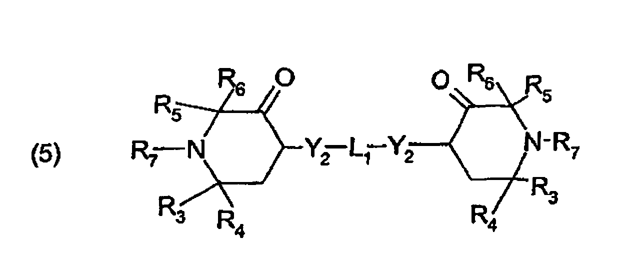 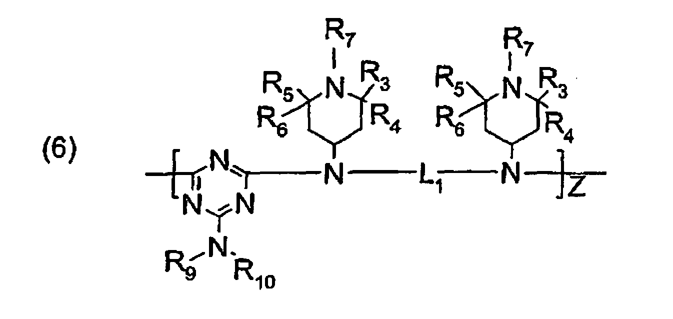 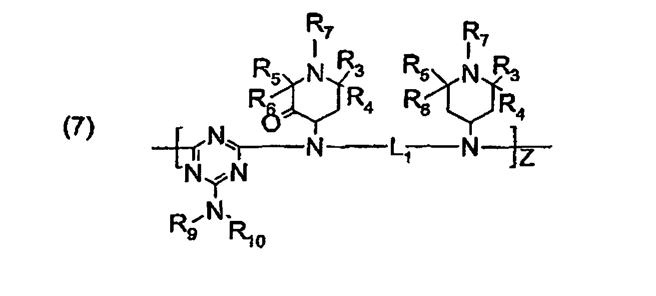 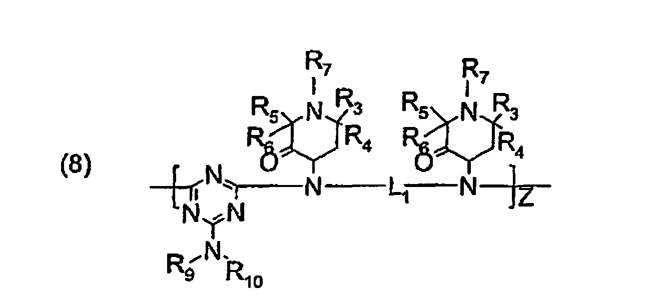 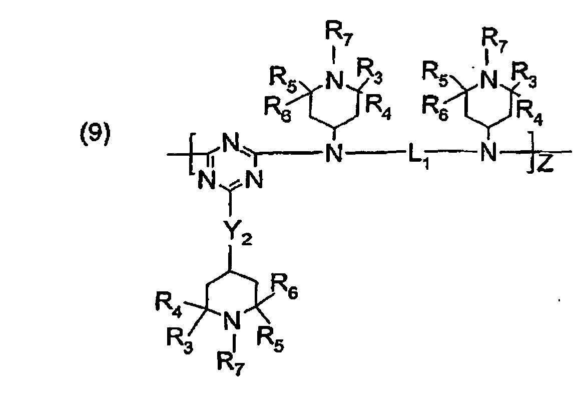 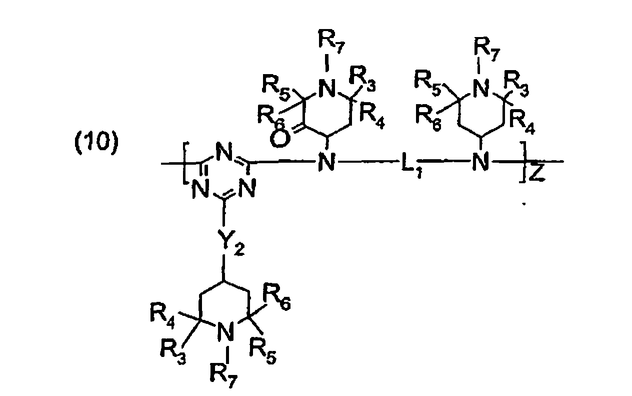 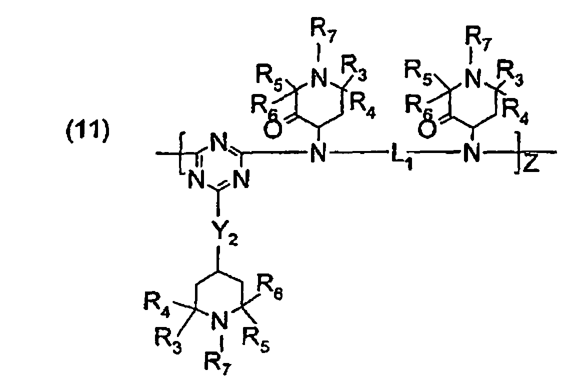 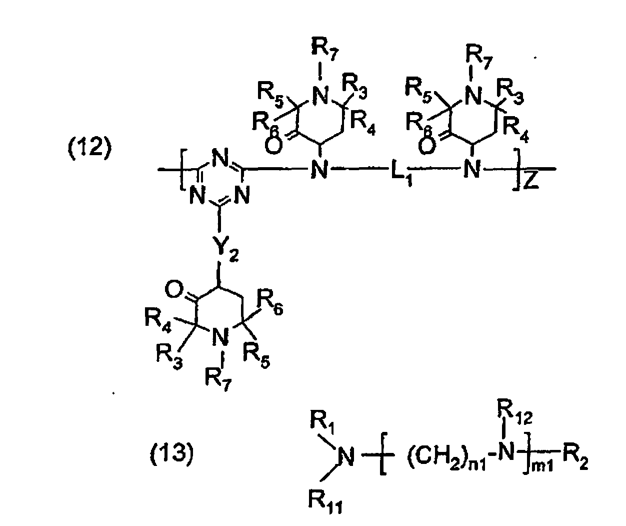 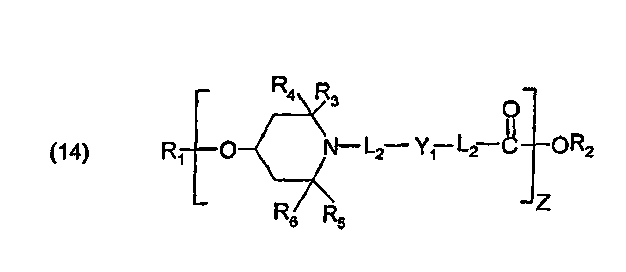 worin
R₁ und R₂ unabhängig aus Wasserstoff C₁-C₂₂-Alkyl, substituiertem C₁-C₂₂-Alkyl, C₃-C₈-Cycloalkyl, substituiertem C₃-C₈-Cycloalkyl, Heteroaryl und Aryl gewählt sind;
R₃, R₄, R₅ und R₆ unabhängig aus Wasserstoff, C₁-C₂₂-Alkyl, substituiertem C₁-C₂₂-Alkyl, C₃-C₈-Cycloalkyl, substituiertem C₃-C₈-Cycloalkyl, Heteroaryl, Aryl gewählt werden;
R₇ aus Wasserstoff, -OR₆, C₁-C₂₂-Alkyl, substituiertem C₁-C₂₂-Alkyl, C₃-C₈-Cycloalkyl, substituiertem C₃-C₈-Cycloalkyl gewählt wird;
R₈ aus Wasserstoff; C₁-C₂₂-Alkyl, substituiertem C₁-C₂₂-Alkyl, C₃-C₈-Cycloalkyl, substituiertem C₃-C₈-Cycloalkyl, Heteroaryl, Aryl, -Y₁-R₁ oder einer Succinimidogruppe der folgenden Formel gewählt wird 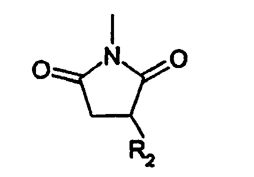
R₉ und R₁₀ unabhängig aus Wasserstoff, C₁-C₂₂-Alkyl, substituiertem C₁-C₂₂-Alkyl, C₃-C₈-Cycloalkyl und substituiertem C₃-C₈-Cycloalkyl gewählt werden; R₉ und R₁₀ zusammengefasst eine zweiwertige Gruppe unter Bildung eines Ringes mit dem Stickstoffatom, an welchem sie gebunden sind, repräsentieren können;
L₁ eine zweiwertige Verknüpfungsgruppe ist, die aus C₂-C₂₂-Alkylen; -(CH₂CH₂-Y₁)₁₋₃-CH₂CH₂-; C₃-C₈-Cycloalkylen; Arylen oder -CO-L₂-OC- gewählt wird;
L₂ von C₁-C₂₂-Alkylen; Arylen, -(CH₂CH₂-Y₁)₁₋₃-CH₂CH₂- und C₃-C₈-Cycloalkylen gewählt wird;
Y₁ aus -OC(O)-, -NHC(O)-, -O-, -S-, -N(R₁)- gewählt wird;
Y₂ aus -O- oder -N(R₁)- gewählt wird;
Z eine positive ganze Zahl von bis zu 20 ist;
m₁ aus 0 bis 10 gewählt wird;
n₁ eine positive ganze Zahl ist, die aus 2 bis 12 gewählt wird;
R₁₁ und R₁₂ unabhängig aus Wasserstoff, C₁-C₂₂-Alkyl, substituiertem C₁-C₂₂-Alkyl, C₃-C₈-Cycloalkyl, substituiertem C₃-C₈-Cycloalkyl, Heteroaryl, Aryl und dem Rest A gewählt werden, wobei der Rest A aus den folgenden Strukturen gewählt wird: 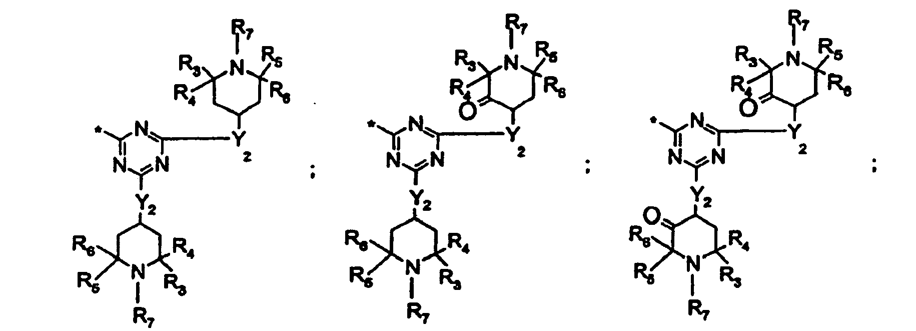 Rest-A-Strukturen, worin * für die Position der Anheftung steht
worin mindestens eines von R₁₁ und R₁₂ ebenfalls ein Rest A ist; worin das Additionssalz der Komponenten (A) und (B) gebildet wird;
und worin mindestens ein aromatisches Kohlenwasserstofflösungsmittel (II) aus Toluol, Xylol und Benzol gewählt wird;
(3) die Komponenten (A) und (B) anschließend unter Bildung einer homogenen Lösung des Additionssalzes gemischt werden; und
(4) die homogene Lösung von Schritt (3) anschließend mit einem nicht-polaren aliphatischen Kohlenwasserstofflösungsmittel (III) gemischt wird, sodass das Additionssalz der Komponenten (A) und (B) präzipitiert.

23. Verfahren gemäß Anspruch 22, wobei das Verhältnis der Anzahl von Phosphoratomen in der sauren, Phosphor enthaltenden Verbindung zu der Anzahl von basischen Stickstoffatomen in dem gehindertes-Amin-Lichtstabilisator 0,25 bis 2 beträgt.

24. Verfahren gemäß Anspruch 23, wobei das Verhältnis der Anzahl von Phosphoratomen in der sauren, Phosphor enthaltenden Verbindung zu der Anzahl von basischen Stickstoffatomen in dem gehindertes-Amin-Lichtstabilisator 0,50 bis 1,1 beträgt.

25. Verfahren gemäß Anspruch 22, wobei die polaren Lösungsmittel (I) aus Methanol und Isopropanol gewählt werden.

26. Verfahren gemäß Anspruch 22, wobei die saure, Phosphor enthaltende Verbindung in dem polaren Lösungsmittel (I) in einer Menge von 0,1 bis 50 Gew.-% vorliegt.

27. Verfahren gemäß Anspruch 26, wobei die saure, Phosphor enthaltende Verbindung in dem polaren Lösungsmittel (I) in einer Menge von 25 bis 35 Gew.-% vorliegt.

28. Verfahren gemäß Anspruch 22, wobei das aromatische Kohlenwasserstofflösungsmittel (II) aus der Gruppe gewählt wird, die aus Toluol, Xylol und Benzol besteht.

29. Verfahren gemäß Anspruch 22, wobei das nicht-polare aliphatische Kohlenwasserstofflösungsmittel (III) aus der Gruppe gewählt wird, die aus Pentan, Heptan, Hexan, Octan, Isooctan, Cyclobutan, Cyclopentan, Cyclohexan und 1,3-Dimethylcyclohexan besteht.

30. Verfahren gemäß Anspruch 29, wobei das aliphatische nicht-polare Lösungsmittel (III) aus Heptan, Hexan und Octan gewählt wird.

31. Verfahren gemäß Anspruch 30, wobei das aliphatische nicht-polare Lösungsmittel I(III) Heptan ist.

32. Verfahren gemäß Anspruch 22, wobei der gehindertes-Amin-Lichtstabilisator in dem aromatischen Kohlenwasserstofflösungsmittel (II) in einer Menge von 5 bis 45 Gew.-% vorliegt.

33. Verfahren gemäß Anspruch 32, wobei der gehindertes-Amin-Lichtstabilisator in dem aromatischen Kohlenwasserstofflösungsmittel (II) in einer Menge von 10 bis 30 Gew.-% vorliegt.

34. Verfahren gemäß Anspruch 22, wobei das aromatische Kohlenwasserstofflösungsmittel (II) mit dem gehindertes-Amin-Lichtstabilisator in einem Gewichtsverhältnis von gehindertem Amin-Lichtstabilisator zu aromatischem Kohlenwasserstofflösungsmittel von 1 : 20 bis 1 : 2,5 kombiniert wird.

35. Verfahren gemäß Anspruch 22, wobei das Gewichtsverhältnis von den (dem) polaren Lösungsmittel(n) (I) zu dem (den) aromatischen Kohlenwasserstofflösungsmittel(n) (II) 0,075 bis 1 beträgt.

36. Verfahren gemäß Anspruch 22, wobei der Gesamtgewichtsprozentwert des gebildeten Salzes 5 bis 30 Gew.-% beträgt, bezogen auf das kombinierte Gesamtgewicht von dem (den) polaren Lösungsmittel(n) (I), dem (den) aromatischen Kohlenwasserstofflösungsmittel(n) (II) und dem nicht-polaren aliphatischen Kohlenwasserstofflösungsmittel (III).

37. Verfahren gemäß Anspruch 22, wobei ein oder mehrere aliphatische nicht-polare Lösungsmittel (III) so hinzugesetzt wird/werden, dass der Gesamtgewichtsprozentwert vom Salz in der Lösungsmittelmischung geringer als 15 Gew.-% beträgt.

38. Verfahren gemäß Anspruch 22, ferner den Schritt des Isolierens des Additionssalzpräzipitates umfassend.

39. Verfahren gemäß Anspruch 22, wobei die Temperatur der Reaktion 15 °C bis 65 °C beträgt.

40. Verfahren zur Herstellung eines Additionssalzes aus mindestens einem gehindertem Amin-Lichtstabilisator und phosphoriger Säure, umfassend die folgenden Schritte:
(1) phosphorige Säure wird in mindestens einem polaren Lösungsmittel (I) gelöst, das aus Methanol und Isopropanol gewählt wird; und
(2) mindestens ein gehindertes-Amin-Lichtstabilisator wird in mindestens einem aromatischen Kohlenwasserstofflösungsmittel (II) gelöst, wobei der gehinderte Amin-Lichtstabilisator die folgende Formel besitzt: 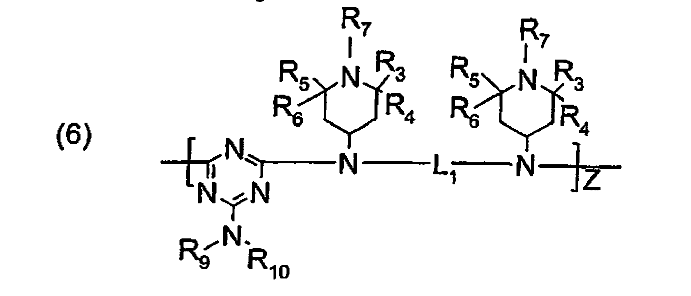 worin R₃ = R₄ = R₅ = R₆ = R₇ = Methyl sind, (R₃)(R₄)N- zusammengefasst für Morpholino stehen, L₁ C₁- bis C₆-Alkylen ist und Z 1 bis 6 ist;
worin mindestens ein aromatisches Kohlenwasserstofflösungsmittel (II) aus Toluol, Xylol und Benzol gewählt wird;
(3) die Komponenten (A) und (B) anschließend unter Bildung einer homogenen Lösung des Additionssalzes gemischt werden; und
(4) die homogene Lösung von Schritt (3) anschließend mit Heptan gemischt wird;
wobei das Additionssalz der Komponenten (A) und (B) präzipitiert.

41. Verfahren zur Herstellung eines Additionssalzes aus mindestens einem gehindertes-Amin-Lichtstabilisator und mindestens einer sauren, Phosphor enthaltenden Verbindung, umfassend den Schritt des Mischens, Mahlens und/oder Pulverisierens und anschließend des Schmelzextrudierens von Folgendem:
(A) mindestens einer sauren, Phosphor enthaltenden Verbindung, gewählt aus den Verbindungen der folgenden Formeln: 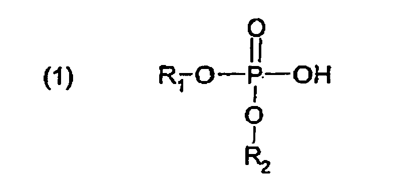 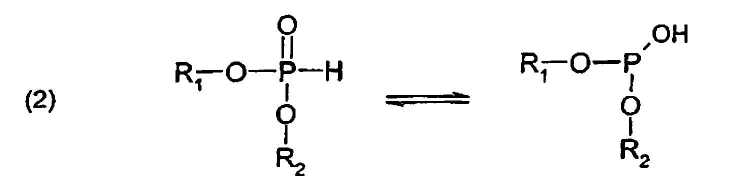 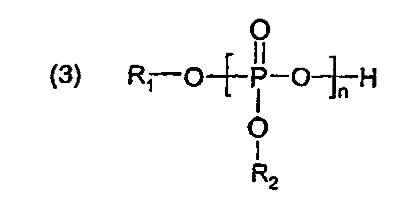 worin
R₁ und R₂ unabhängig aus Wasserstoff C₁-C₂₂-Alkyl, substituiertem C₁-C₂₂-Alkyl, C₃-C₈-Cycloalkyl, substituiertem C₃-C₈-Cycloalkyl, Heteroaryl und Aryl gewählt sind;
n 2 bis 500 ist; und
(B) mindestens einem gehindertes-Amin-Lichtstabilisator, gewählt von Verbindungen folgender Formeln: 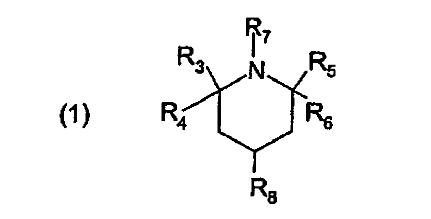 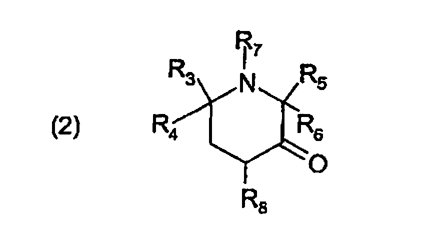 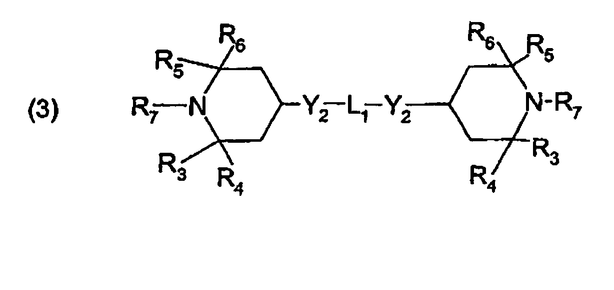 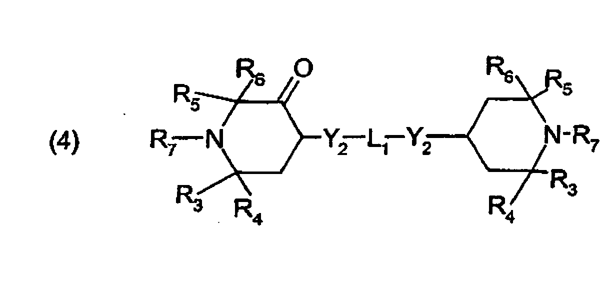 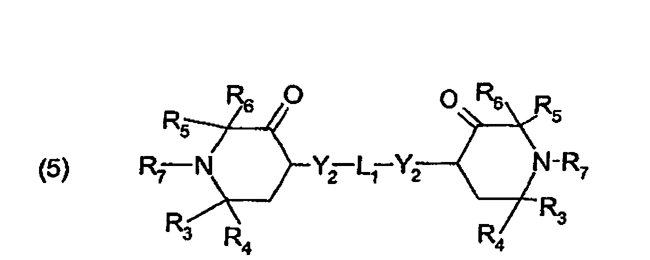 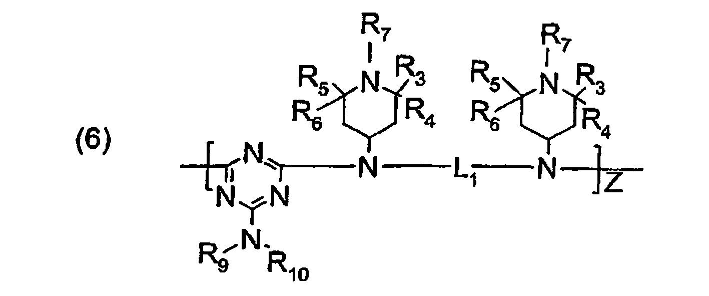 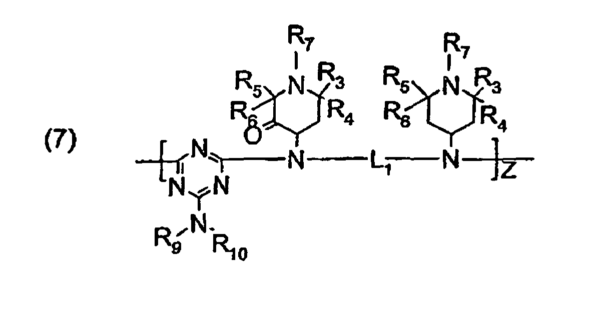 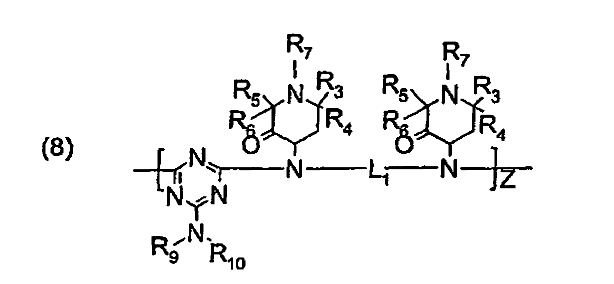 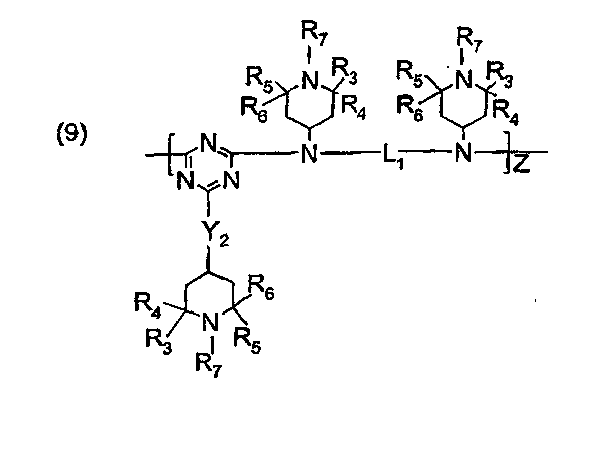 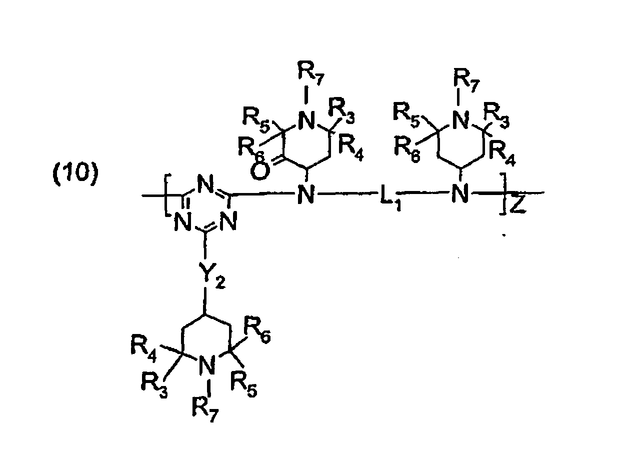 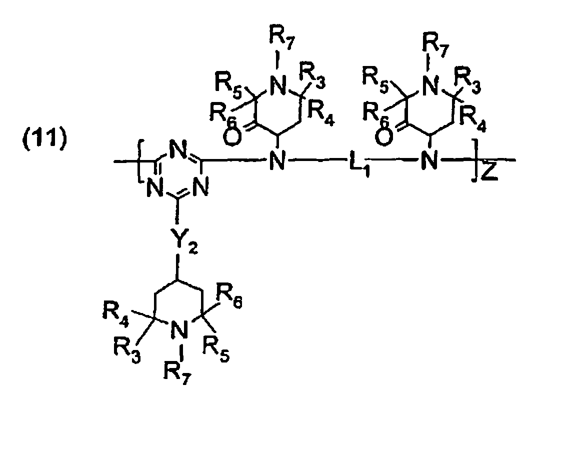 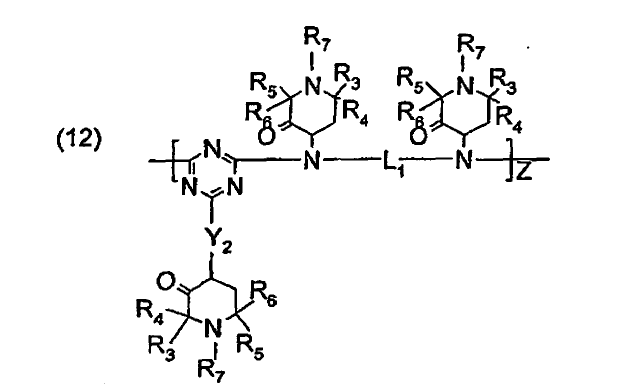 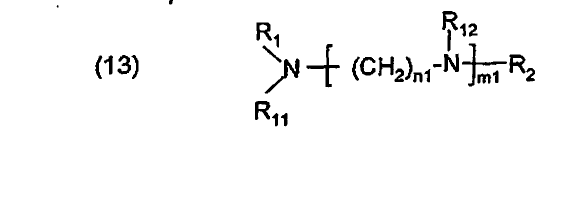 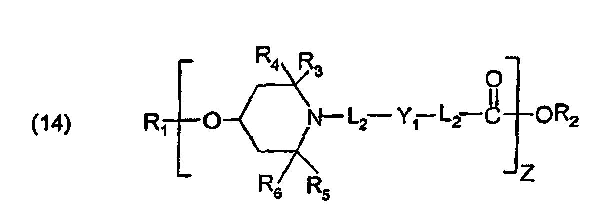 worin
R₃, R₄, R₅ und R₆ unabhängig aus Wasserstoff, C₁-C₂₂-Alkyl, substituiertem C₁-C₂₂-Alkyl, C₃-C₈-Cycloalkyl, substituiertem C₃-C₈-Cycloalkyl, Heteroaryl, Aryl gewählt werden;
R₇ aus Wasserstoff, -OR₆, C₁-C₂₂-Alkyl, substituiertem C₁-C₂₂-Alkyl, C₃-C₈-Cycloalkyl, substituiertem C₃-C₈-Cycloalkyl gewählt wird;
R₈ aus Wasserstoff; C₁-C₂₂-Alkyl, substituiertem C₁-C₂₂-Alkyl, C₃-C₈-Cycloalkyl, substituiertem C₃-C₈-Cycloalkyl, Heteroaryl, Aryl, -Y₁-R₁ oder einer Succinimidogruppe der folgenden Formel gewählt wird 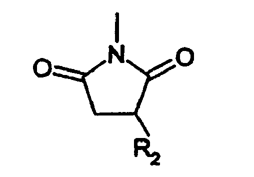
R₉ und R₁₀ unabhängig aus Wasserstoff, C₁-C₂₂-Alkyl, substituiertem C₁-C₂₂-Alkyl, C₃-C₈-Cycloalkyl und substituiertem C₃-C₈-Cycloalkyl gewählt werden; R₉ und R₁₀ zusammengefasst eine zweiwertige Gruppe unter Bildung eines Ringes mit dem Stickstoffatom, an welchem sie gebunden sind, repräsentieren können;
L₁ eine zweiwertige Verknüpfungsgruppe ist, die aus C₂-C₂₂-Alkylen; -(CH₂CH₂-Y₁)₁₋₃-CH₂CH₂-; C₃-C₈-Cycloalkylen; Arylen oder -CO-L₂-OC- gewählt wird;
L₂ von C₁-C₂₂-Alkylen; Arylen, -(CH₂CH₂-Y₁)₁₋₃-CH₂CH₂- und C₃-C₈-Cycloalkylen gewählt wird;
Y₁ aus -OC(O)-, -NHC(O)-, -O-, -S-, -N(R₁)- gewählt wird;
Y₂ aus -O- oder -N(R₁)- gewählt wird;
Z eine positive ganze Zahl von bis zu 20 ist;
m₁ aus 0 bis 10 gewählt wird;
n₁ eine positive ganze Zahl ist, die aus 2 bis 12 gewählt wird;
R₁₁ und R₁₂ unabhängig aus Wasserstoff, C₁-C₂₂-Alkyl, substituiertem C₁-C₂₂-Alkyl, C₃-C₈-Cycloalkyl, substituiertem C₃-C₈-Cycloalkyl, Heteroaryl, Aryl und dem Rest A gewählt werden, wobei der Rest A aus den folgenden Strukturen gewählt wird: 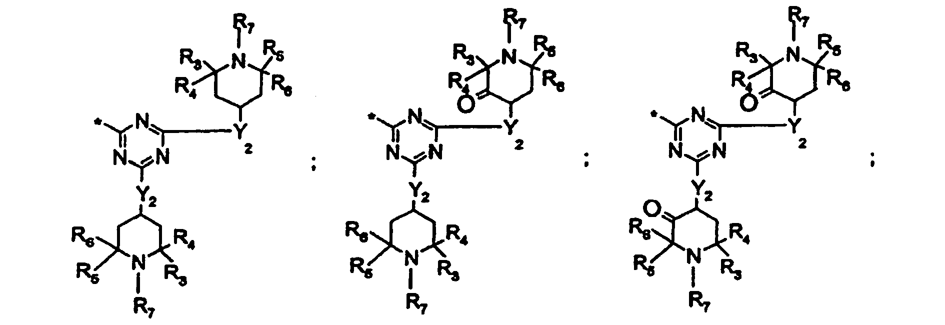 Rest-A-Strukturen, worin * für die Position der Anheftung steht
worin mindestens eines von R₁₁ und R₁₂ ebenfalls ein Rest A ist; und wobei das Verhältnis der Anzahl von Phosphoratomen in der sauren, Phosphor enthaltenden Verbindung zu der Anzahl von basischen Stickstoffatomen in dem HALS 0,5 bis 1,1 ist;
(C) einem Polymer, gewählt aus Polyestern und Polycarbonaten; und
wobei das Additionssalz der Komponenten (A) und (B) gebildet wird.

42. Verfahren gemäß Anspruch 41, wobei:
(A) die Phosphor enthaltende Verbindung phosphorige Säure ist; und
(B) der gehindertes-Amin-Lichtstabilisator die folgende Formel besitzt: 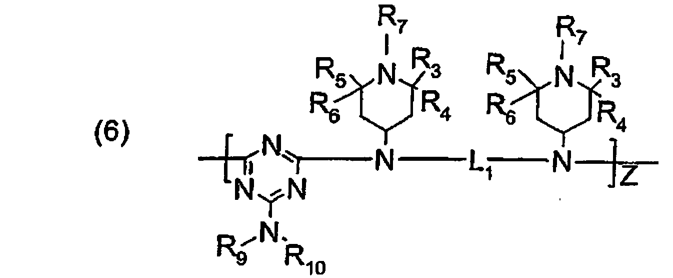 worin R₃ = R₄ = R₅ = R₆ = R₇ = Methyl sind, (R₃)(R₄)N- zusammengefasst für Morpholino stehen, L₁ C₁- bis C₆-Alkylen ist und Z 1 bis 6 ist;
(C) das Polymer ein Polyester ist.

43. Verfahren gemäß Anspruch 41, wobei das Verhältnis der Anzahl von Phosphoratomen in der sauren, Phosphor enthaltenden Verbindung zu der Anzahl von basischen Stickstoffatomen in dem gehindertes-Amin-Lichtstabilisator 0,25 bis 2 ist.

44. Verfahren gemäß Anspruch 41, wobei das Verhältnis der Anzahl von Phosphoratomen in der sauren, Phosphor enthaltenden Verbindung zu der Anzahl von basischen Stickstoffatomen in dem gehindertes-Amin-Lichtstabilisator 0,5 bis 1,1 beträgt.

45. Verfahren zur Herstellung eines Additionssalzes aus mindestens einem gehindertes-Amin-Lichtstabilisator und mindestens einer sauren, Phosphor enthaltenden Verbindung, umfassend die folgenden Schritte:
(1) die Komponente (A) wird in einem polaren Lösungsmittel (I) gelöst, und die Komponente (B) wird in einem nicht-polaren aliphatischen Kohlenwasserstofflösungsmittel (III), das mit dem polaren Lösungsmittel (I) nicht mischbar ist, gelöst;
(2) die Komponenten (A) und (B) werden zur Bildung einer zweiphasischen Mischung gemischt, wobei das Additionssalz in der polaren Lösungsmittelphase ist;
(3) die biphasische Mischung in zwei Lösungen vom Schritt 2 aufgetrennt wird;
(4) Einspeisen der polaren Lösung vom Schritt 3 zu einem Gefäß, das das nicht-polare Lösungsmittel von Schritt (3) enthält, und Verdampfen von polarem Lösungsmittel (I), wenn das polare Lösungsmittel vom Schritt 3 dem Gefäß hinzugesetzt wird, um eine Aufschlämmung des Salzes in dem nicht-polaren aliphatischen Kohlenwasserstofflösungsmittel (III) zu erzeugen;
wobei die Komponente (A) aus Verbindungen folgender Formeln gewählt wird: 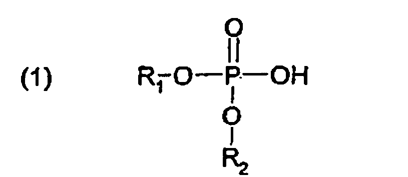 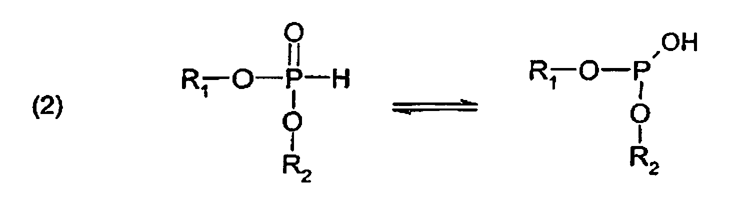 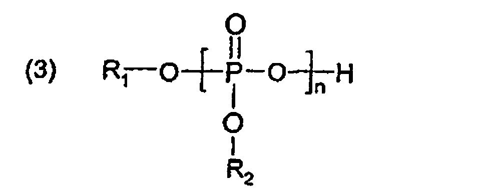 worin
R₁ und R₂ unabhängig aus Wasserstoff C₁-C₂₂-Alkyl, substituiertem C₁-C₂₂-Alkyl, C₃-C₈-Cycloalkyl, substituiertem C₃-C₈-Cycloalkyl, Heteroaryl und Aryl gewählt sind;
n 2 bis 500 ist; und
wobei die Komponente (B) von Verbindungen folgender Formeln gewählt wird: 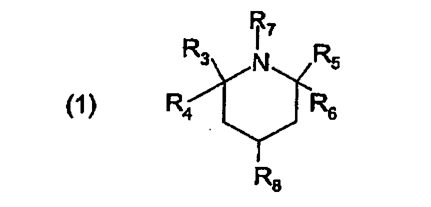 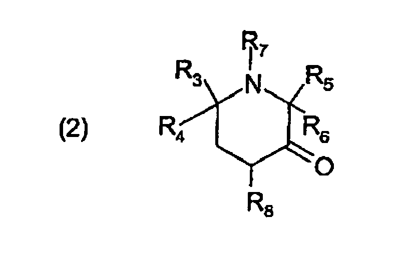 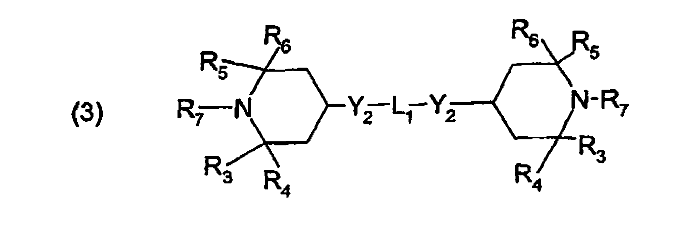 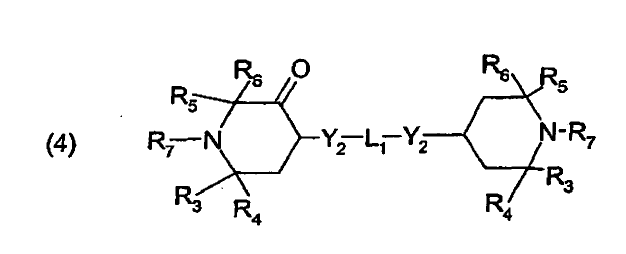 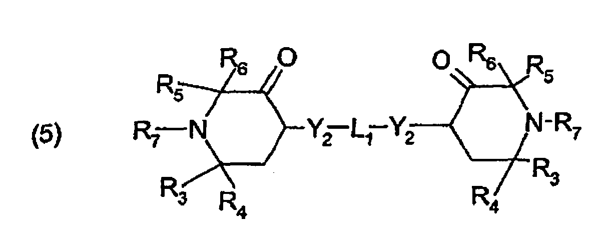 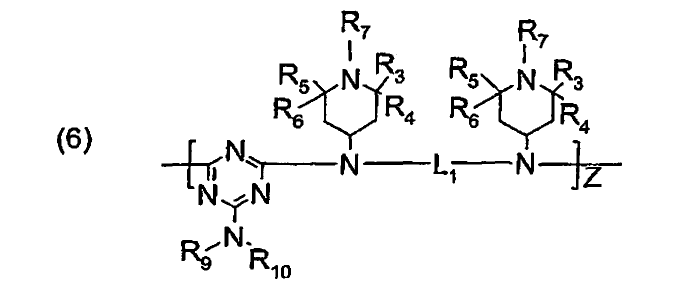 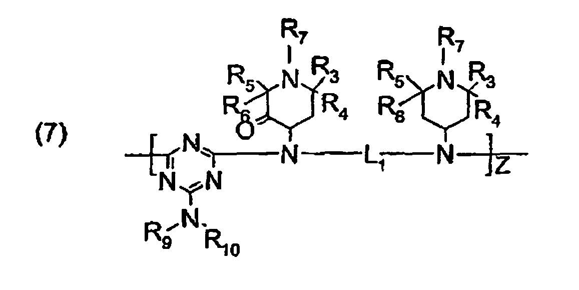 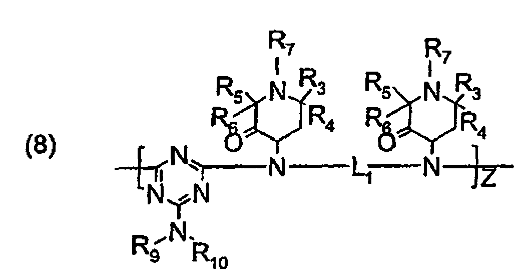 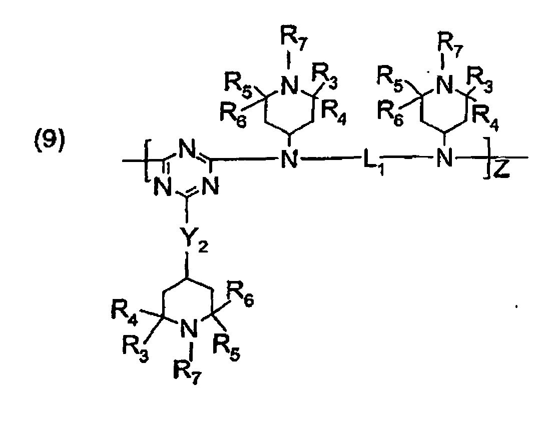 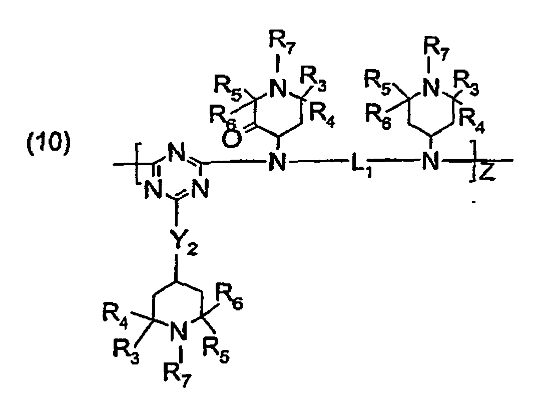 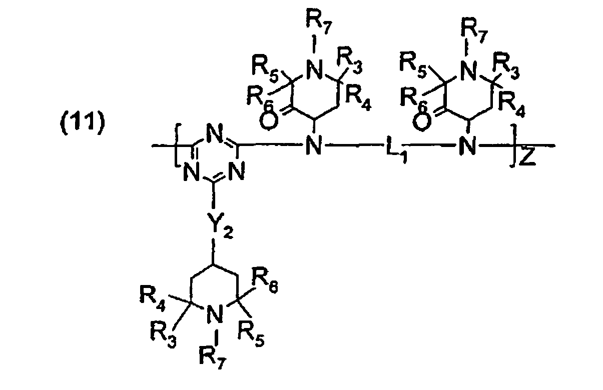 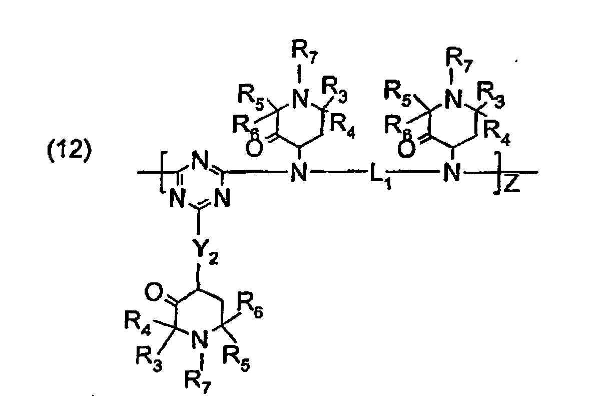 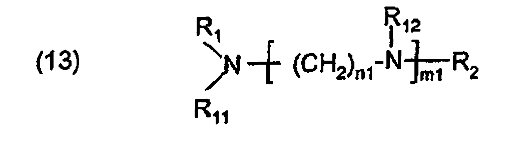 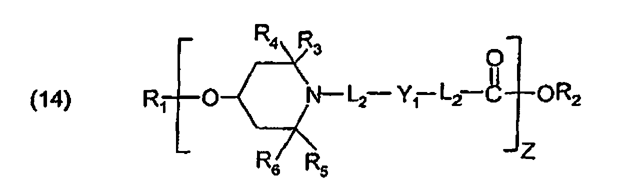
worin
R₁ und R₂ unabhängig aus Wasserstoff C₁-C₂₂-Alkyl, substituiertem C₁-C₂₂-Alkyl, C₃-C₈-Cycloalkyl, substituiertem C₃-C₈-Cycloalkyl, Heteroaryl und Aryl gewählt sind;
R₃, R₄, R₅ und R₆ unabhängig aus Wasserstoff, C₁-C₂₂-Alkyl, substituiertem C₁-C₂₂-Alkyl, C₃-C₈-Cycloalkyl, substituiertem C₃-C₈-Cycloalkyl, Heteroaryl, Aryl gewählt werden;
R₇ aus Wasserstoff, -OR₆, C₁-C₂₂-Alkyl, substituiertem C₁-C₂₂-Alkyl, C₃-C₈-Cycloalkyl, substituiertem C₃-C₈-Cycloalkyl gewählt wird;
R₈ aus Wasserstoff; C₁-C₂₂-Alkyl, substituiertem C₁-C₂₂-Alkyl, C₃-C₈-Cycloalkyl, substituiertem C₃-C₈-Cycloalkyl, Heteroaryl, Aryl, -Y₁-R₁ oder einer Succinimidogruppe der folgenden Formel gewählt wird 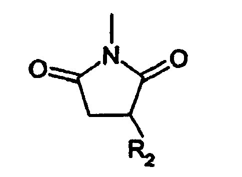
R₉ und R₁₀ unabhängig aus Wasserstoff, C₁-C₂₂-Alkyl, substituiertem C₁-C₂₂-Alkyl, C₃-C₈-Cycloalkyl und substituiertem C₃-C₈-Cycloalkyl gewählt werden; R₉ und R₁₀ zusammengefasst eine zweiwertige Gruppe unter Bildung eines Ringes mit dem Stickstoffatom, an welchem sie gebunden sind, repräsentieren;
L₁ eine zweiwertige Verknüpfungsgruppe ist, die aus C₂-C₂₂-Alkylen, -(CH₂CH₂-Y₁)₁₋₃-CH₂CH₂-; C₃-C₈-Cycloalkylen; Arylen oder -CO-L₂-OC- gewählt wird;
L₂ von C₁-C₂₂-Alkylen, Arylen, -(CH₂CH₂-Y₁)₁₋₃-CH₂CH₂- und C₃-C₈-Cycloalkylen gewählt wird;
Y₁ aus -OC(O)-, -NHC(O)-, -O-, -S-, -N(R₁)- gewählt wird;
Y₂ aus -O- oder -N(R₁)- gewählt wird;
Z eine positive ganze Zahl von bis zu 20 ist;
m₁ aus 0 bis 10 gewählt wird;
n₁ eine positive ganze Zahl ist, die aus 2 bis 12 gewählt wird;
R₁₁ und R₁₂ unabhängig aus Wasserstoff, C₁-C₂₂-Alkyl, substituiertem C₁-C₂₂-Alkyl, C₃-C₈-Cycloalkyl, substituiertem C₃-C₈-Cycloalkyl, Heteroaryl, Aryl und dem Rest A gewählt werden, wobei mindestens eines von R₁₁ und R₁₂ ebenfalls ein Rest A ist, der aus den folgenden Strukturen gewählt wird: 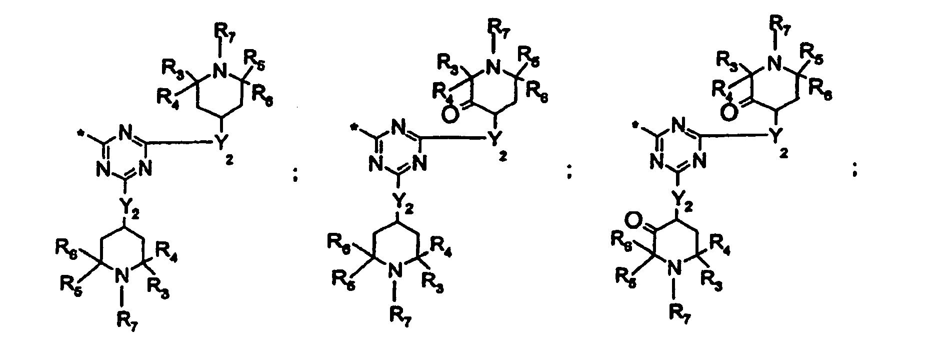 Rest-A-Strukturen, worin * für die Position der Anheftung steht
wobei das Additionssalz der Komponenten (A) und (B) gebildet wird.

46. Verfahren gemäß Anspruch 45, wobei die saure, Phosphor enthaltende Verbindung phosphorige Säure ist und das Verhältnis der Anzahl von Phosphoratomen in der phosphorigen Säure zu der Anzahl von basischen Stickstoffatomen in dem gehindertes-Amin-Lichtstabilisator 0,25 bis 2 ist.

47. Verfahren gemäß Anspruch 46, wobei das Verhältnis der Anzahl von Phosphoratomen in der sauren, Phosphor enthaltenden Verbindung zu der Anzahl von basischen Stickstoffatomen in dem gehindertes-Amin-Lichtstabilisator 0,50 bis 1,1 beträgt.

48. Verfahren gemäß Anspruch 45, worin:
(A) die saure, Phosphor enthaltende Verbindung phosphorige Säure ist, welche in mindestens einem polaren Lösungmittel (I), gewählt aus Methanol und Isopropanol, gelöst wird; und
(B) der gehindertes-Amin-Lichtstabilisator in Heptan gelöst wird und die folgende Formel besitzt: 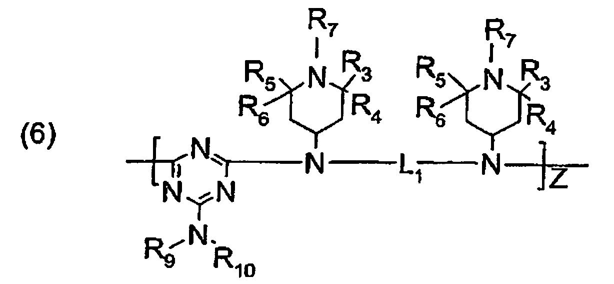
worin R₃ = R₄ = R₅ = R₆ = R₇ = Methyl sind, (R₃)(R₄)N- zusammengefasst für Morpholino stehen, L₁ C₁- bis C₆-Alkylen ist und Z 1 bis 6 ist.

49. Verfahren gemäß Anspruch 48, wobei das polare Lösungsmittel (I) Methanol ist.

50. Verfahren gemäß Anspruch 45, wobei die saure, Phosphor enthaltende Verbindung in dem polaren Lösungsmittel (I) in einer Menge von 10 bis 50 Gewichtsprozent vorliegt.

51. Verfahren gemäß Anspruch 50, wobei die saure, Phosphor enthaltende Verbindung in dem polaren Lösungsmittel (I) in einer Menge von 25 bis 35 Gewichtsprozent vorliegt.

52. Verfahren gemäß Anspruch 45, wobei das nicht-polare aliphatische Kohlenwasserstofflösungsmittel (III) aus der Gruppe gewählt wird, die aus Pentan, Heptan, Hexan, Octan, Isooctan, Kohlenstofftetrachlorid, Chloroform, Methylenchlorid, Cyclobutan, Cyclopentan, Cyclohexan und 1,3-Dimethylcyclohexan besteht.

53. Verfahren gemäß Anspruch 52, wobei das aliphatische nicht-polare Lösungsmittel (III) aus Heptan, Octan und Hexan gewählt wird.

54. Verfahren gemäß Anspruch 53, wobei das nicht-polare aliphatische Kohlenwasserstofflösungsmittel (III) Heptan ist.

55. Verfahren gemäß Anspruch 53, wobei der Gesamtgewichtsprozentwert an Salz in der gesamten Lösungsmittelmischung von Schritt (3) zwischen 5 und 30 Gewichtsprozent liegt.

56. Verfahren zur Herstellung eines Additionssalzes von mindestens einem gehindertes-Amin-Lichtstabilisator und mindestens einer sauren, Phosphor enthaltenden Verbindung, umfassend die folgenden Schritte:
(1) mindestens eine saure, Phosphor enthaltende Verbindung (Komponente A) und mindestens ein gehindertes-Amin-Lichtstabilisator (Komponente B) wird in einem polaren Lösungsmittel gemischt, bis eine homogene Lösung erhalten wird:
(2) das Säureadditionssalz wird durch das Verfahren der Sprühtrocknung isoliert;
wobei die Komponente (A) aus Verbindungen der folgenden Formeln gewählt wird: 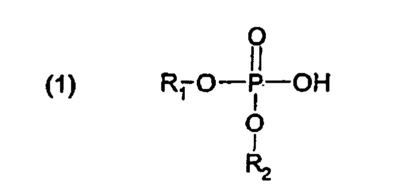 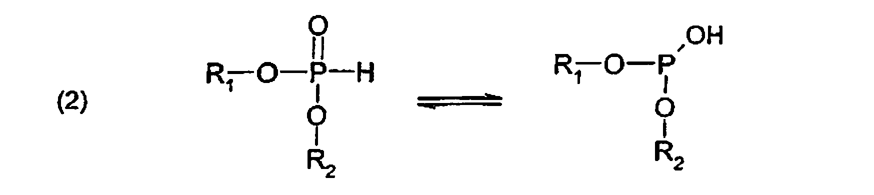 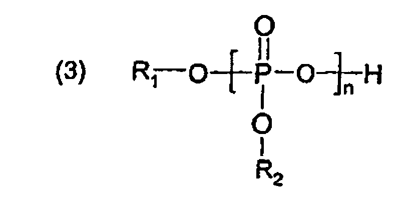 worin
R₁ und R₂ unabhängig aus Wasserstoff C₁-C₂₂-Alkyl, substituiertem C₁-C₂₂-Alkyl, C₃-C₈-Cycloalkyl, substituiertem C₃-C₈-Cycloalkyl, Heteroaryl und Aryl gewählt sind;
n 2 bis 500 ist; und
wobei die Komponente (B) von Verbindungen folgender Formeln gewählt wird: 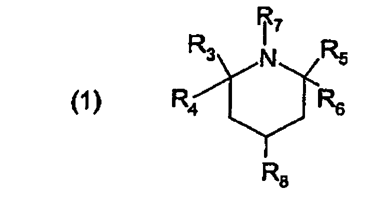 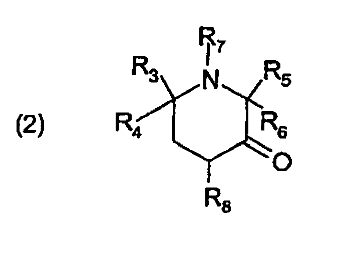 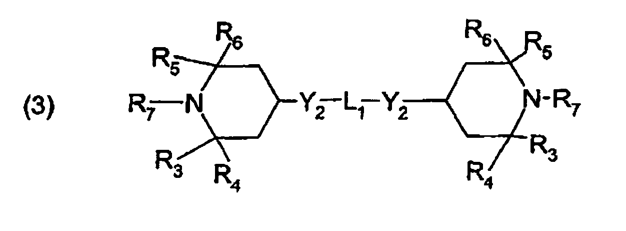 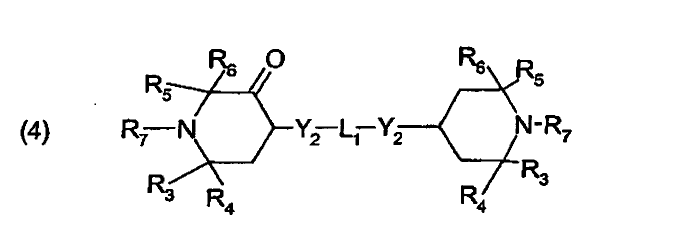 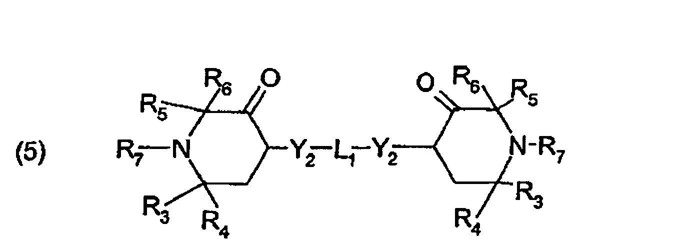 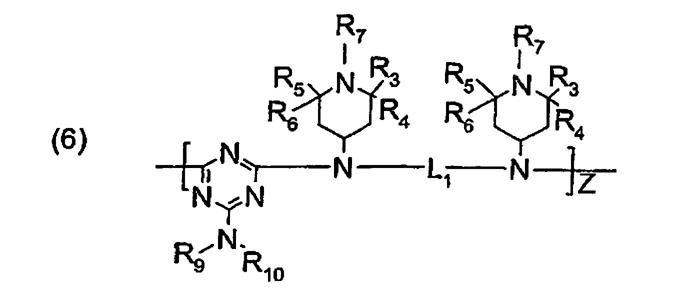 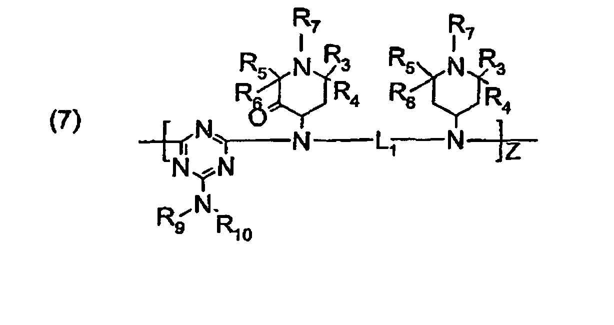 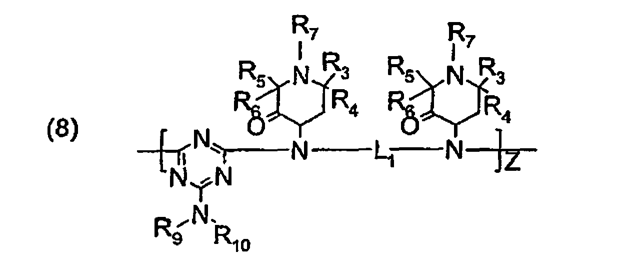 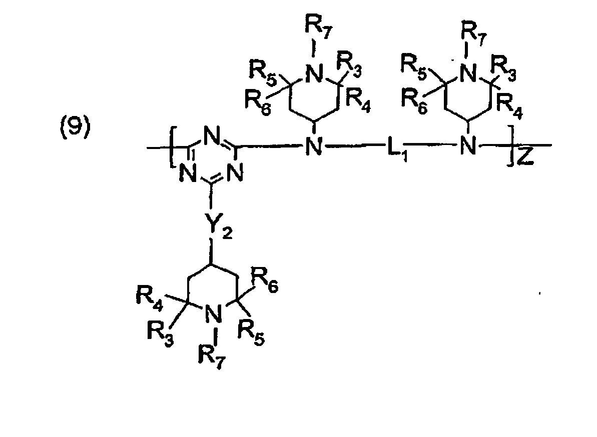 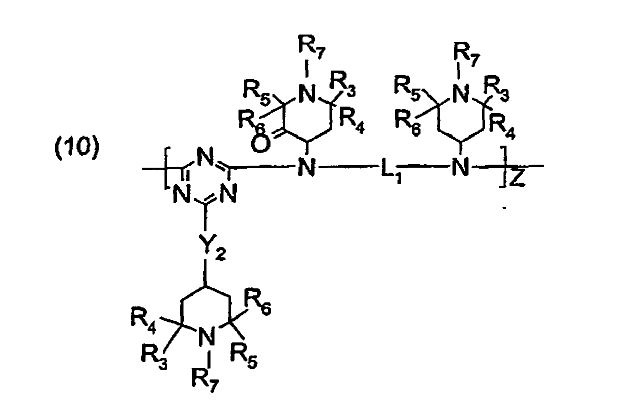 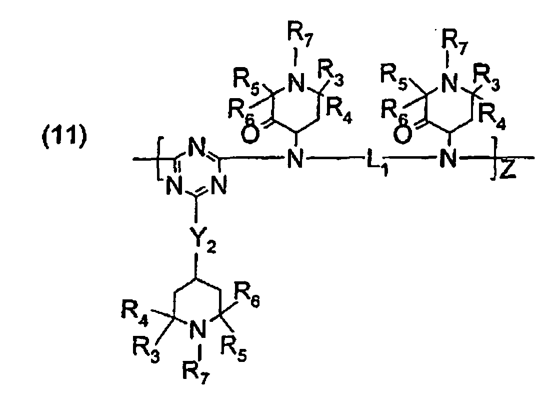 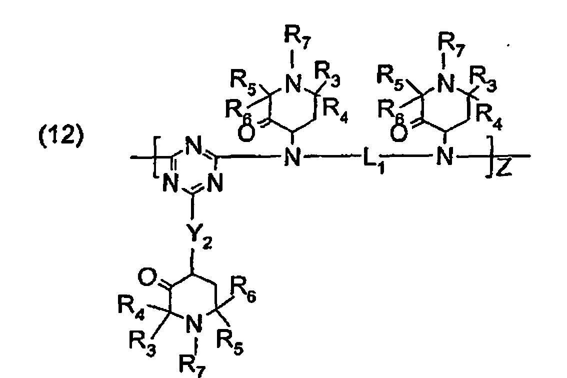 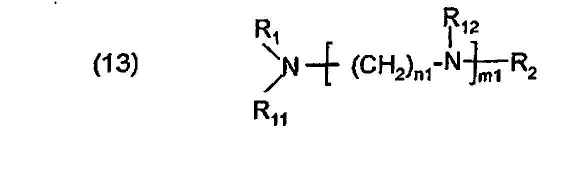 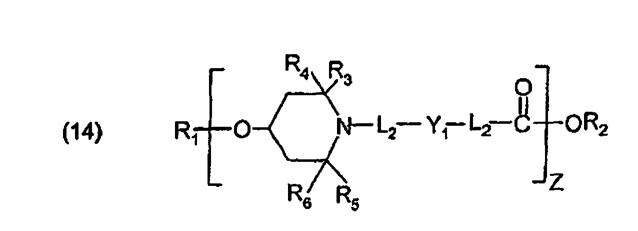
worin
R₁ und R₂ unabhängig aus Wasserstoff C₁-C₂₂-Alkyl, substituiertem C₁-C₂₂-Alkyl, C₃-C₈-Cycloalkyl, substituiertem C₃-C₈-Cycloalkyl, Heteroaryl und Aryl gewählt sind;
R₃, R₄, R₅ und R₆ unabhängig aus Wasserstoff, C₁-C₂₂-Alkyl, substituiertem C₁-C₂₂-Alkyl, C₃-C₈-Cycloalkyl, substituiertem C₃-C₈-Cycloalkyl, Heteroaryl, Aryl gewählt werden;
R₇ aus Wasserstoff, -OR₆, C₁-C₂₂-Alkyl, substituiertem C₁-C₂₂-Alkyl, C₃-C₈-Cycloalkyl, substituiertem C₃-C₈-Cycloalkyl gewählt wird;
R₈ aus Wasserstoff; C₁-C₂₂-Alkyl, substituiertem C₁-C₂₂-Alkyl, C₃-C₈-Cycloalkyl, substituiertem C₃-C₈-Cycloalkyl, Heteroaryl, Aryl, -Y₁-R₁ oder einer Succinimidogruppe der folgenden Formel gewählt wird 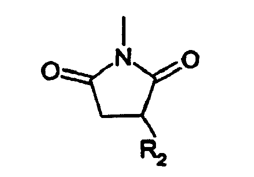
R₉ und R₁₀ unabhängig aus Wasserstoff, C₁-C₂₂-Alkyl, substituiertem C₁-C₂₂-Alkyl, C₃-C₈-Cycloalkyl und substituiertem C₃-C₈-Cycloalkyl gewählt werden; R₉ und R₁₀ zusammengefasst eine zweiwertige Gruppe unter Bildung eines Ringes mit dem Stickstoffatom, an welchem sie gebunden sind, repräsentieren;
L₁ eine zweiwertige Verknüpfungsgruppe ist, die aus C₂-C₂₂-Alkylen, -(CH₂CH₂-Y₁)₁₋₃-CH₂CH₂-; C₃-C₈-Cycloalkylen; Arylen oder -CO-L₂-OC- gewählt wird;
L₂ von C₁-C₂₂-Alkylen, Arylen, -(CH₂CH₂-Y₁)₁₋₃-CH₂CH₂- und C₃-C₈-Cycloalkylen gewählt wird;
Y₁ aus -OC(O)-, -NHC(O)-, -O-, -S-, -N(R₁)- gewählt wird;
Y₂ aus -O- oder -N(R₁)- gewählt wird;
Z eine positive ganze Zahl von bis zu 20 ist;
m₁ aus 0 bis 10 gewählt wird;
n₁ eine positive ganze Zahl ist, die aus 2 bis 12 gewählt wird;
R₁₁ und R₁₂ unabhängig aus Wasserstoff, C₁-C₂₂-Alkyl, substituiertem C₁-C₂₂-Alkyl, C₃-C₈-Cycloalkyl, substituiertem C₃-C₈-Cycloalkyl, Heteroaryl, Aryl und dem Rest A gewählt werden, wobei mindestens eines von R₁₁ und R₁₂ ebenfalls ein Rest A ist, der aus den folgenden Strukturen gewählt wird: 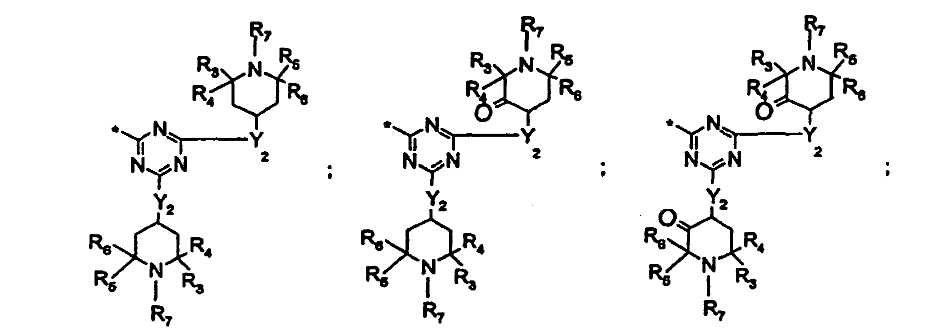 Rest-A-Strukturen, worin * für die Position der Anheftung steht;
wobei das Additionssalz der Komponenten (A) und (B) gebildet wird.

57. Verfahren gemäß Anspruch 56, wobei die saure, Phosphor enthaltende Verbindung phosphorige Säure ist.

58. Verfahren gemäß Anspruch 57, wobei der gehindertes-Amin-Lichtstabilisator aus folgender Formel gewählt wird: 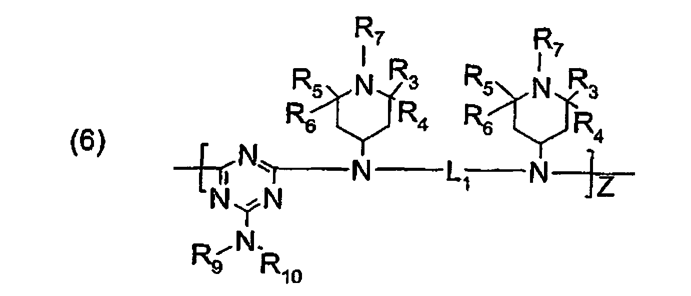 worin R₃ = R₄ = R₅ = R₆ = R₇ = Methyl sind, (R₃)(R₄)N- zusammengefasst für Morpholino stehen, L₁ C₁- bis C₆-Alkylen ist und Z 1 bis 6 ist.

59. Verfahren gemäß Anspruch 58, wobei das polare Lösungsmittel Methanol oder Wasser ist.

60. Verfahren gemäß Anspruch 59, wobei der gehindertes-Amin-Lichtstabilisator und die phosphorige Säure 1 bis 30 Gew.-% der Lösung, bezogen auf das Gewicht, ausmachen.

61. Verfahren gemäß Anspruch 1, wobei der mindestens eine gehindertes-Amin-Lichtstabilisator 1,3,5-Triazin-2,4,6-triamin-N,N'-1,2-ethan-diyl-bis[[[4,6-bis-[butyl-1,2,2,6,6-pentamethyl-4-piperidinyl)amino]-1,3,5-triazin-2-yl]amino]-3,1-propandiyl]]bis[N,N"-dibutyl-N,N"-bis-(1,2,2,6,6-pentamethyl-4-piperidinyl)- ist.

## Revendications

1. Procédé de préparation d'un sel d'addition d'au moins un stabilisant à la lumière de type amine encombrée et d'au moins un composé acide contenant du phosphore comprenant l'étape de combinaison des éléments suivants :
(A) au moins un composé acide contenant du phosphore choisi parmi les composés répondant aux formules : 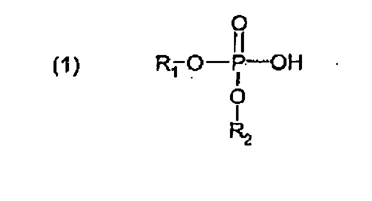 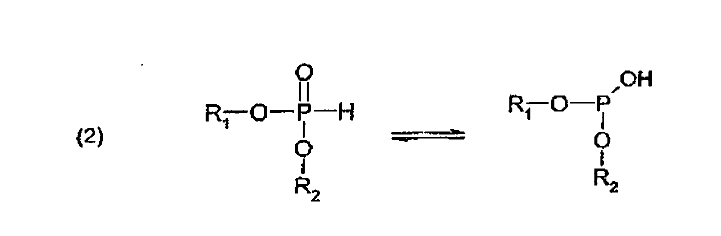 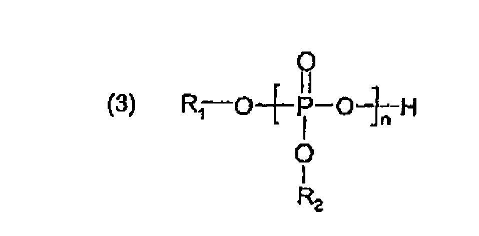 dans lesquelles
R₁ et R₂ sont choisis indépendamment parmi un atome d'hydrogène, un groupe alkyle en C₁-C₂₂, alkyle substitué en C₁-C₂₂, cycloalkyle en C₃-C₈, cycloalkyle substitué en C₃-C₈, hétéroaryle et aryle ;
n vaut 2 à 500 ; et
(B) au moins un stabilisant à la lumière de type amine encombrée choisi parmi les composés répondant aux formules : 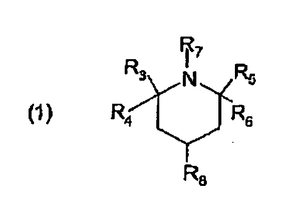 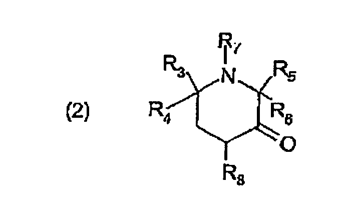 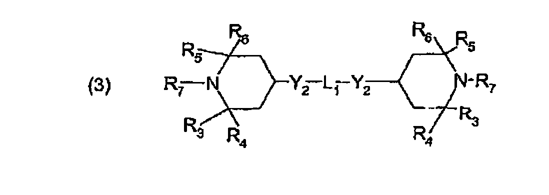 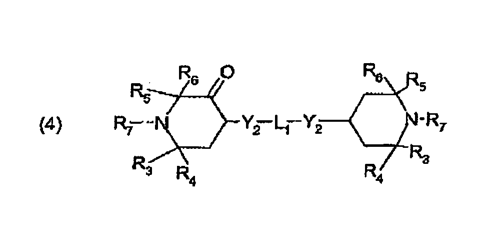 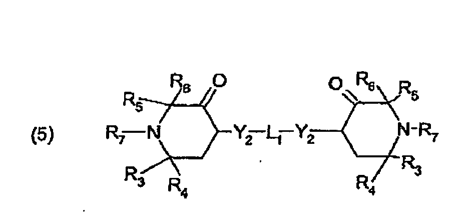 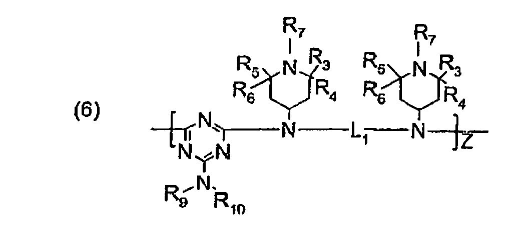 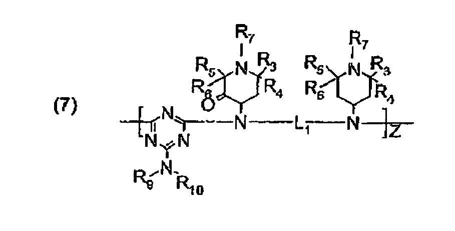 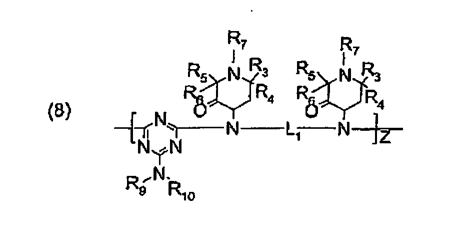 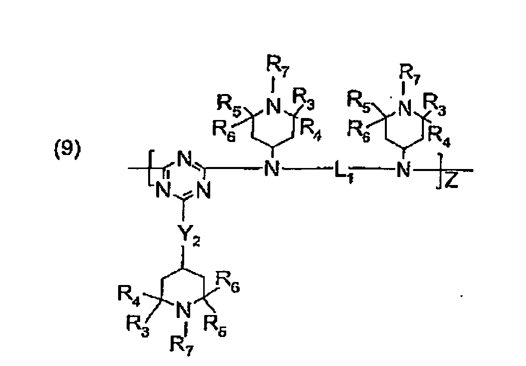 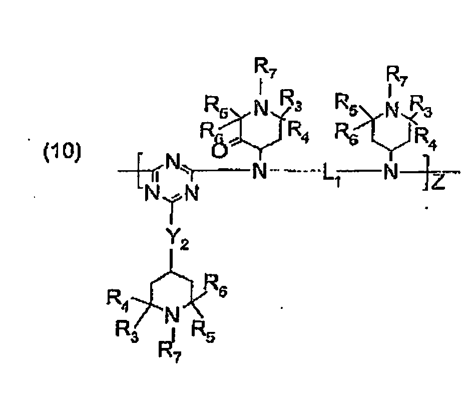 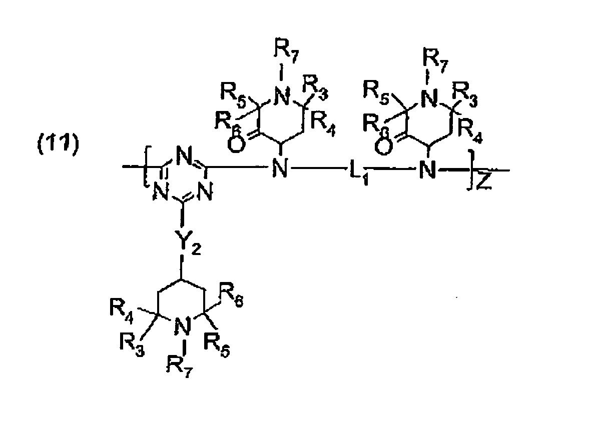 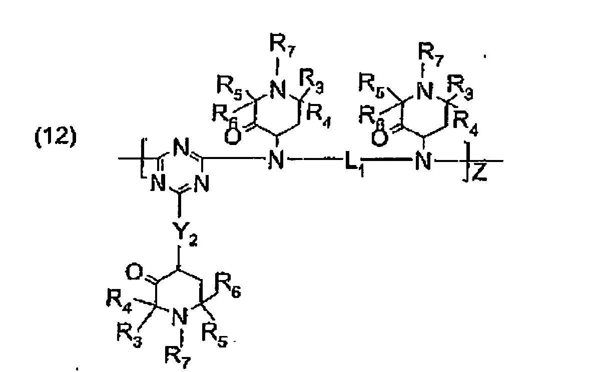 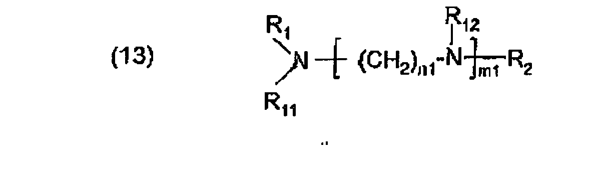 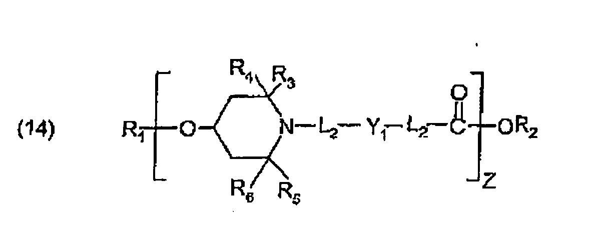
dans lesquelles
R₃, R₄, R₅ et R₆ sont choisis indépendamment parmi un atome d'hydrogène, un groupe alkyle en C₁-C₂₂, alkyle substitué en C₁-C₂₂, cycloalkyle en C₃-C₈, cycloalkyle substitué en C₃-C₈, hétéroaryle et aryle ;
R₇ est choisi parmi un atome d'hydrogène, -OR₆, un groupe alkyle en C₁-C₂₂, alkyle substitué en C₁-C₂₂, cycloalkyle en C₃-C₈, cycloalkyle substitué en C₃-C₈ ;
R₈ est choisi parmi un atome d'hydrogène, un groupe alkyle en C₁-C₂₂, alkyle substitué en C₁-C₂₂, cycloalkyle en C₃-C₈, cycloalkyle substitué en C₃-C₈, hétéroaryle, aryle, -OC(O)-R₁, -NHC(O)-R₁, -S-R₁, -N(R₁)-R₁ ou un groupe succinimido répondant à la formule : 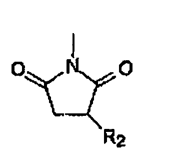
R₉ et R₁₀ sont choisis indépendamment parmi un atome d'hydrogène, un groupe alkyle en C₁-C₂₂, alkyle substitué en C₁-C₂₂, cycloalkyle en C₃-C₈et cycloalkyle substitué en C₃-C₈; R₉ et R₁₀ peuvent collectivement représenter un groupe divalent formant un cycle avec l'atome d'azote auquel ils sont liés ;
L₁ est un groupe de liaison divalent choisi parmi -(CH₂CH₂-Y₁)₁₋₃-CH₂CH₂- ; cycloalkylène en C₃-C₈ ; arylène ou -CO-L₂-OC- ;
L₂ est choisi parmi un groupe arylène, -(CH₂CH₂-Y₁)₁₋₃-CH₂CH₂- et cycloalkylène en C₃-C₈ ;
Y₁ est choisi parmi -OC(O)-, -NHC(O)-, -O-, -S-, -N(R₁)- ;
Y₂ est choisi parmi -O- ou -N(R₁)- ;
Z est un nombre entier positif valant jusqu'à 20 ;
m₁ vaut de 0 à 10 ;
n₁ est un nombre entier positif de 2 à 12 ;
R₁₁ et R₁₂ sont choisis indépendamment parmi un atome d'hydrogène, un groupe alkyle en C₁-C₂₂, alkyle substitué en C₁-C₂₂, cycloalkyle en C₃-C₈, cycloalkyle substitué en C₃-C₈, hétéroaryle et aryle, et un radical A où le radical A est choisi parmi les structures suivantes : 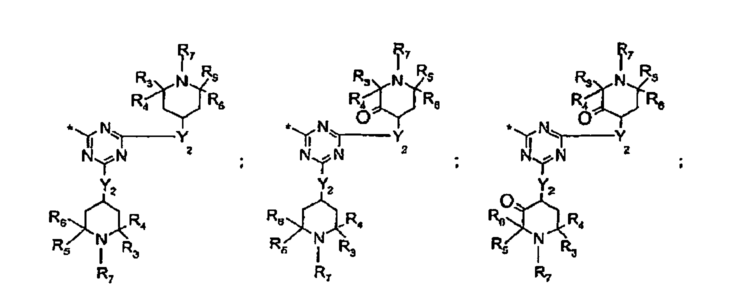 des structures de radical A dans lesquelles * désigne la position de fixation ;
où l'un au moins de R₁₁ et R₁₂ est aussi un radical A ; et où le rapport du nombre d'atomes de phosphore dans le composé acide contenant du phosphore au nombre d'atomes d'azote basiques dans le HALS est de 0,25 à 2 ; où le sel d'addition des composants (A) et (B) est formé.

2. Procédé selon la revendication 1, dans lequel le rapport du nombre d'atomes de phosphore dans le composé acide contenant du phosphore au nombre d'atomes d'azote basiques dans le stabilisant à la lumière de type amine encombrée est de 0,25 à 2.

3. Procédé selon la revendication 2, dans lequel le rapport du nombre d'atomes de phosphore dans le composé acide contenant du phosphore au nombre d'atomes d'azote basiques dans le stabilisant à la lumière de type amine encombrée est de 0,5 à 1,1.

4. Procédé selon la revendication 1 comprenant les étapes suivantes :
(1) au moins un composé acide contenant du phosphore (composant A) est dissous dans un solvant polaire (I) ;
(2) au moins un stabilisant à la lumière de type amine encombrée (composé B) est dissous séparément dans un solvant hydrocarboné aromatique (II) ; et, par la suite,
(3) les composants (A) et (B) sont mélangés pour former une solution homogène du sel d'addition.

5. Procédé selon la revendication 4 comprenant de plus une étape 4 dans laquelle la solution homogène de l'étape 3 est par la suite ensuite mélangée avec un solvant non polaire aliphatique (III), de sorte que le sel d'addition précipite.

6. Procédé selon la revendication 4, dans lequel le solvant polaire (I) est un ou plusieurs solvants organiques polaires ayant une constante diélectrique supérieure à 3,0 à 298 °K.

7. Procédé selon la revendication 6, dans lequel lesdits solvants polaires (I) sont choisis parmi un ou plusieurs éléments du groupe constitué par le méthanol, l'éthanol, le n-propanol, l'isopropanol, le n-butanol, le t-butanol, l'isobutanol, le 2-butanol, le n-hexanol et l'octanol.

8. Procédé selon la revendication 7, dans lequel lesdits solvants polaires (I) sont choisis parmi le méthanol et l'isopropanol.

9. Procédé selon la revendication 4, dans lequel le composé acide contenant du phosphore est présent dans le solvant polaire (I) dans une quantité de 0,1 à 50 pour cent en poids.

10. Procédé selon la revendication 9, dans lequel le composé acide contenant du phosphore est présent dans le solvant polaire (I) dans une quantité de 25 à 35 pour cent en poids.

11. Procédé selon la revendication 4, dans lequel le solvant hydrocarboné aromatique (II) est choisi dans le groupe constitué par le toluène, le xylène et le benzène.

12. Procédé selon la revendication 5, dans lequel le solvant aliphatique non polaire (III) est choisi dans le groupe constitué par le pentane, l'heptane, l'hexane, l'octane, l'iso-octane, le tétrachlorure de carbone, le chloroforme, le chlorure de méthylène, le cyclobutane, le cyclopentane, le cyclohexane et le 1,3-diméthylcyclohexane.

13. Procédé selon la revendication 12, dans lequel le solvant aliphatique non polaire (III) est choisi parmi l'heptane, l'hexane et l'octane.

14. Procédé selon la revendication 13, dans lequel le solvant aliphatique non polaire (III) est l'heptane.

15. Procédé selon la revendication 4, dans lequel le stabilisant à la lumière de type amine encombrée est présent dans le solvant hydrocarboné aromatique (II) dans une quantité de 0,1 à 45 pour cent en poids.

16. Procédé selon la revendication 15, dans lequel le stabilisant à la lumière de type amine encombrée est présent dans le solvant hydrocarboné aromatique (II) dans une quantité de 10 à 30 pour cent en poids.

17. Procédé selon la revendication 4, dans lequel le solvant hydrocarboné aromatique (II) est combiné avec le stabilisant à la lumière de type amine encombrée dans un rapport en poids du stabilisant à la lumière de type amine encombrée au solvant hydrocarboné aromatique de 1:5 à 1:20.

18. Procédé selon la revendication 4, dans lequel le rapport en poids du ou des solvants polaires (I) au ou aux solvants hydrocarbonés aromatiques (II) est de 0,075 à 1.

19. Procédé selon la revendication 4, dans lequel le pourcentage en poids total du sel formé est de 0,1 à 30 pour cent en poids, par rapport au poids total combiné du ou des solvants polaires (I) et du ou des solvants hydrocarbonés aromatiques (II).

20. Procédé selon la revendication 5, dans lequel le au moins un solvant aliphatique non polaire (III) est ajouté de telle sorte que le pourcentage en poids total du sel dans le mélange de solvants soit inférieur à 15 pour cent en poids, par rapport au poids total de la composition.

21. Procédé selon la revendication 5, comprenant en outre l'étape d'isolement du précipité du sel d'addition.

22. Procédé de préparation d'un sel d'addition d'au moins un stabilisant à la lumière de type amine encombrée et d'au moins un composé acide contenant du phosphore comprenant les étapes suivantes :
(1) le composé acide contenant du phosphore est de l'acide phosphoreux qui est dissous dans au moins un solvant polaire (I), ou le solvant polaire (I) est choisi parmi le méthanol, l'éthanol, le n-propanol, l'isopropanol, le n-butanol, le t-butanol, l'isobutanol, le 2-butanol, le n-hexanol et l'octanol ;
(2) au moins un stabilisant à la lumière de type amine encombrée est dissous dans au moins un solvant hydrocarboné aromatique (II), où le au moins un stabilisant à la lumière de type amine encombrée est choisi parmi les composés répondant aux formules : 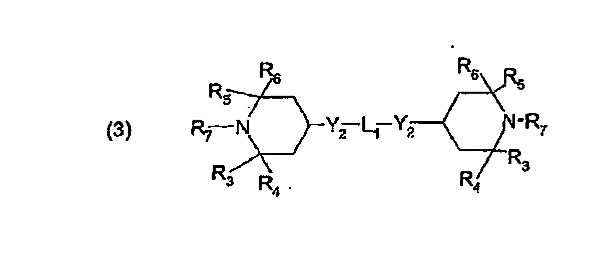 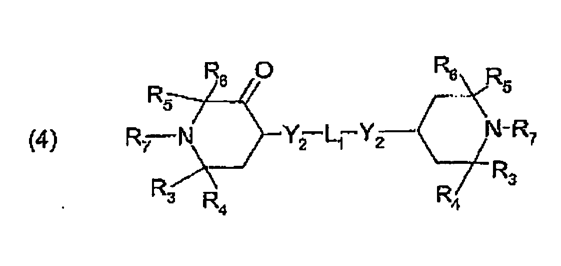 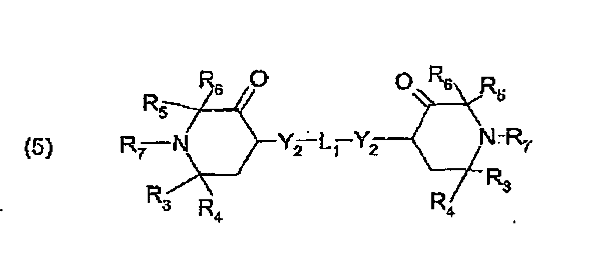 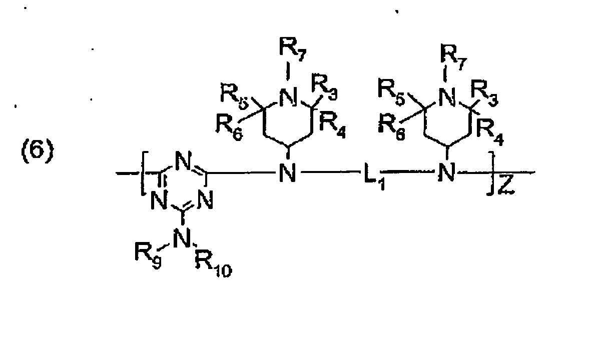 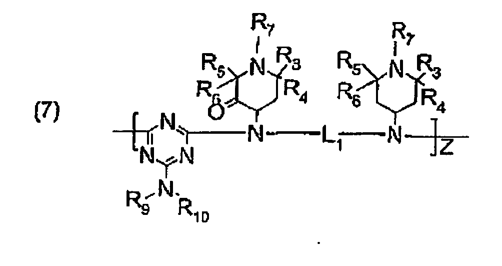 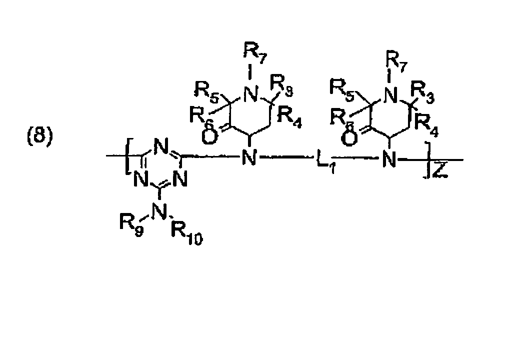 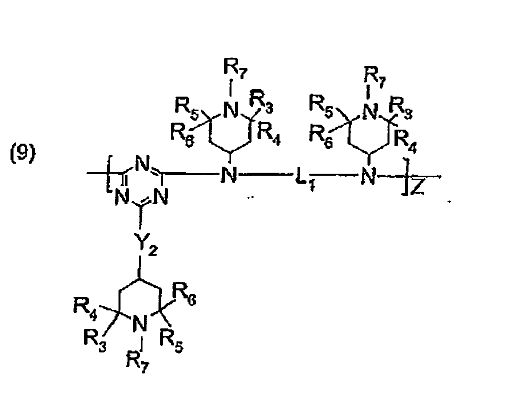 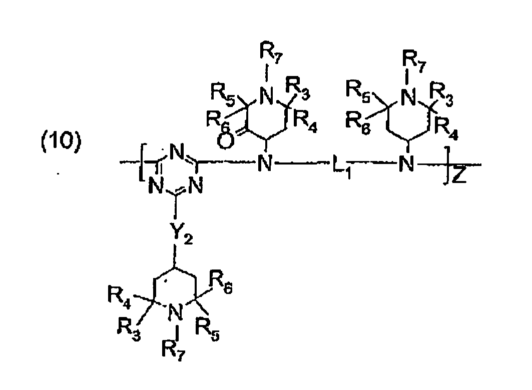 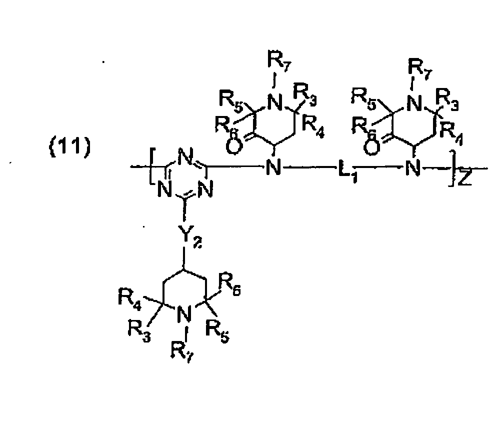 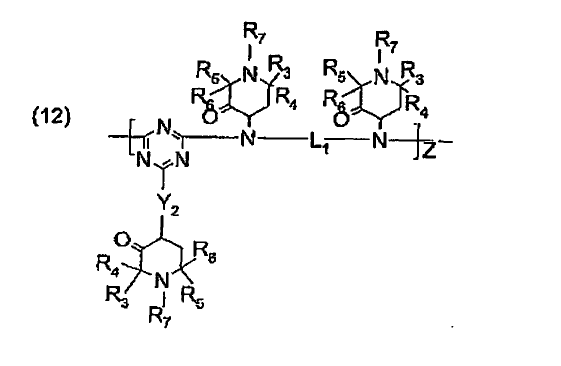 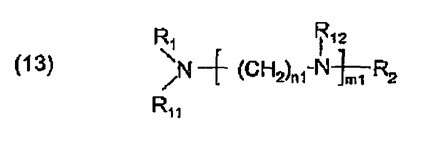 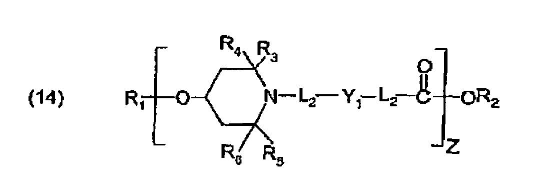 dans lesquelles :
R₁ et R₂ sont choisis indépendamment parmi un atome d'hydrogène, un groupe alkyle en C₁-C₂₂, alkyle substitué en C₁-C₂₂, cycloalkyle en C₃-C₈, cycloalkyle substitué en C₃-C₈, hétéroaryle et aryle ;
R₃, R₄, R₅ et R₆ sont choisis indépendamment parmi un atome d'hydrogène, un groupe alkyle en C₁-C₂₂, alkyle substitué en C₁-C₂₂, cycloalkyle en C₃-C₈, cycloalkyle substitué en C₃-C₈, hétéroaryle et aryle ;
R₇ est choisi parmi un atome d'hydrogène, -OR₆, un groupe alkyle en C₁-C₂₂, alkyle substitué en C₁-C₂₂, cycloalkyle en C₃-C₈, cycloalkyle substitué en C₃-C₈ ;
R₈ est choisi parmi un atome d'hydrogène, un groupe alkyle en C₁-C₂₂, alkyle substitué en C₁-C₂₂, cycloalkyle en C₃-C₈, cycloalkyle substitué en C₃-C₈, hétéroaryle, aryle, -Y₁-R₁ ou un groupe succinimido répondant à la formule : 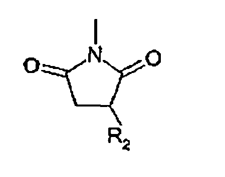
R₉ et R₁₀ sont choisis indépendamment parmi un atome d'hydrogène, un groupe alkyle en C₁-C₂₂, alkyle substitué en C₁-C₂₂, cycloalkyle en C₃-C₈ et cycloalkyle substitué en C₃-C₈ ; R₉ et R₁₀ peuvent collectivement représenter un groupe divalent formant un cycle avec l'atome d'azote auquel ils sont liés ;
L₁ est un groupe de liaison divalent choisi parmi un groupe alkylène en C₂-C₂₂ ; -(CH₂CH₂-Y₁)₁₋₃-CH₂CH₂- ; cycloalkylène en C₃-C₈ ; arylène ou -CO- L₂-OC- ;
L₂ est choisi parmi un groupe alkylène en C₁-C₂₂, arylène, -(CH₂CH₂-Y₁)₁₋₃-CH₂CH₂- et cycloalkylène en C₃-C₈ ;
Y₁ est choisi parmi -OC(O)-, -NHC(O)-, -O-, -S-, -N(R₁)- ;
Y₂ est choisi parmi -O- ou -N(R₁)- ;
Z est un nombre entier positif valant jusqu'à 20 ;
m₁ vaut de 0 à 10 ;
n₁ est un nombre entier positif de 2 à 12 ;
R₁₁ et R₁₂ sont choisis indépendamment parmi un atome d'hydrogène, un groupe alkyle en C₁-C₂₂, alkyle substitué en C₁-C₂₂, cycloalkyle en C₃-C₈, cycloalkyle substitué en C₃-C₈, hétéroaryle et aryle, et un radical A où le radical A est choisi parmi les structures suivantes : 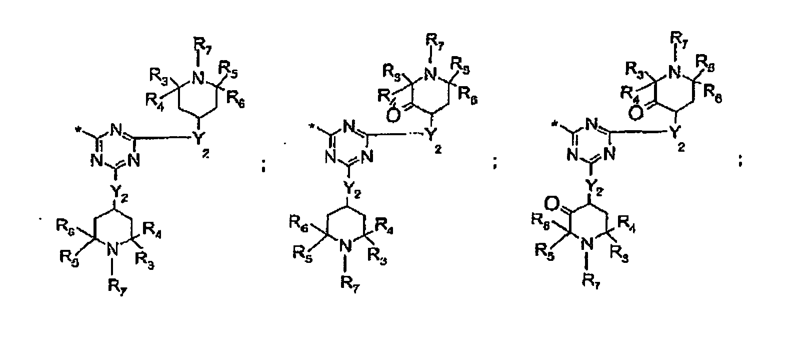 des structures de radical A dans lesquelles * désigne la position de fixation ;
où l'un au moins de R₁₁ et R₁₂ est un radical A ; et où le sel d'addition des composants (A) et (B) est formé ;
et dans lequel le au moins un solvant hydrocarboné aromatique (II) est choisi parmi le toluène, le xylène et le benzène ;
(3) les composants (A) et (B) sont ensuite mélangés pour former une solution homogène du sel d'addition ; et
(4) la solution homogène de l'étape (3) est par la suite mélangée avec un solvant hydrocarboné non polaire aliphatique (III) de sorte que le sel d'addition des composants (A) et (B) précipite.

23. Procédé selon la revendication 22, dans lequel le rapport du nombre d'atomes de phosphore dans l'acide phosphoreux au nombre d'atomes d'azote basiques dans le stabilisant à la lumière de type amine encombrée est de 0,25 à 2.

24. Procédé selon la revendication 23, dans lequel le rapport du nombre d'atomes de phosphore dans l'acide phosphoreux au nombre d'atomes d'azote basiques dans le stabilisant à la lumière de type amine encombrée est de 0,5 à 1,1.

25. Procédé selon la revendication 22, lesdits solvants polaires (I) sont choisis parmi le méthanol et l'isopropanol.

26. Procédé selon la revendication 22, dans lequel le composé acide contenant du phosphore est présent dans le solvant polaire (I) dans une quantité de 0,1 à 50 pour cent en poids.

27. Procédé selon la revendication 26, dans lequel le composé acide contenant du phosphore est présent dans le solvant polaire (I) dans une quantité de 25 à 35 pour cent en poids.

28. Procédé selon la revendication 22, dans lequel le solvant hydrocarboné aromatique (II) est choisi dans le groupe constitué par le toluène, le xylène et le benzène.

29. Procédé selon la revendication 22, dans lequel le solvant hydrocarboné aliphatique non polaire (III) est choisi dans le groupe constitué par le pentane, l'heptane, l'hexane, l'octane, l'iso-octane, le cyclobutane, le cyclopentane, le cyclohexane et le 1,3-diméthylcyclohexane.

30. Procédé selon la revendication 29, dans lequel le solvant aliphatique non polaire (III) est choisi parmi l'heptane, l'hexane et l'octane.

31. Procédé selon la revendication 30, dans lequel le solvant aliphatique non polaire (III) est l'heptane.

32. Procédé selon la revendication 22, dans lequel le stabilisant à la lumière de type amine encombrée est présent dans le solvant hydrocarboné aromatique (II) dans une quantité de 5 à 45 pour cent en poids.

33. Procédé selon la revendication 32, dans lequel le stabilisant à la lumière de type amine encombrée est présent dans le solvant hydrocarboné aromatique (II) dans une quantité de 10 à 30 pour cent en poids.

34. Procédé selon la revendication 22, dans lequel le solvant hydrocarboné aromatique (II) est combiné avec le stabilisant à la lumière de type amine encombrée dans un rapport en poids du stabilisant à la lumière de type amine encombrée au solvant hydrocarboné aromatique de 1:20 à 1:2,5.

35. Procédé selon la revendication 22, dans lequel le rapport en poids du ou des solvants polaires (I) au ou aux solvants hydrocarbonés aromatiques (II) est de 0,075 à 1.

36. Procédé selon la revendication 22, dans lequel le pourcentage en poids total du sel formé est de 5 à 30 pour cent en poids, par rapport au poids total combiné du
ou des solvants polaires (I), du ou des solvants hydrocarbonés aromatiques (II) et du solvant hydrocarboné aliphatique non polaire (III).

37. Procédé selon la revendication 22, dans lequel le ou les solvants aliphatiques non polaires (III) sont ajoutés de telle sorte que le pourcentage en poids total du sel dans le mélange de solvants soit inférieur à 15 pour cent en poids.

38. Procédé selon la revendication 22, comprenant en outre l'étape d'isolement du précipité du sel d'addition.

39. Procédé selon la revendication 22, dans lequel la température de la réaction est de 15 °C à 65 °C.

40. Procédé de préparation d'un sel d'addition d'au moins un stabilisant à la lumière de type amine encombrée et d'acide phosphoreux comprenant les étapes suivantes :
(1) l'acide phosphoreux est dissous dans au moins un solvant polaire (I) choisi parmi le méthanol et l'isopropanol ; et
(2) au moins un stabilisant à la lumière de type amine encombrée est dissous dans au moins un solvant hydrocarboné aromatique (II), où le stabilisant à la lumière de type amine encombrée répond à la formule : 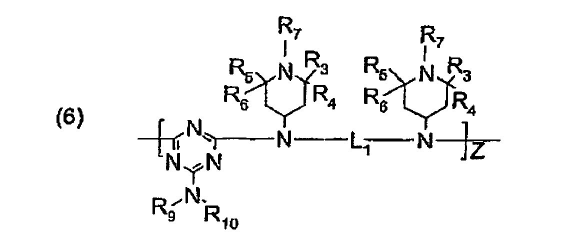 dans laquelle
R₃ = R₄ = R₅ = R₆ = R₇ = méthyle, (R₃)(R₄)N- représente collectivement un groupe morpholino, L₁ est un groupe alkylène en C₁-C₆ et Z vaut de 1 à 6 ;
dans lequel le au moins un solvant hydrocarboné aromatique (II) est choisi parmi le toluène, le xylène et le benzène ;
(3) les composants (A) et (B) sont ensuite mélangés pour former une solution homogène du sel d'addition ; et
(4) la solution homogène de l'étape (3) est par la suite mélangée de l'heptane ;
dans lequel le sel d'addition des composants (A) et (B) précipite.

41. Procédé de préparation d'un sel d'addition d'au moins un stabilisant à la lumière de type amine encombrée et d'au moins un composé acide contenant du phosphore comprenant l'étape de mélange, de broyage et/ou de pulvérisation et, par la suite, d'extrusion en fusion des éléments suivants :
(A) au moins un composé acide contenant du phosphore choisi parmi les composés répondant aux formules : 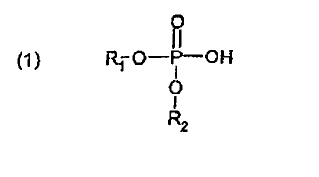 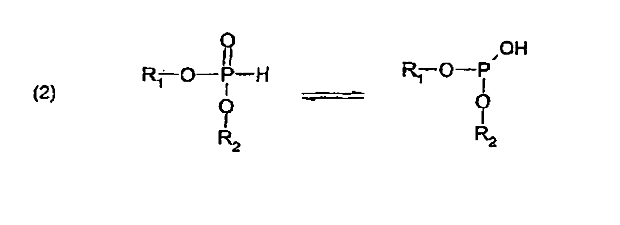 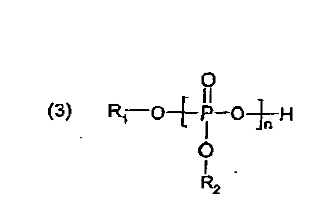 dans lesquelles
R₁ et R₂ sont choisis indépendamment parmi un atome d'hydrogène, un groupe alkyle en C₁-C₂₂, alkyle substitué en C₁-C₂₂, cycloalkyle en C₃-C₈, cycloalkyle substitué en C₃-C₈, hétéroaryle et aryle ;
n vaut 2 à 500 ; et
(B) au moins un stabilisant à la lumière de type amine encombrée choisi parmi les composés répondant aux formules : 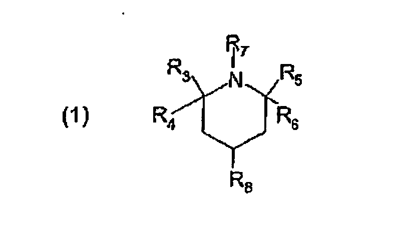 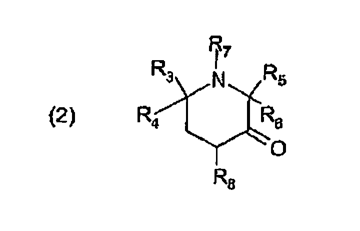 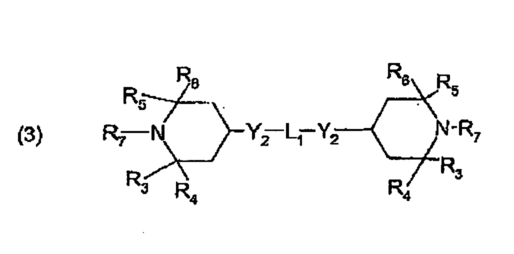 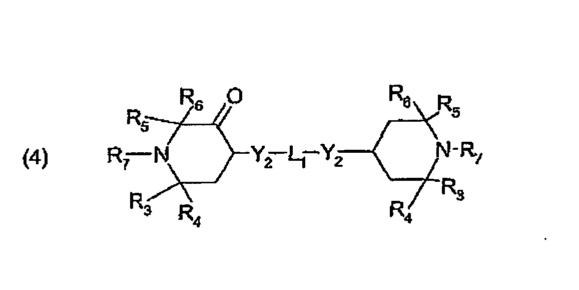 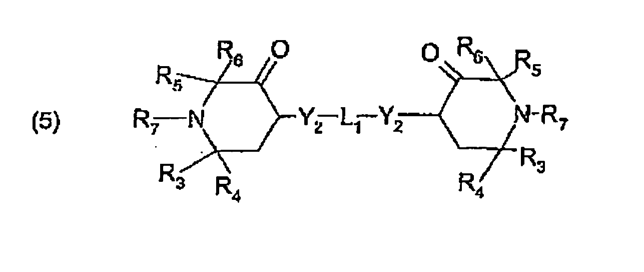 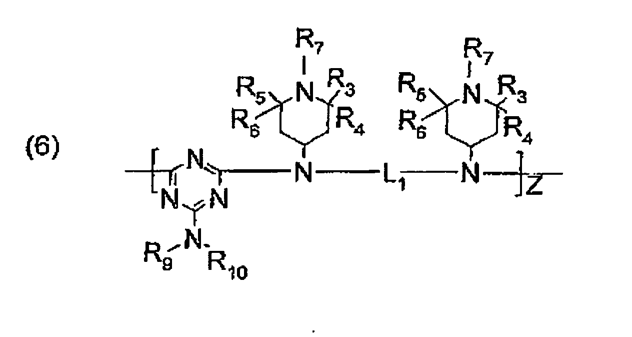 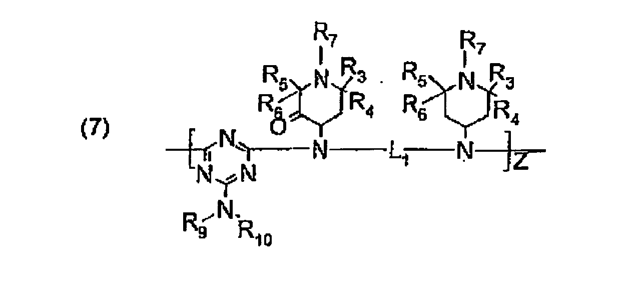 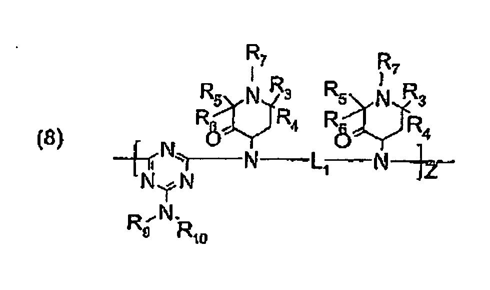 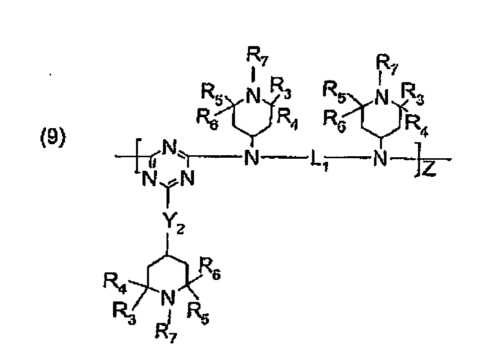 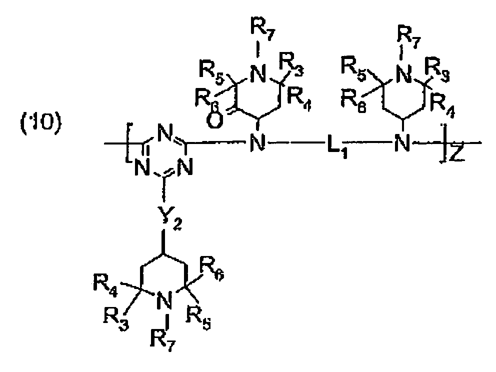 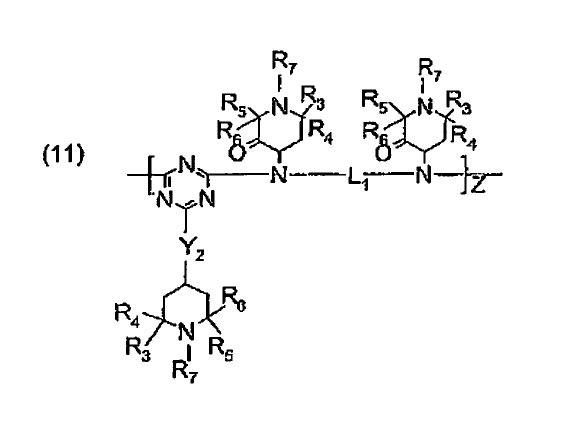 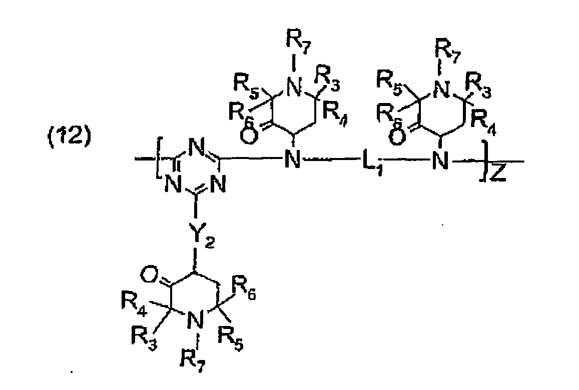 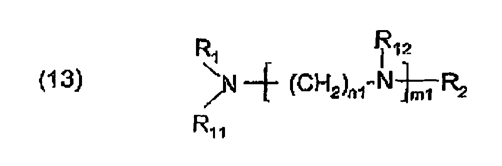 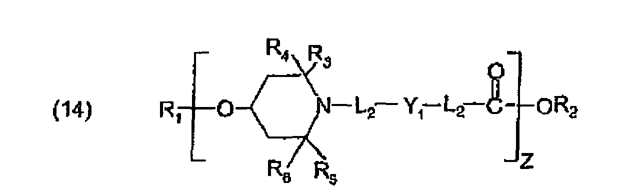 dans lesquelles
R₃, R₄, R₅ et R₆ sont choisis indépendamment parmi un atome d'hydrogène, un groupe alkyle en C₁-C₂₂, alkyle substitué en C₁-C₂₂, cycloalkyle en C₃-C₈, cycloalkyle substitué en C₃-C₈, hétéroaryle et aryle ;
R₇ est choisi parmi un atome d'hydrogène, -OR₆, un groupe alkyle en C₁-C₂₂, alkyle substitué en C₁-C₂₂, cycloalkyle en C₃-C₈, cycloalkyle substitué en C₃-C₈ ;
R₈ est choisi parmi un atome d'hydrogène, un groupe alkyle en C₁-C₂₂, alkyle substitué en C₁-C₂₂, cycloalkyle en C₃-C₈, cycloalkyle substitué en C₃-C₈, hétéroaryle, aryle, -Y₁-R₁ ou un groupe succinimido répondant à la formule : 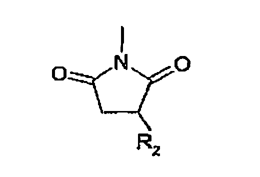
R₉ et R₁₀ sont choisis indépendamment parmi un atome d'hydrogène, un groupe alkyle en C₁-C₂₂, alkyle substitué en C₁-C₂₂, cycloalkyle en C₃-C₈ et cycloalkyle substitué en C₃-C₈ ; R₉ et R₁₀ peuvent collectivement représenter un groupe divalent formant un cycle avec l'atome d'azote auquel ils sont liés ;
L₁ est un groupe de liaison divalent choisi parmi un groupe alkylène en C₂-C₂₂ ; -(CH₂CH₂-Y₁)₁₋₃-CH₂CH₂- ; cycloalkylène en C₃-C₈ ; arylène ou -CO- L₂-OC- ;
L₂ est choisi parmi un groupe alkylène en C₁-C₂₂, arylène, -(CH₂CH₂-Y₁)₁₋₃-CH₂CH₂- et cycloalkylène en C₃-C₈ ;
Y₁ est choisi parmi -OC(O)-, -NHC(O)-, -O-, -S-, -N(R₁)- ;
Y₂ est choisi parmi -O- ou -N(R₁)- ;
Z est un nombre entier positif valant jusqu'à 20 ;
m₁ vaut de 0 à 10 ;
n₁ est un nombre entier positif de 2 à 12 ;
R₁₁ et R₁₂ sont choisis indépendamment parmi un atome d'hydrogène, un groupe alkyle en C₁-C₂₂, alkyle substitué en C₁-C₂₂, cycloalkyle en C₃-C₈, cycloalkyle substitué en C₃-C₈, hétéroaryle et aryle, et un radical A où le radical A est choisi parmi les structures suivantes : 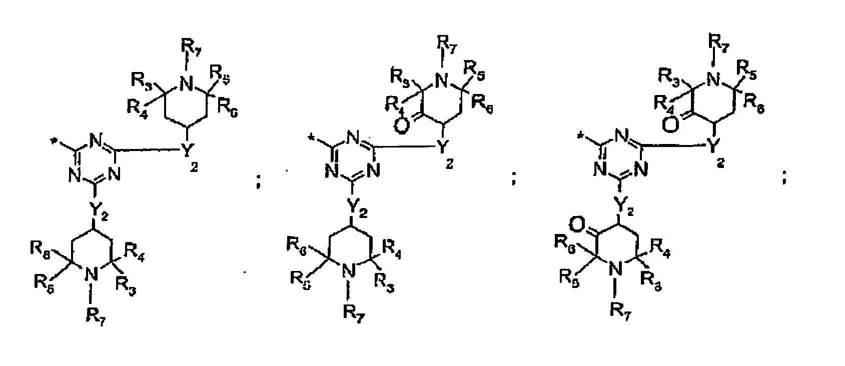 des structures de radical A dans lesquelles * désigne la position de fixation
où l'un au moins de R₁₁ et R₁₂ est aussi un radical A ; et où le rapport du nombre d'atomes de phosphore dans le composé acide contenant du phosphore au nombre d'atomes d'azote basiques dans le HALS est de 0,5 à 1,1 ;
(C) un polymère choisi parmi les polyesters et les polycarbonates ; et
où le sel d'addition des composants (A) et (B) est formé.

42. Procédé selon la revendication 41, dans lequel :
(A) le composé acide contenant du phosphore est l'acide phosphoreux ; et
(B) le stabilisant à la lumière de type amine encombrée répond à la formule : 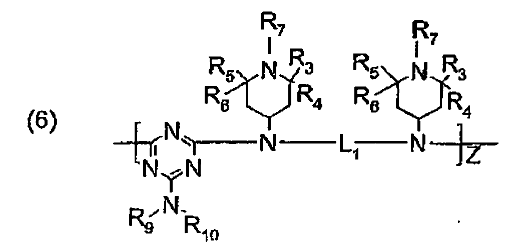 dans laquelle R₃ = R₄ = R₅ = R₆ = R₇ = méthyle, (R₃)(R₄)N- représente collectivement un groupe morpholino, L₁ est un groupe alkylène en C₁-C₆ et Z vaut de 1 à 6 ; et
(C) le polymère est un polyester.

43. Procédé selon la revendication 41, dans lequel le rapport du nombre d'atomes de phosphore dans l'acide phosphoreux au nombre d'atomes d'azote basiques dans le stabilisant à la lumière de type amine encombrée est de 0,25 à 2.

44. Procédé selon la revendication 41, dans lequel le rapport du nombre d'atomes de phosphore dans l'acide phosphoreux au nombre d'atomes d'azote basiques dans le stabilisant à la lumière de type amine encombrée est de 0,5 à 1,1.

45. Procédé de préparation d'un sel d'addition d'au moins un stabilisant à la lumière de type amine encombrée et d'au moins un composé acide contenant du phosphore comprenant les étapes suivantes :
(1) le composant (A) est dissous dans un solvant polaire (I) et le composant (B) est dissous dans un solvant hydrocarboné aliphatique non polaire (III) qui n'est pas miscible avec le solvant polaire (I) ;
(2) les composants (A) et (B) sont mélangés pour former un mélange biphasique dans lequel le sel d'addition est dans la phase dans le solvant polaire ;
(3) le mélange biphasique est séparé dans les deux solutions de l'étape 2 ;
(4) la solution polaire de l'étape 3 est chargée dans un récipient contenant le solvant non polaire de l'étape (3) et le solvant polaire (I) en tant que solvant polaire de l'étape 3 est vaporisé dans le récipient pour produire une suspension du sel dans le solvant hydrocarboné aliphatique non polaire (III) ;
dans lequel le composant (A) est choisi parmi les composés répondant aux formules : 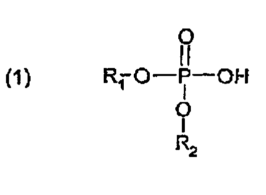 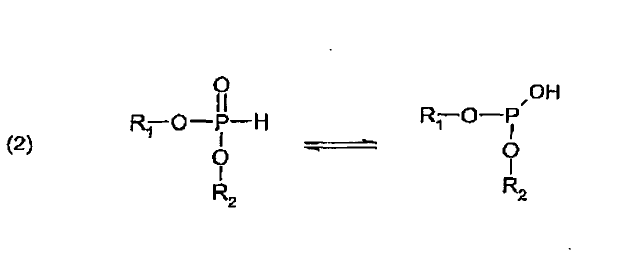 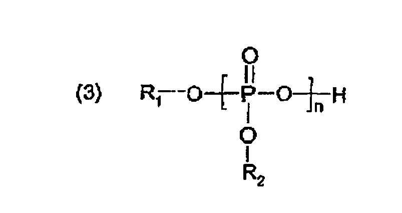 dans lesquelles
R₁ et R₂ sont choisis indépendamment parmi un atome d'hydrogène, un groupe alkyle en C₁-C₂₂, alkyle substitué en C₁-C₂₂, cycloalkyle en C₃-C₈, cycloalkyle substitué en C₃-C₈, hétéroaryle et aryle ;
n vaut 2 à 500 ; et
dans lequel le composant (B) est choisi parmi les composés répondant aux formules : 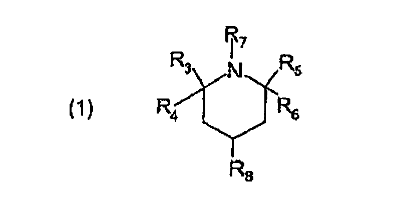 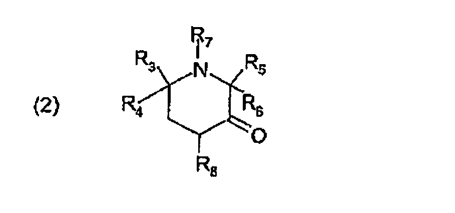 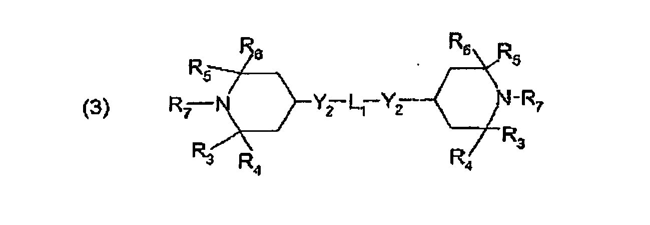 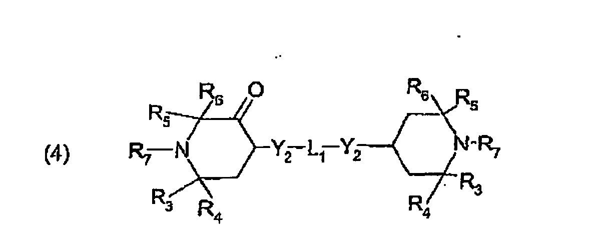 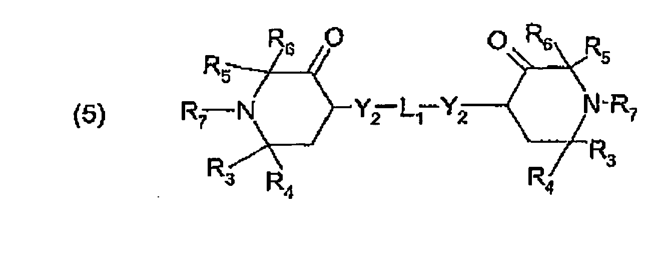 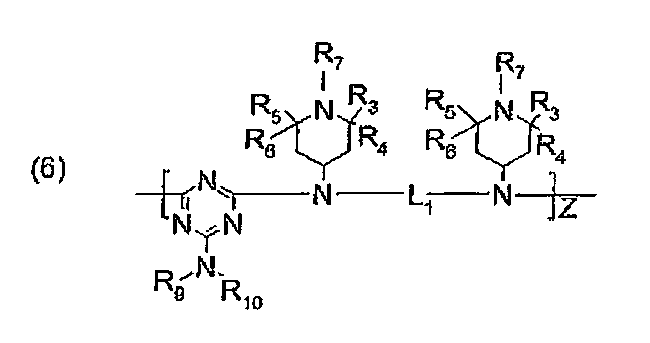 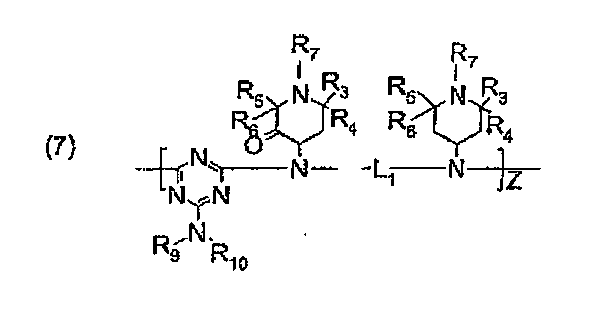 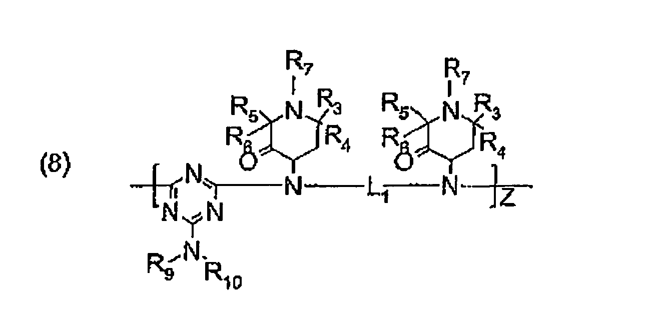 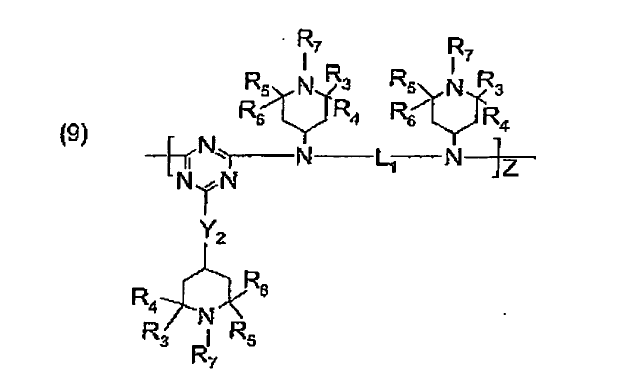 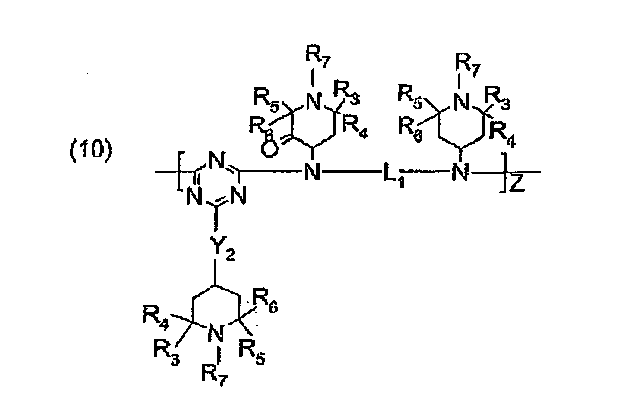 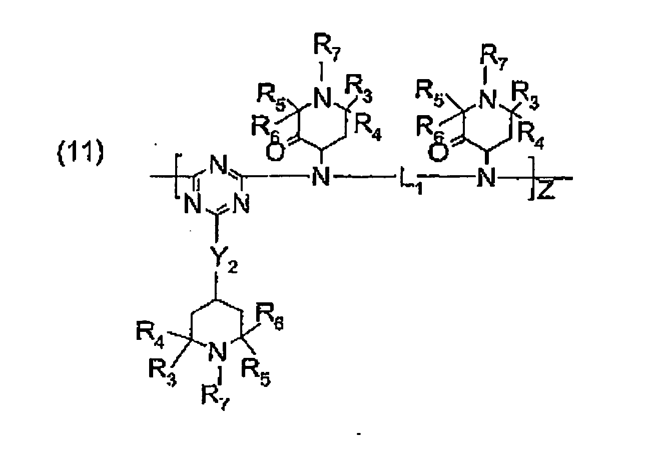 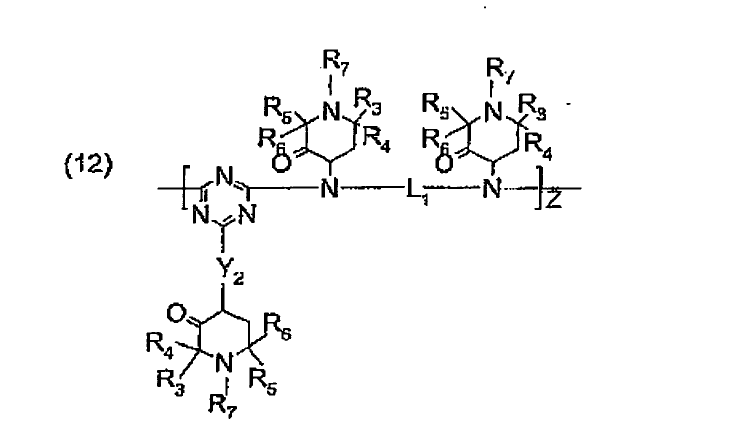 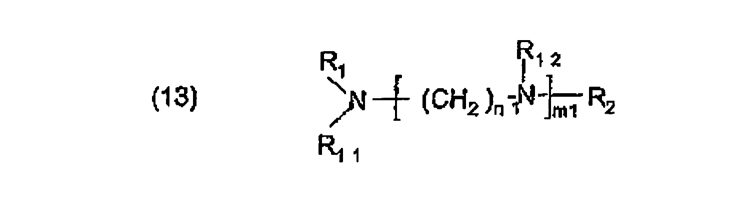 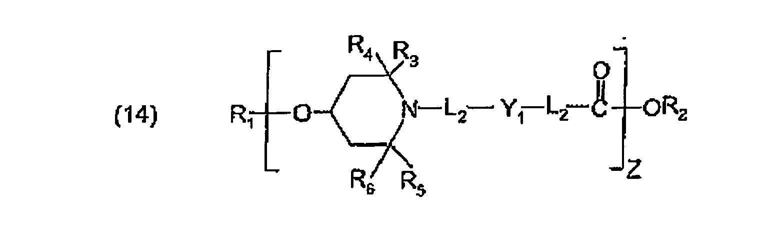 dans lesquelles
R₁ et R₂ sont choisis indépendamment parmi un atome d'hydrogène, un groupe alkyle en C₁-C₂₂, alkyle substitué en C₁-C₂₂, cycloalkyle en C₃-C₈, cycloalkyle substitué en C₃-C₈, hétéroaryle et aryle ;
R₃, R₄, R₅ et R₆ sont choisis indépendamment parmi un atome d'hydrogène, un groupe alkyle en C₁-C₂₂, alkyle substitué en C₁-C₂₂, cycloalkyle en C₃-C₈, cycloalkyle substitué en C₃-C₈, hétéroaryle et aryle ;
R₇ est choisi parmi un atome d'hydrogène, -OR₆, un groupe alkyle en C₁-C₂₂, alkyle substitué en C₁-C₂₂, cycloalkyle en C₃-C₈, cycloalkyle substitué en C₃-C₈ ;
R₈ est choisi parmi un atome d'hydrogène, un groupe alkyle en C₁-C₂₂, alkyle substitué en C₁-C₂₂, cycloalkyle en C₃-C₈, cycloalkyle substitué en C₃-C₈, hétéroaryle, aryle, -Y₁-R₁ ou un groupe succinimido répondant à la formule : 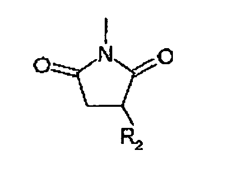
R₉ et R₁₀ sont choisis indépendamment parmi un atome d'hydrogène, un groupe alkyle en C₁-C₂₂, alkyle substitué en C₁-C₂₂, cycloalkyle en C₃-C₈ et cycloalkyle substitué en C₃-C₈ ; R₉ et R₁₀ peuvent collectivement représenter un groupe divalent formant un cycle avec l'atome d'azote auquel ils sont liés ;
L₁ est un groupe de liaison divalent choisi parmi un groupe alkylène en C₂-C₂₂ ; -(CH₂CH₂-Y₁)₁₋₃-CH₂CH₂- ; cycloalkylène en C₃-C₈ ; arylène ou -CO- L₂-OC- ;
L₂ est choisi parmi un groupe alkylène en C₁-C₂₂, arylène, -(CH₂CH₂-Y₁)₁₋₃-CH₂CH₂- et cycloalkylène en C₃-C₈ ;
Y₁ est choisi parmi -OC(O)-, -NHC(O)-, -O-, -S-, -N(R₁)- ;
Y₂ est choisi parmi -O- ou -N(R₁)- ;
Z est un nombre entier positif valant jusqu'à 20 ;
m₁ vaut de 0 à 10 ;
n₁ est un nombre entier positif de 2 à 12 ;
R₁₁ et R₁₂ sont choisis indépendamment parmi un atome d'hydrogène, un groupe alkyle en C₁-C₂₂, alkyle substitué en C₁-C₂₂, cycloalkyle en C₃-C₈, cycloalkyle substitué en C₃-C₈, hétéroaryle et aryle, et un radical A où l'un au moins de R₁₁ et R₁₂ est aussi un radical A est choisi parmi les structures suivantes : 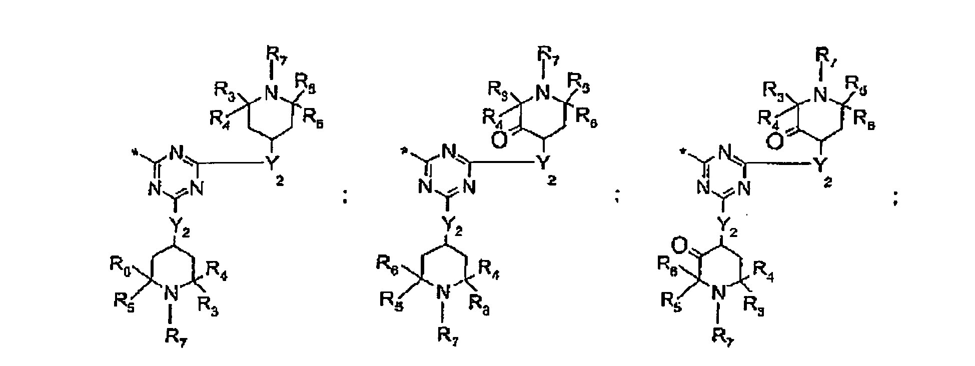
des structures de radical A dans lesquelles * désigne la position de fixation ;
où le sel d'addition des composants (A) et (B) est formé.

46. Procédé selon la revendication 45, dans lequel le composé acide contenant du phosphore est l'acide phosphoreux et le rapport du nombre d'atomes de phosphore dans l'acide phosphoreux au nombre d'atomes d'azote basiques dans le stabilisant à la lumière de type amine encombrée est de 0,25 à 2.

47. Procédé selon la revendication 46, dans lequel le rapport du nombre d'atomes de phosphore dans le composé acide contenant du phosphore au nombre d'atomes d'azote basiques dans le stabilisant à la lumière de type amine encombrée est de 0,5 à 1,1.

48. Procédé selon la revendication 45, dans lequel :
(A) le composé acide contenant du phosphore est l'acide phosphoreux qui est dissous dans au moins un solvant polaire (I) choisi parmi le méthanol et l'isopropanol ; et
(B) le stabilisant à la lumière de type amine encombrée est dissous dans de l'heptane et répond à la formule : 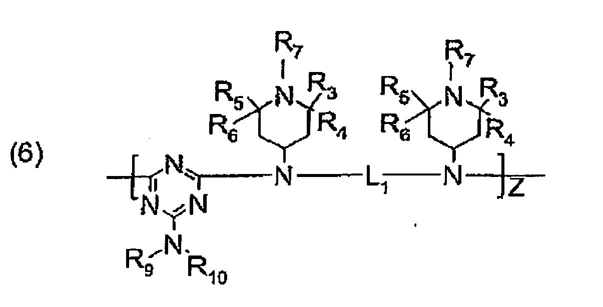
dans laquelle R₃ = R₄ = R₅ = R₆ = R₇ = méthyle, (R₃)(R₄)N- représente collectivement un groupe morpholino, L₁ est un groupe alkylène en C₁-C₆ et Z vaut de 1 à 6.

49. Procédé selon la revendication 48, dans lequel le solvant polaire (I) est le méthanol.

50. Procédé selon la revendication 45, dans lequel le composé acide contenant du phosphore est présent dans le solvant polaire (I) dans une quantité de 10 à 50 pour cent en poids.

51. Procédé selon la revendication 50, dans lequel le composé acide contenant du phosphore est présent dans le solvant polaire (I) dans une quantité de 25 à 35 pour cent en poids.

52. Procédé selon la revendication 45, dans lequel le solvant hydrocarboné aliphatique non polaire (III) est choisi dans le groupe constitué par le pentane, l'heptane, l'hexane, l'octane, l'iso-octane, le tétrachlorure de carbone, le chloroforme, le chlorure de méthylène, le cyclobutane, le cyclopentane, le cyclohexane et le 1,3-diméthylcyclohexane.

53. Procédé selon la revendication 52, dans lequel le solvant aliphatique non polaire (III) est choisi parmi l'heptane, l'octane et l'hexane.

54. Procédé selon la revendication 53, dans lequel le solvant hydorcarboné aliphatique non polaire (III) est l'heptane.

55. Procédé selon la revendication 53, dans lequel le pourcentage en poids total du sel dans le mélange de solvants total de l'étape (3) est compris entre 5 et 30 pour cent en poids.

56. Procédé de préparation d'un sel d'addition d'au moins un stabilisant à la lumière de type amine encombrée et d'au moins un composé acide contenant du phosphore comprenant les étapes suivantes :
(1) au moins un composé acide contenant du phosphore (composant A) et au moins un stabilisant à la lumière de type amine encombrée (composant B) sont mélangés dans un solvant polaire jusqu'à ce qu'une solution homogène soit obtenue ;
(2) le sel d'addition d'acide est isolé par le procédé de lyophilisation;
dans lequel le composant (A) est choisi parmi les composés répondant aux formules : 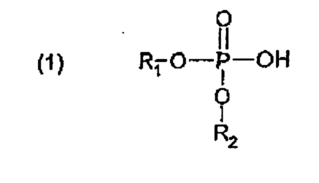 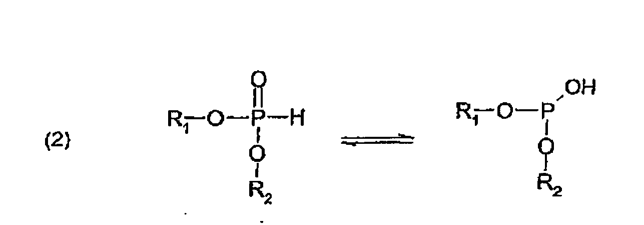 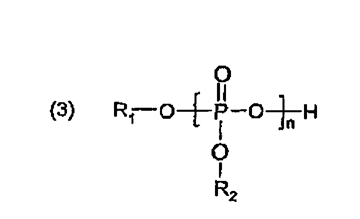 dans lesquelles
R₁ et R₂ sont choisis indépendamment parmi un atome d'hydrogène, un groupe alkyle en C₁-C₂₂, alkyle substitué en C₁-C₂₂, cycloalkyle en C₃-C₈, cycloalkyle substitué en C₃-C₈, hétéroaryle et aryle ;
n vaut 2 à 500 ; et
dans lequel le composant (B) est choisi parmi les composés répondant aux formules : 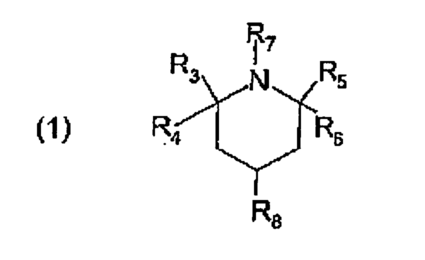 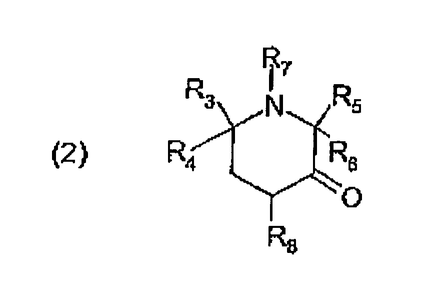 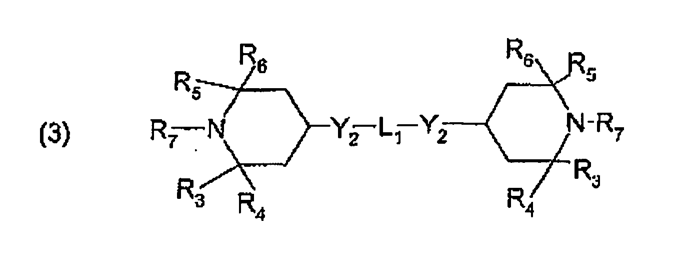 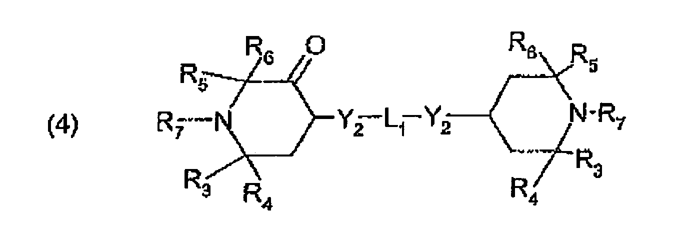 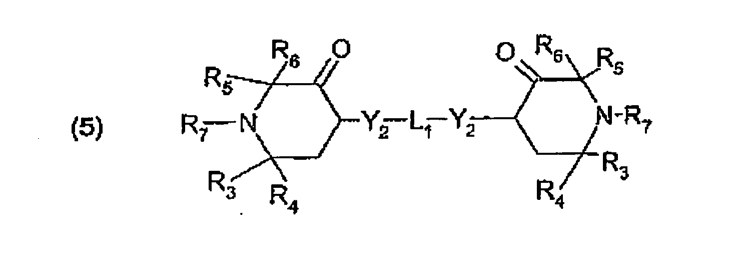 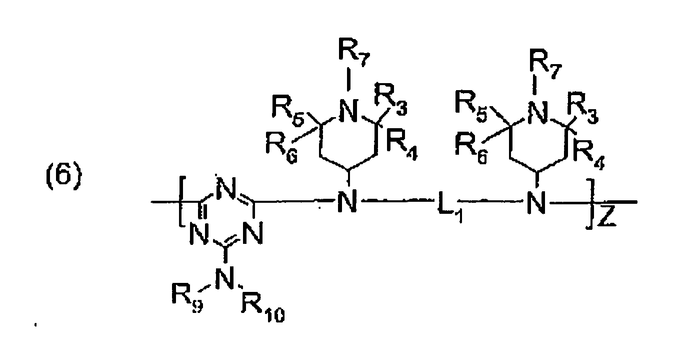 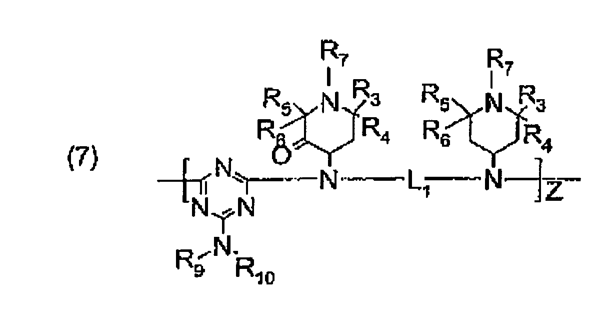 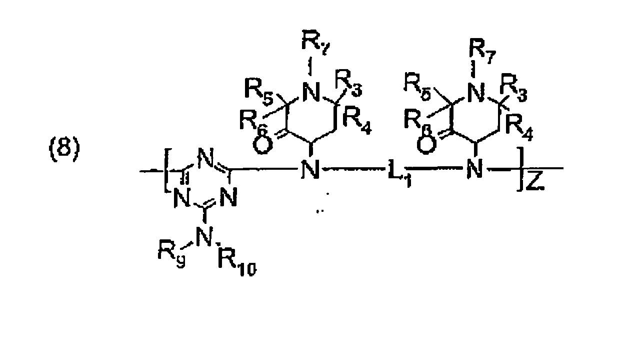 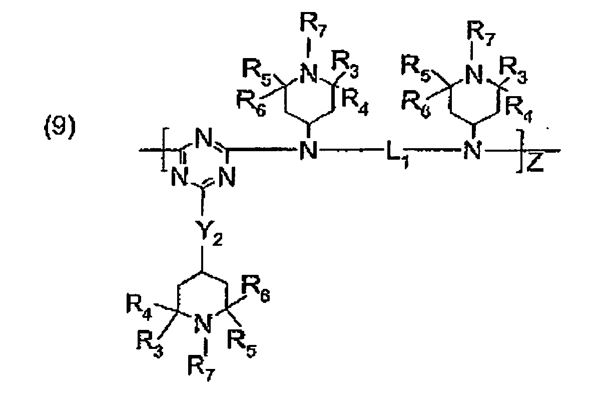 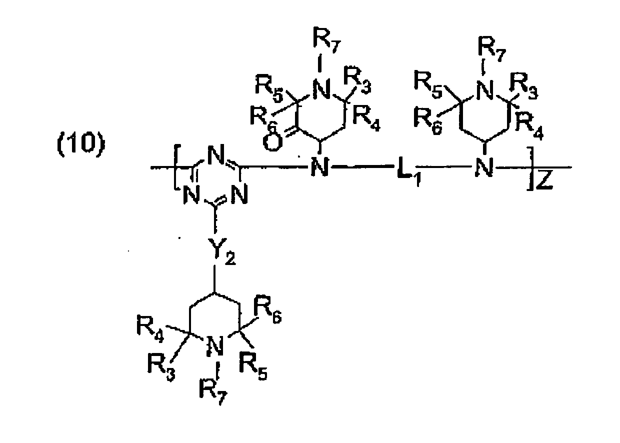 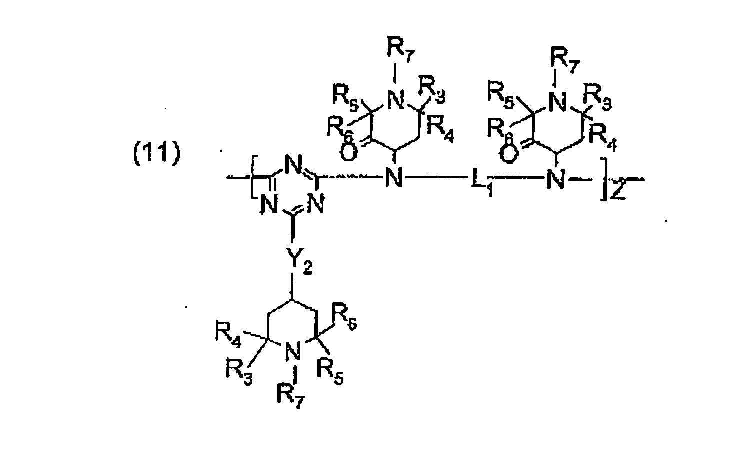 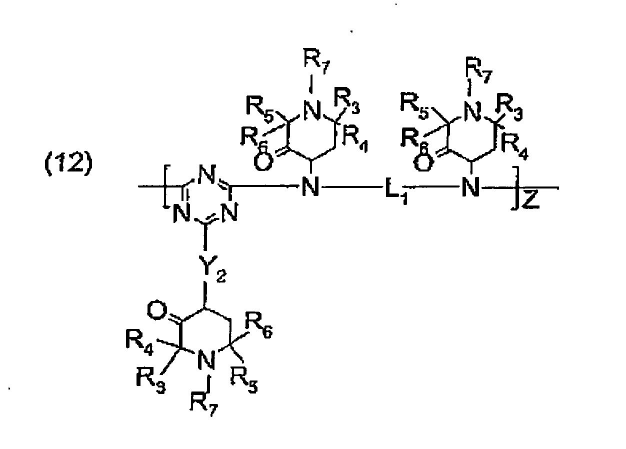 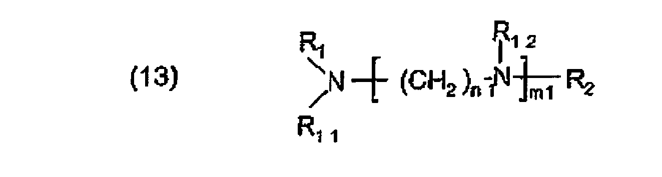 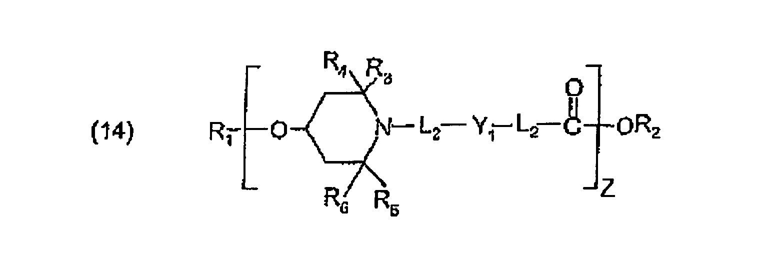
dans lesquelles
R₁ et R₂ sont choisis indépendamment parmi un atome d'hydrogène, un groupe alkyle en C₁-C₂₂, alkyle substitué en C₁-C₂₂, cycloalkyle en C₃-C₈, cycloalkyle substitué en C₃-C₈, hétéroaryle et aryle ;
R₃, R₄, R₅ et R₆ sont choisis indépendamment parmi un atome d'hydrogène, un groupe alkyle en C₁-C₂₂, alkyle substitué en C₁-C₂₂, cycloalkyle en C₃-C₈, cycloalkyle substitué en C₃-C₈, hétéroaryle et aryle ;
R₇ est choisi parmi un atome d'hydrogène, -OR₆, un groupe alkyle en C₁-C₂₂, alkyle substitué en C₁-C₂₂, cycloalkyle en C₃-C₈, cycloalkyle substitué en C₃-C₈ ;
R₈ est choisi parmi un atome d'hydrogène, un groupe alkyle en C₁-C₂₂, alkyle substitué en C₁-C₂₂, cycloalkyle en C₃-C₈, cycloalkyle substitué en C₃-C₈, hétéroaryle, aryle, -Y₁-R₁ ou un groupe succinimido répondant à la formule : 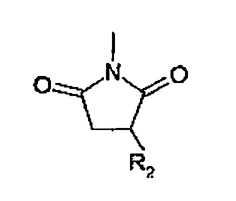
R₉ et R₁₀ sont choisis indépendamment parmi un atome d'hydrogène, un groupe alkyle en C₁-C₂₂, alkyle substitué en C₁-C₂₂, cycloalkyle en C₃-C₈ et cycloalkyle substitué en C₃-C₈ ; R₉ et R₁₀ peuvent collectivement représenter un groupe divalent formant un cycle avec l'atome d'azote auquel ils sont liés ;
L₁ est un groupe de liaison divalent choisi parmi un groupe alkylène en C₂-C₂₂ ; -(CH₂CH₂-Y₁)₁₋₃-CH₂CH₂- ; cycloalkylène en C₃-C₈ ; arylène ou -CO- L₂-OC- ;
L₂ est choisi parmi un groupe alkylène en C₁-C₂₂, arylène, -(CH₂CH₂-Y₁)₁₋₃-CH₂CH₂- et cycloalkylène en C₃-C₈ ;
Y₁ est choisi parmi -OC(O)-, -NHC(O)-, -O-, -S-, -N(R₁)- ;
Y₂ est choisi parmi -O- ou -N(R₁)- ;
Z est un nombre entier positif valant jusqu'à 20 ;
m₁ vaut de 0 à 10 ;
n₁ est un nombre entier positif de 2 à 12 ;
R₁₁ et R₁₂ sont choisis indépendamment parmi un atome d'hydrogène, un groupe alkyle en C₁-C₂₂, alkyle substitué en C₁-C₂₂, cycloalkyle en C₃-C₈, cycloalkyle substitué en C₃-C₈, hétéroaryle et aryle, et un radical A où l'un au moins parmi R₁₁ et R₁₂ est un radical A choisi parmi les structures suivantes : 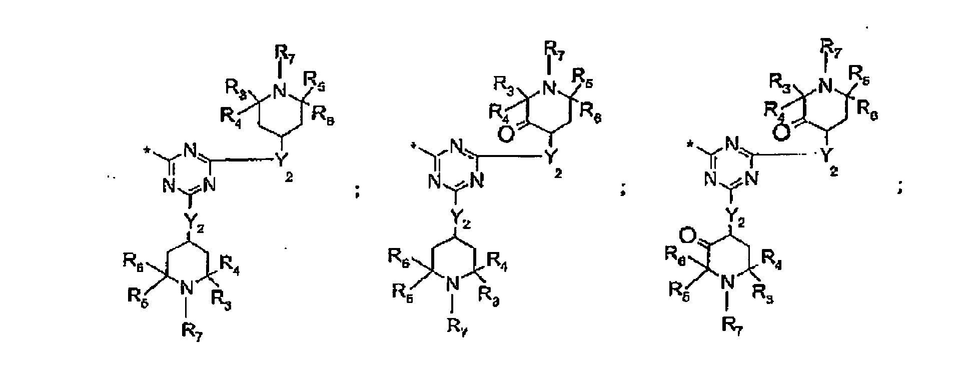 des structures de radical A dans lesquelles * désigne la position de fixation ;
où le sel d'addition des composants (A) et (B) est formé.

57. Procédé selon la revendication 56, dans lequel le composé acide contenant du phosphore est l'acide phosphoreux.

58. Procédé selon la revendication 57, dans lequel le stabilisant à la lumière de type amine encombrée répond à la formule : 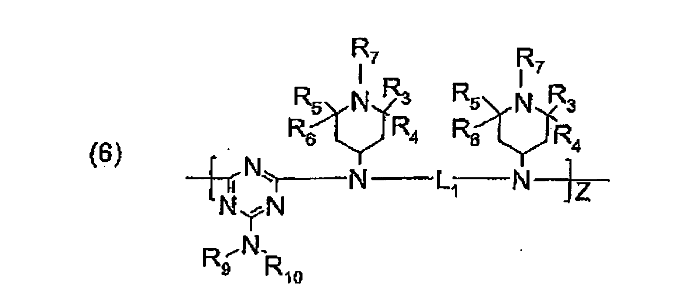 dans laquelle R₃ = R₄ = R₅ = R₆ = R₇ = méthyle, (R₃)(R₄)N- représente collectivement un groupe morpholino, L₁ est un groupe alkylène en C₁-C₆ et Z vaut de 1 à 6.

59. Procédé selon la revendication 58, dans lequel le solvant polaire est le méthanol ou l'eau.

60. Procédé selon la revendication 59, dans lequel le stabilisant à la lumière de type amine encombrée et l'acide phosphoreux constituent de 1 à 30 pour cent en poids de la solution.

61. Procédé selon la revendication 1, dans lequel le au moins un stabilisant à la lumière de type amine encombrée est la N,N'-1,2-éthane-diyl-bis[[[4,6-bis(butyl-1,2,2,6,6-pentaméthyl-4-pipéridinyl)amino]-1,3,5-triazine-2-yl]amino]-3,1-propanediyl]]bis[N,N"-dibutyl-N,N"-bis(butyl-1,2,2,6,6-pentaméthyl-4-pipéridinyl)-1,3,5-triazine-2,4,6-triamine.
